# EUROPEAN PATENT APPLICATION

(11) **EP 4 545 492 A1**
(43) Date of publication of application: **30.04.2025**
(21) Application number: 23827106.8
(22) Date of filing: 15.06.2023
(51) Int. Cl.: C02F 1/42, B01J 39/07, B01J 41/07, B01J 49/08, B01J 49/53, B01J 49/57, B01J 49/75, B01J 49/85, C02F 1/461

(54) **WATER SOFTENER**

(30) Priority: 24.06.2022 JP 2022101554; 28.07.2022 JP 2022120071; 03.08.2022 JP 2022123692
(71) Applicant: Panasonic Intellectual Property Management Co., Ltd., Kadoma-shi, Osaka 571-0057 (JP)
(72) Inventor: MATSUMOTO Yui, Kadoma-shi, Osaka 571-0057 (JP); ISHIKAWA Hiroki, Kadoma-shi, Osaka 571-0057 (JP)
(74) Representative: Grünecker Patent- und Rechtsanwälte PartG mbB
(86) International application number: PCT/JP2023/022243
(87) International publication number: WO 2023/248920

(57) **Abstract**

Provided is a water softening apparatus including: soft water tank (3,5) that softens raw water containing a hardness component with weakly acidic cation exchange resin (33) to generate acidic soft water; neutralization tank (4,6) that neutralizes a pH of the acidic soft water passed through soft water tank (3,5) with weakly basic anion exchange resin (34) to generate neutralized soft water; and controller (15) that controls a regeneration process that is a process of regenerating at least one of weakly acidic cation exchange resin (33) and weakly basic anion exchange resin (34). Controller (15) includes an adsorption amount specification unit that specifies a hardness component adsorption amount in the soft water tank (3,5) from hardness of the raw water, a water amount of the raw water passed through the soft water tank (3,5), and hardness of water after passing through the soft water tank (3,5),process and during the regeneration process, based on the hardness component adsorption amount specified by the adsorption amount specification unit, controller (15) controls the regeneration process to be continued in a case where the hardness component adsorption amount is more than or equal to a reference value and to be ended in a case where the hardness component adsorption amount is less than the reference value.

## Description

### TECHNICAL FIELD

The present disclosure relates to a water softening apparatus.

### BACKGROUND ART

In a conventional water softening apparatus, a weakly acidic cation exchange resin has a hydrogen ion at a terminal of a functional group, and softens raw water by exchanging a hardness component (for example, calcium ion or magnesium ion) in raw water with a hydrogen ion. As a method of regenerating a cation exchange resin without using salt, a method of regenerating a cation exchange resin with acidic electrolytic water generated by electrolysis is known (See, for example, PTL 1.).

Water softened by the weakly acidic cation exchange resin becomes acidic because hydrogen ions are released from the weakly acidic cation exchange resin instead of the hardness component in the soft water. In order to neutralize this, a weakly acidic cation exchange resin and a weakly basic anion exchange resin may be used in combination. As a method of regenerating a weakly basic anion exchange resin, a method using alkaline electrolytic water generated by electrolysis is known (See, for example, PTL 2.).

### Citation List

### Patent Literature

PTL 1: Unexamined Japanese Patent Publication No. 2011-30973
PTL 2: Unexamined Japanese Patent Publication No. 2010-142674

### SUMMARY OF THE INVENTION

In such a water softening apparatus, it is not possible to soften the water while regenerating the ion exchange resin, and thus it is necessary to complete the process of regenerating the ion exchange resin in a time zone such as nighttime in which the water softening process is relatively unnecessary. Therefore, it is required to shorten the time required to complete the regeneration process.

The time required to complete the regeneration process is mainly determined by an amount of the hardness component adsorbed to the ion exchange resin and electrolytic water concentrations of the acidic electrolytic water and the alkaline electrolytic water generated by electrolysis. The electrolytic water concentration is one of factors that determine durability of electrodes, and mainly depends on a current value applied to the electrodes. When a high current is applied to the electrodes to increase the electrolytic water concentration, it is possible to shorten the time required to complete the regeneration process, but this is not practical because the durability of an electrolytic tank is significantly reduced. Therefore, there is a problem that it is difficult to complete the regeneration process in a short time while suppressing the value of the current applied to the electrolytic tank, and solving this problem is the first problem.

Furthermore, in the conventional water softening apparatus, bicarbonate ions are adsorbed to the weakly basic ion exchange resin when softening raw water is performed. The adsorbed bicarbonate ions are released into alkaline electrolytic water used for regeneration when the weakly basic anion exchange resin is regenerated. Since the released bicarbonate ions consume hydroxide ions in the alkaline electrolytic water and hydrogen ions in the acidic electrolytic water, a hydroxide ion concentration in the alkaline electrolytic water and a hydrogen ion concentration in the acidic electrolytic water decrease, and there is a problem that the regeneration efficiency of the weakly basic anion exchange resin and the weakly acidic cation exchange resin decreases, and the solution of this problem has been the second problem.

The conventional water softening apparatuses are required to solve at least one of the first and second problems described above.

Therefore, the present disclosure solves at least one of the first problem and the second problem described above, and provides a water softening apparatus capable of suppressing deterioration in water softening performance.

Then, as a water softening apparatus corresponding to the first problem, the water softening apparatus according to the present disclosure includes: a soft water tank that softens raw water containing a hardness component with a weakly acidic cation exchange resin to generate acidic soft water; a neutralization tank that neutralizes a hydrogen ion concentration index (pH) of the acidic soft water passed through the soft water tank with a weakly basic anion exchange resin to generate neutralized soft water; and a controller that controls a regeneration process that is a process of regenerating at least one of the weakly acidic cation exchange resin and the weakly basic anion exchange resin. The controller includes an adsorption amount specification unit that specifies a hardness component adsorption amount in the soft water tank from hardness of the raw water, a water amount of the raw water passed through the soft water tank, and hardness of water after passing through the soft water tank, and during the regeneration process, based on the hardness component adsorption amount specified by the adsorption amount specification unit, the controller controls execution of the regeneration process to continue the regeneration process in a case where the hardness component adsorption amount is more than or equal to a reference value and to end the regeneration process in a case where the hardness component adsorption amount is less than the reference value.

Furthermore, as a water softening apparatus corresponding to the first problem, the water softening apparatus according to the present disclosure includes: a soft water tank that softens raw water containing a hardness component with a weakly acidic cation exchange resin to generate acidic soft water; a neutralization tank that neutralizes a pH of the acidic soft water passed through the soft water tank with a weakly basic anion exchange resin to generate neutralized soft water; an electrolytic tank that generates acidic electrolytic water to be used for regeneration of the weakly acidic cation exchange resin and alkaline electrolytic water to be used for regeneration of the weakly basic anion exchange resin, and a controller that controls a regeneration process that is a process of regenerating at least one of the weakly acidic cation exchange resin and the weakly basic anion exchange resin. The controller includes: an adsorption amount specification unit that specifies a hardness component adsorption amount to the soft water tank from hardness of the raw water, a water amount of the raw water passed through the soft water tank, and hardness of water after passing through the soft water tank; and a main regeneration time calculation unit that calculates, based on the hardness component adsorption amount, a main regeneration time required for the regeneration process necessary for removal of a hardness component of the hardness component adsorption amount, and determines a time taken for the regeneration process based on a comparison between a predetermined reference time and the main regeneration time.

Moreover, as a water softening apparatus corresponding to the second problem, the water softening apparatus according to the present disclosure includes: a soft water tank that softens raw water containing a hardness component with a weakly acidic cation exchange resin to generate acidic soft water; a neutralization tank that neutralizes a pH of the acidic soft water passed through the soft water tank with a weakly basic anion exchange resin to generate neutralized soft water; an electrolytic tank that generates acidic electrolytic water and alkaline electrolytic water; and a controller that controls a regeneration process that is a process of regenerating at least one of the weakly acidic cation exchange resin and the weakly basic anion exchange resin. The controller includes: a hardness storage unit that stores a hardness component concentration of raw water containing a hardness component; an adsorption amount calculation unit that calculates an ion adsorption amount to at least one of the soft water tank and the neutralization tank from a hardness component concentration of the raw water, a water amount of the raw water passed through the soft water tank, and hardness of water after passing through the soft water tank; a removal amount calculation unit that calculates an ion removal amount that can be removed from at least one of the soft water tank and the neutralization tank based on an amount of hydrogen ions in the acidic electrolytic water and an amount of hydroxide ions in the alkaline electrolytic water obtained by operating the electrolytic tank for a predetermined time; and a process management unit that performs the regeneration process based on a comparison between the ion adsorption amount and the ion removal amount.

According to the water softening apparatus of the present disclosure, it is possible to provide a water softening apparatus capable of solving at least one of the first problem and the second problem described above and suppressing deterioration in water softening performance.

### BRIEF DESCRIPTION OF THE DRAWINGS

Fig. 1 is a conceptual diagram illustrating a configuration of a water softening apparatus according to a first exemplary embodiment.
Fig. 2 is a configuration diagram illustrating a water softening flow path of the water softening apparatus according to the first exemplary embodiment.
Fig. 3 is a configuration diagram illustrating a soft water tank regeneration circulation flow path and a neutralization tank regeneration circulation flow path of the water softening apparatus according to the first exemplary embodiment.
Fig. 4 is a configuration diagram illustrating a regeneration flow path washing flow path of the water softening apparatus according to the first exemplary embodiment.
Fig. 5 is a configuration diagram illustrating an electrolytic tank washing flow path of the water softening apparatus according to the first exemplary embodiment.
Fig. 6 is a configuration diagram illustrating a capture unit washing flow path of the water softening apparatus according to the first exemplary embodiment.
Fig. 7 is a diagram illustrating a method of controlling the water softening apparatus according to the first exemplary embodiment.
Fig. 8 is a functional block diagram of the water softening apparatus according to the first exemplary embodiment.
Fig. 9 is a schematic diagram illustrating a resin regeneration rate and a reaction exchange efficiency with a lapse of a regeneration time of the water softening apparatus according to the first exemplary embodiment.
Fig. 10 is a conceptual diagram illustrating a configuration of a water softening apparatus according to a second exemplary embodiment.
Fig. 11 is a configuration diagram illustrating a water softening flow path of the water softening apparatus according to the second exemplary embodiment.
Fig. 12 is a configuration diagram illustrating a soft water tank regeneration circulation flow path and a neutralization tank regeneration circulation flow path of the water softening apparatus according to the second exemplary embodiment.
Fig. 13 is a configuration diagram illustrating a regeneration flow path washing flow path of the water softening apparatus according to the second exemplary embodiment.
Fig. 14 is a configuration diagram illustrating an electrolytic tank washing flow path of the water softening apparatus according to the second exemplary embodiment.
Fig. 15 is a configuration diagram illustrating a capture unit washing flow path of the water softening apparatus according to the second exemplary embodiment.
Fig. 16 is a functional block diagram of the water softening apparatus according to the second exemplary embodiment.
Fig. 17 is a diagram illustrating a method of controlling the water softening apparatus according to the second exemplary embodiment.
Fig. 18 is a flowchart of a regeneration time determination method of the water softening apparatus according to the second exemplary embodiment.
Fig. 19 is a conceptual diagram illustrating a configuration of a water softening apparatus according to a third exemplary embodiment.
Fig. 20 is a configuration diagram illustrating a water softening flow path of the water softening apparatus according to the third exemplary embodiment.
Fig. 21 is a configuration diagram illustrating a soft water tank regeneration circulation flow path and a neutralization tank regeneration circulation flow path of the water softening apparatus according to the third exemplary embodiment.
Fig. 22 is a functional block diagram of the water softening apparatus according to the third exemplary embodiment.
Fig. 23 is a diagram illustrating a method of controlling the water softening apparatus according to the third exemplary embodiment.
Fig. 24 is a flowchart illustrating the method of controlling the water softening apparatus according to the third exemplary embodiment.

### DESCRIPTION OF EMBODIMENT

Hereinafter, each exemplary embodiment of the present disclosure will be described with reference to the drawings. Note that the following exemplary embodiments are examples embodying the present disclosure, and do not limit the technical scope of the present disclosure. Furthermore, each drawing described in the exemplary embodiments is a schematic diagram, and a ratio of the size and the thickness of each component in each drawing does not necessarily reflect the actual dimensional ratio.

### (First exemplary embodiment)

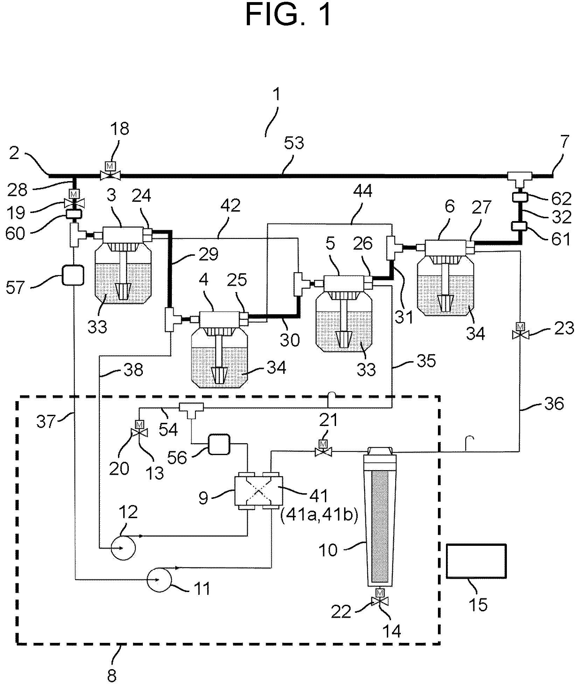

Water softening apparatus 1 according to a first exemplary embodiment of the present disclosure will be described with reference to Fig. 1. Fig. 1 is a conceptual diagram illustrating a configuration of water softening apparatus 1 according to the first exemplary embodiment of the present disclosure. Note that, Fig. 1 conceptually illustrates each element of water softening apparatus 1.

### [1. Overall configuration]

Water softening apparatus 1 is an apparatus that generates neutral soft water from raw water including a hardness component supplied from the outside. Note that the raw water is water (water to be treated) introduced into the device from inlet port 2, and is, for example, city water or well water. The raw water includes hardness components (for example, calcium or magnesium ions). By performing the water softening treatment using water softening apparatus 1, neutral soft water having reduced hardness can be obtained, and soft water can be used even in an area where the hardness of raw water is high.

Specifically, as illustrated in Fig. 1, water softening apparatus 1 includes inlet port 2, soft water tanks, neutralization tanks, water intake port 7, regeneration device 8, and controller 15.

Furthermore, water softening apparatus 1 includes drainage port 13, a plurality of opening and closing valves (opening and closing valves 18 to 23), and a plurality of flow path switching valves (flow path switching valves 24 to 27). Details of these will be described later.

### <2. Inlet port and water intake port>

Inlet port 2 is connected to a supply source of the raw water. Inlet port 2 is an opening for introducing the raw water into water softening apparatus 1.

Water intake port 7 is an opening that supplies the water distributed in water softening apparatus 1 and subjected to the water softening treatment to the outside of the apparatus. In water softening apparatus 1, the water after the water softening treatment can be taken out from water intake port 7 by the pressure of the raw water flowing in from inlet port 2.

In water softening apparatus 1, in the water softening process of performing the water softening treatment, raw water supplied from the outside flows through inlet port 2, flow path 28, first soft water tank 3, flow path 29, first neutralization tank 4, flow path 30, second soft water tank 5, flow path 31, second neutralization tank 6, flow path 32, and water intake port 7 in this order, and is discharged as neutral soft water.

### <3. Soft water tank>

The soft water tanks (first soft water tank 3 and second soft water tank 5) soften the raw water containing the hardness components by an action of weakly acidic cation exchange resin 33. Specifically, in the soft water tank, cations (calcium ions or magnesium ions), which are hardness components contained in flowing water (raw water), are exchanged for hydrogen ions, so that the hardness of the raw water decreases and the raw water is softened. Water softening apparatus 1 according to the present exemplary embodiment includes first soft water tank 3 and second soft water tank 5 as soft water tanks.

First soft water tank 3 softens the raw water flowing in from inlet port 2. First soft water tank 3 includes flow path switching valve 24. Details of the flow path switching valve will be collectively described later.

Second soft water tank 5 softens the water distributed through first neutralization tank 4 to be described later. Second soft water tank 5 includes flow path switching valve 26.

First soft water tank 3 and second soft water tank 5 are each filled with weakly acidic cation exchange resin 33.

Weakly acidic cation exchange resin 33 is an ion exchange resin having a hydrogen ion at a terminal of a functional group. Weakly acidic cation exchange resin 33 adsorbs cations (calcium ions or magnesium ions), which are hardness components contained in the raw water to be passed, and releases hydrogen ions. The soft water treated with weakly acidic cation exchange resin 33 contains a large amount of hydrogen ions exchanged for the hardness components. That is, the soft water flowing out of first soft water tank 3 and second soft water tank 5 is soft water (acidic soft water) acidified by containing a large amount of hydrogen ions.

Since the terminal of the functional group of weakly acidic cation exchange resin 33 is a hydrogen ion, weakly acidic cation exchange resin 33 can be regenerated using acidic electrolytic water in the regeneration treatment described later. At this time, the cations, which are the hardness components taken in during the water softening treatment, are released from weakly acidic cation exchange resin 33.

Weakly acidic cation exchange resin 33 is not particularly limited, and general-purpose ones can be used, and examples thereof include those having a carboxyl group (-COOH) as an exchange group. Furthermore, a hydrogen ion (H⁺) as a counter ion of a carboxyl group may be a cation such as a metal ion or an ammonium ion (NH₄⁺).

### <4. Neutralization tank>

In the neutralization tanks (first neutralization tank 4 and second neutralization tank 6), the pH (hydrogen ion concentration index) of soft water (acidified soft water) containing hydrogen ions discharged from the soft water tank is neutralized by the action of weakly basic anion exchange resin 34 to obtain neutral soft water. Specifically, since the neutralization tank adsorbs hydrogen ions contained in soft water from the soft water tank together with anions (negative ions), the pH of the soft water increases, and neutral soft water can be obtained. Water softening apparatus 1 according to the present exemplary embodiment includes first neutralization tank 4 and second neutralization tank 6 as neutralization tanks.

First neutralization tank 4 neutralizes the acidic soft water distributed through first soft water tank 3. First neutralization tank 4 includes flow path switching valve 25.

Second neutralization tank 6 neutralizes the acidic soft water distributed through second soft water tank 5. Second neutralization tank 6 includes flow path switching valve 27.

First neutralization tank 4 and second neutralization tank 6 are each filled with weakly basic anion exchange resin 34.

Weakly basic anion exchange resin 34 neutralizes the hydrogen ions contained in the water to be passed to generate the neutral water. Weakly basic anion exchange resin 34 can be regenerated using alkaline electrolytic water in a regeneration treatment to be described later.

Weakly basic anion exchange resin 34 is not particularly limited, and general-purpose resins can be used, and examples thereof include those in a free base form.

### <5. Regeneration device>

Regeneration device 8 is a device that regenerates weakly acidic cation exchange resin 33 filled in first soft water tank 3 and second soft water tank 5, and regenerates weakly basic anion exchange resin 34 filled in first neutralization tank 4 and second neutralization tank 6.

Regeneration device 8 includes electrolytic tank 9, capture unit 10, first water pump 11, and second water pump 12. In regeneration device 8, first supply flow path 35, second supply flow path 36, first collection flow path 37, and second collection flow path 38 are connected to second soft water tank 5, second neutralization tank 6, flow path 28, and flow path 29, respectively. Details of each flow path will be described later. Note that, first supply flow path 35, second supply flow path 36, first collection flow path 37, second collection flow path 38, neutralization tank bypass flow path 42, and soft water tank bypass flow path 44 form soft water tank regeneration circulation flow path 39 and neutralization tank regeneration circulation flow path 40 to be described later.

### <5.1 Electrolytic tank>

Electrolytic tank 9 electrolyzes water that has entered (water supplied from inlet port 2) by using a pair of electrodes 41 (electrode 41a and electrode 41b) provided inside to generate acidic electrolytic water and alkaline electrolytic water, and discharges the acidic electrolytic water and the alkaline electrolytic water. More specifically, in electrode 41a serving as an anode during electrolysis in the regeneration process, hydrogen ions are generated by electrolysis, and acidic electrolytic water is generated. Furthermore, in electrode 41b serving as a cathode during electrolysis in the regeneration process, hydroxide ions are generated by electrolysis, and alkaline electrolytic water is generated. Then, electrolytic tank 9 supplies the acidic electrolytic water to first soft water tank 3 and second soft water tank 5 via first supply flow path 35 and neutralization tank bypass flow path 42, and supplies the alkaline electrolytic water to first neutralization tank 4 and second neutralization tank 6 via second supply flow path 36 and soft water tank bypass flow path 44. Although details will be described later, the acidic electrolytic water generated by electrolytic tank 9 is used for the regeneration of weakly acidic cation exchange resin 33 in first soft water tank 3 and second soft water tank 5, and the alkaline electrolytic water generated by electrolytic tank 9 is used for the regeneration of weakly basic anion exchange resin 34 in first neutralization tank 4 and second neutralization tank 6. Note that electrolytic tank 9 is configured such that an energization state to the pair of electrodes 41 can be controlled by controller 15 described later.

### <5.2 Water pump>

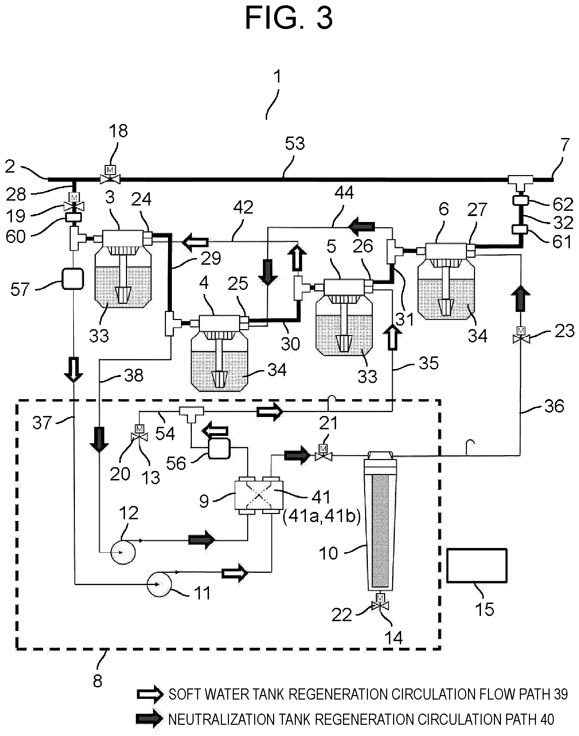

First water pump 11 is a device that distributes the acidic electrolytic water through soft water tank regeneration circulation flow path 39 (see Fig. 3) during the regeneration treatment by regeneration device 8. First water pump 11 is provided in first collection flow path 37 that communicatively connects first soft water tank 3 and electrolytic tank 9. Such an arrangement is adopted in order to facilitate circulation of the acidic electrolytic water to soft water tank regeneration circulation flow path 39 only by first water pump 11.

Second water pump 12 is a device that distributes the alkaline electrolytic water through neutralization tank regeneration circulation flow path 40 (see Fig. 3). Second water pump 12 is provided in second collection flow path 38 that communicatively connects first neutralization tank 4 and electrolytic tank 9. Such an arrangement is adopted in order to facilitate the circulation of the alkaline electrolytic water to neutralization tank regeneration circulation flow path 40 only by second water pump 12.

First water pump 11 and second water pump 12 are connected to controller 15 described later so as to be able to communicate with each other in a wireless or wired manner.

### <5.3 Capture unit>

Capture unit 10 is provided in second supply flow path 36 that communicatively connects electrolytic tank 9 and second neutralization tank 6.

Capture unit 10 captures precipitates contained in the alkaline electrolytic water fed from electrolytic tank 9. The precipitate is a reaction product generated when a hardness component, which is a cation released from first soft water tank 3 and second soft water tank 5 during the regeneration treatment, reacts with alkaline electrolytic water in electrolytic tank 9. More specifically, while the electrolysis of water is performed in electrolytic tank 9, the hardness components (for example, calcium ions or magnesium ions) released from first soft water tank 3 and second soft water tank 5 during the regeneration treatment move to the cathode (electrode 41b) side. Since alkaline electrolytic water is generated on the cathode side, the hardness component and the alkaline electrolytic water react with each other to form a precipitate. For example, in a case where the hardness components are calcium ions, a reaction in which calcium carbonate is generated or calcium hydroxide is generated occurs by mixing the calcium ions with the alkaline electrolytic water. Then, the precipitate derived from the hardness component is captured as a precipitate by capture unit 10 provided in second supply flow path 36. By capturing the precipitate derived from the hardness component by capture unit 10, it is possible to suppress the precipitate from flowing into second neutralization tank 6 and accumulating. Therefore, in a case where the water softening treatment is resumed after the end of the regeneration treatment, it is possible to suppress an increase in hardness of soft water fed from second neutralization tank 6 due to ionization caused by a reaction between a precipitate deposited in second neutralization tank 6 and hydrogen ions released from first soft water tank 3 and second soft water tank 5.

Furthermore, in the regeneration treatment, the alkaline electrolytic water in which the precipitates derived from the hardness components has passed through capture unit 10 is distributed through second neutralization tank 6 and first neutralization tank 4, is then electrolyzed again in electrolytic tank 9, and is used again as the alkaline electrolytic water to regenerate weakly basic anion exchange resin 34. At this time, the hardness component contained in the acidic electrolytic water is reduced as compared with the case where capture unit 10 is not provided. That is, since the hardness of the acidic electrolytic water is reduced by capturing the precipitate by capture unit 10, the hardness components flowing into first soft water tank 3 and second soft water tank 5 can be reduced, and a decrease in the regeneration efficiency of weakly acidic cation exchange resin 33 can be suppressed.

Note that, the expression "the hardness components react" includes not only a state where all the hardness components react but also a state where the component that does not react or the component that does not exceed a solubility product is included.

The form of capture unit 10 is not limited as long as the precipitate generated by the reaction between the hardness component and the alkaline electrolytic water can be separated. Examples thereof include a form using a cartridge type filter, a filtration layer using a granular filter material, a cyclone type solid-liquid separator, a hollow fiber membrane, and the like.

As means generally used as the form of capture unit 10, a cartridge type filter can be exemplified. As the cartridge type filter, a deep filtration type such as a pincushion filter, a surface filtration type such as a pleated filter and a membrane filter, or a combination thereof can be used.

Capture unit 10 includes opening and closing valve 22 and capture unit drainage port 14.

Opening and closing valve 22 is a valve that controls drainage from capture unit 10, and is provided, for example, below capture unit 10. Opening and closing valve 22 is opened, and thus, water in capture unit 10 can be discharged from capture unit drainage port 14 to the outside of the apparatus.

Capture unit drainage port 14 is an opening through which the water in capture unit 10 is discharged to the outside of the apparatus. Opening and closing valve 22 provided upstream of capture unit drainage port 14 is opened, and thus, the water in capture unit 10 can be discharged from capture unit drainage port 14 to the outside of the apparatus.

### <6. Opening and closing valve and flow path switching valve>

A plurality of opening and closing valves (opening and closing valves 18 to 23) are provided in the respective flow paths, and switch between an "open" state and a "closed" state in the respective flow paths.

The plurality of opening and closing valves (opening and closing valve 18, opening and closing valve 19, opening and closing valve 21, and opening and closing valve 23) start or stop the flow of water to the respective flow paths by opening and closing the valves.

Opening and closing valve 20 and opening and closing valve 22 are opened at the time of a regeneration flow path washing process, an electrolytic tank washing process, and a capture unit washing process described later, and discharge the regenerated circulating water to the outside of the apparatus.

A plurality of flow path switching valves (flow path switching valves 24 to 27) are provided in first soft water tank 3, first neutralization tank 4, second soft water tank 5, and second neutralization tank 6, respectively. Each of the plurality of flow path switching valves includes three openings. A first opening is an inlet and outlet port through which water can flow in and out, a second opening is an inlet port that does not function as an outlet port but functions as an inlet port, and a third opening is an outlet port that does not function as an inlet port but functions as an outlet port. In each of the plurality of flow path switching valves, the inflow and outflow port is always "opened", and when one of the inlet port and the outflow port is "opened" depending on the water flow direction, the other is "closed". Flow path switching valves 24 to 27 are provided, and thus, the number of opening and closing valves required for each flow path in water softening apparatus 1 can be reduced. As a result, cost of water softening apparatus 1 can be reduced.

Furthermore, the plurality of opening and closing valves (opening and closing valves 18 to 23) and the plurality of flow path switching valves (flow path switching valves 24 to 27) are each connected to controller 15 to be described later so as to be able to communicate with each other in a wireless or wired manner.

### <7. Drainage port>

Drainage port 13 is an opening provided at an end of drainage flow path 54, and is an opening for discharging water in the apparatus to the outside of the apparatus in the regeneration path washing process and the electrolytic tank washing process. Opening and closing valve 20 is provided upstream of drainage port 13, and drainage from drainage port 13 can be performed by opening opening and closing valve 20.

### <8. Flow path>

Bypass flow path 53 is a flow path that communicatively connects inlet port 2 and water intake port 7, and opening and closing valve 18 is provided on the flow path. Due to bypass flow path 53, even in a case where any one of the regeneration process, the regeneration flow path washing process, the electrolytic tank washing process, and the capture unit washing process is performed, the user of water softening apparatus 1 can obtain raw water from water intake port 7.

### <9. Water softening flow path>

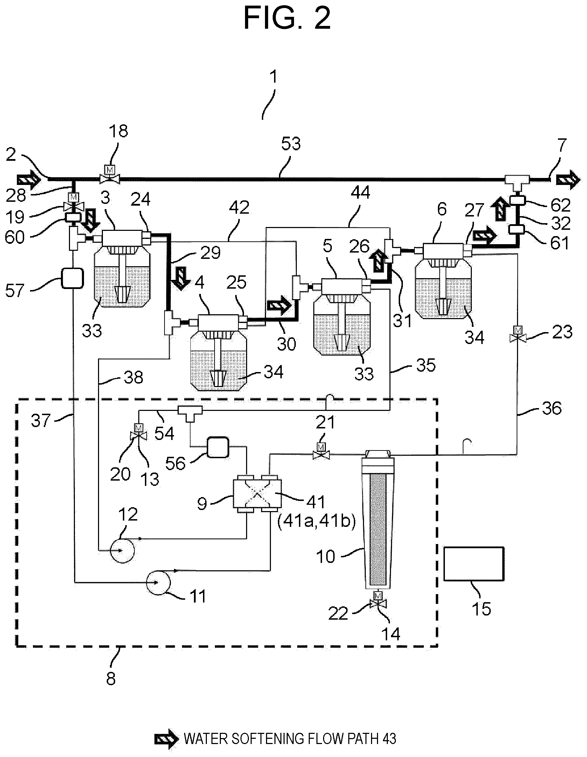

Water softening flow path 43 formed in the water softening process of water softening apparatus 1 will be described with reference to Fig. 2. Fig. 2 is a configuration diagram illustrating water softening flow path 43 of water softening apparatus 1.

Water softening flow path 43 (indicated by a hatched arrow in Fig. 2) is a flow path for softening raw water, and the raw water having flowed through water softening flow path 43 becomes neutral soft water and is discharged from water intake port 7 to the outside of the apparatus.

Water softening flow path 43 is formed by inlet port 2, flow path 28, first soft water tank 3, flow path 29, first neutralization tank 4, flow path 30, second soft water tank 5, flow path 31, second neutralization tank 6, flow path 32, and water intake port 7.

Flow path 28 is a flow path that connects inlet port 2 to first soft water tank 3. That is, flow path 28 is a flow path that guides the raw water containing the hardness components from inlet port 2 to first soft water tank 3.

Flow path 29 is a flow path that connects first soft water tank 3 to first neutralization tank 4. That is, flow path 29 is a flow path that guides the water softened in first soft water tank 3 to first neutralization tank 4.

Flow path 30 is a flow path that connects first neutralization tank 4 to second soft water tank 5. That is, flow path 30 is a flow path that guides the water neutralized in first neutralization tank 4 to second soft water tank 5.

Flow path 31 is a flow path that connects second soft water tank 5 to second neutralization tank 6. That is, flow path 31 is a flow path that guides the water softened in second soft water tank 5 to second neutralization tank 6.

Flow path 32 is a flow path connecting second neutralization tank 6 to water intake port 7. That is, flow path 32 is a flow path that guides the softened raw water from second neutralization tank 6 to water intake port 7.

As illustrated in Fig. 2, opening and closing valve 19 is installed on flow path 28 on the downstream side of inlet port 2 and on the upstream side of first soft water tank 3. Furthermore, opening and closing valve 18 is installed in bypass flow path 53 described above. Then, by closing opening and closing valve 18 and opening opening and closing valve 19, first soft water tank 3 and inlet port 2 are connected to communicate with each other. Furthermore, flow path switching valve 24 is switched so that first soft water tank 3 and first neutralization tank 4 communicate with each other, flow path switching valve 25 is switched so that first neutralization tank 4 and second soft water tank 5 communicate with each other, flow path switching valve 26 is switched so that second soft water tank 5 and second neutralization tank 6 communicate with each other, and flow path switching valve 27 is switched so that second neutralization tank 6 and water intake port 7 communicate with each other. As a result, water softening flow path 43 that communicatively connects inlet port 2 to flow path 28, first soft water tank 3, flow path 29, first neutralization tank 4, flow path 30, second soft water tank 5, flow path 31, second neutralization tank 6, flow path 32, and water intake port 7 is formed. At this time, opening and closing valve 20, opening and closing valve 21, and opening and closing valve 23 are closed.

### <10. Regeneration circulation flow path>

Next, soft water tank regeneration circulation flow path 39 and neutralization tank regeneration circulation flow path 40 formed at the time of the regeneration process of water softening apparatus 1 will be described with reference to Fig. 3. Fig. 3 is a configuration diagram illustrating soft water tank regeneration circulation flow path 39 and neutralization tank regeneration circulation flow path 40 of water softening apparatus 1.

First, soft water tank regeneration circulation flow path 39 will be described.

Soft water tank regeneration circulation flow path 39 is a flow path for regenerating first soft water tank 3 and second soft water tank 5 by circulating acidic electrolytic water during the regeneration process, and as illustrated in Fig. 3 (white arrow), water delivered by first water pump 11 flows through electrolytic tank 9, second soft water tank 5, and first soft water tank 3, and returns to electrolytic tank 9 to circulate.

Specifically, soft water tank regeneration circulation flow path 39 includes the respective flow paths of first supply flow path 35, neutralization tank bypass flow path 42, and first collection flow path 37, which connect electrolytic tank 9, second soft water tank 5, first soft water tank 3, and first water pump 11.

First supply flow path 35 is a flow path communicably connecting a downstream side of electrolytic tank 9 to a downstream side of second soft water tank 5, and is a flow path for supplying the acidic electrolytic water from electrolytic tank 9 to second soft water tank 5.

Neutralization tank bypass flow path 42 is a flow path that bypasses first neutralization tank 4 and communicatively connects an upstream side of second soft water tank 5 to a downstream side of first soft water tank 3, and is a flow path for supplying the acidic electrolytic water from second soft water tank 5 to first soft water tank 3.

First collection flow path 37 is a flow path that communicatively connects the upstream side of first soft water tank 3 to electrolytic tank 9, and is a flow path that collects acidic electrolytic water containing a hardness component that has passed through first soft water tank 3 and second soft water tank 5 into electrolytic tank 9. First water pump 11 is provided in first collection flow path 37.

Furthermore, soft water tank regeneration circulation flow path 39 is a flow path that introduces the acidic electrolytic water delivered from electrolytic tank 9 into first soft water tank 3 and second soft water tank 5 from the downstream side of first soft water tank 3 and second soft water tank 5, respectively, and causes the acidic electrolytic water to flow out from the upstream side of each of first soft water tank 3 and second soft water tank 5 having a larger adsorption amount of hardness components than that on the downstream side of the soft water tank.

Note that, in the above description, the downstream side (or upstream side) refers to the downstream side (or upstream side) in the flow path at the time of the water softening treatment.

Next, neutralization tank regeneration circulation flow path 40 will be described.

Neutralization tank regeneration circulation flow path 40 is a flow path for regenerating first neutralization tank 4 and second neutralization tank 6 by circulating alkaline electrolytic water during the regeneration process, and as illustrated in Fig. 3 (black arrow), is a flow path in which water delivered by second water pump 12 circulates through electrolytic tank 9, second neutralization tank 6, and first neutralization tank 4, and returns to electrolytic tank 9 to circulate.

Specifically, neutralization tank regeneration circulation flow path 40 includes the respective flow paths of second supply flow path 36, soft water tank bypass flow path 44, and second collection flow path 38, which connect electrolytic tank 9, second neutralization tank 6, first neutralization tank 4, and second water pump 12.

Second supply flow path 36 is a flow path communicably connecting the downstream side of electrolytic tank 9 to a downstream side of second neutralization tank 6, and is a flow path for supplying the alkaline electrolytic water from electrolytic tank 9 to second neutralization tank 6. Capture unit 10, opening and closing valve 21, and opening and closing valve 23 are installed in second supply flow path 36.

Soft water tank bypass flow path 44 is a flow path that bypasses second soft water tank 5 and communicatively connects an upstream side of second neutralization tank 6 to a downstream side of first neutralization tank 4, and is a flow path for supplying the alkaline electrolytic water from second neutralization tank 6 to first neutralization tank 4.

Second collection flow path 38 is a flow path that communicatively connects the upstream side of first neutralization tank 4 to electrolytic tank 9, and is a flow path that collects the alkaline electrolytic water having passed through first neutralization tank 4 and second neutralization tank 6 into electrolytic tank 9. Second water pump 12 is provided in second collection flow path 38.

### <11: Regeneration flow path washing flow path>

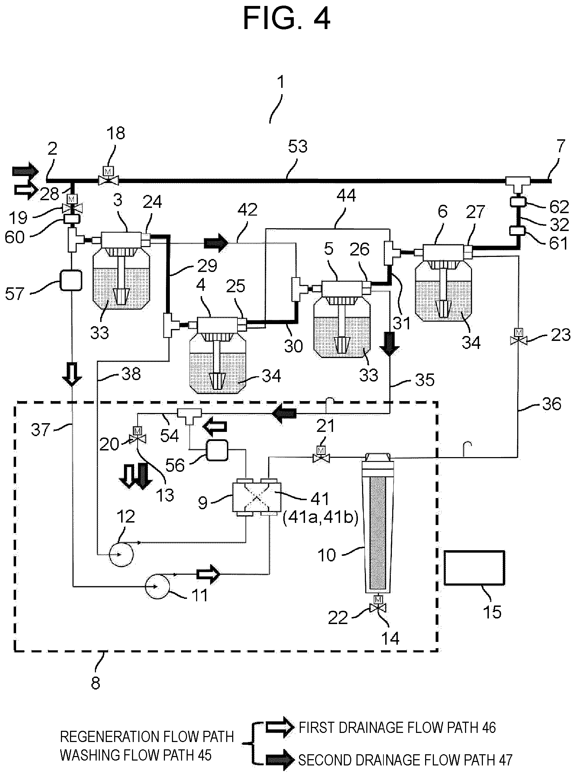

Next, regeneration flow path washing flow path 45 formed in the regeneration flow path washing process of water softening apparatus 1 will be described with reference to Fig. 4. Fig. 4 is a configuration diagram illustrating regeneration flow path washing flow path 45 of water softening apparatus 1.

Regeneration flow path washing flow path 45 is a flow path for discharging the high hardness water remaining in the flow path to the outside of the apparatus without flowing into first neutralization tank 4 and second neutralization tank 6 in a regeneration flow path washing process to be described later. Regeneration flow path washing flow path 45 includes first drainage flow path 46 and second drainage flow path 47.

As illustrated in Fig. 4 (white arrow), first drainage flow path 46 is constituted by flow paths connecting first water pump 11, electrolytic tank 9, opening and closing valve 20, and drainage port 13 from inlet port 2. Specifically, first drainage flow path 46 is a flow path that allows raw water flowing in from inlet port 2 to flow through flow path 28, first collection flow path 37, first water pump 11, electrolytic tank 9, drainage flow path 54, opening and closing valve 20, and drainage port 13 in this order.

Drainage flow path 54 is a flow path connected to first supply flow path 35 at one end, and is a flow path connected to drainage port 13 at the other end. Opening and closing valve 20 is provided in drainage flow path 54, and the water in the flow path can be drained to the outside of the apparatus by opening opening and closing valve 20, and drainage from drainage port 13 can be stopped by closing opening and closing valve 20.

As illustrated in Fig. 4 (black arrow), second drainage flow path 47 is constituted by respective flow paths that communicatively connect inlet port 2 to first soft water tank 3, second soft water tank 5, opening and closing valve 20, and drainage port 13. Specifically, second drainage flow path 47 is a flow path that causes the raw water flowing in from inlet port 2 to flow through flow path 28, first soft water tank 3, neutralization tank bypass flow path 42, second soft water tank 5, first supply flow path 35, opening and closing valve 20, and drainage port 13 in this order.

Note that the flow rate of water flowing through second drainage flow path 47 is preferably controlled to be larger than the flow rate of water flowing through first drainage flow path 46. As a result, it is possible to preferentially replace the high hardness water in second drainage flow path 47 which is a flow path including the soft water tank used in the water softening process with the raw water. Accordingly, it is possible to suppress the influence of the high hardness water when the water softening process is started.

### <12. Electrolytic tank washing flow path>

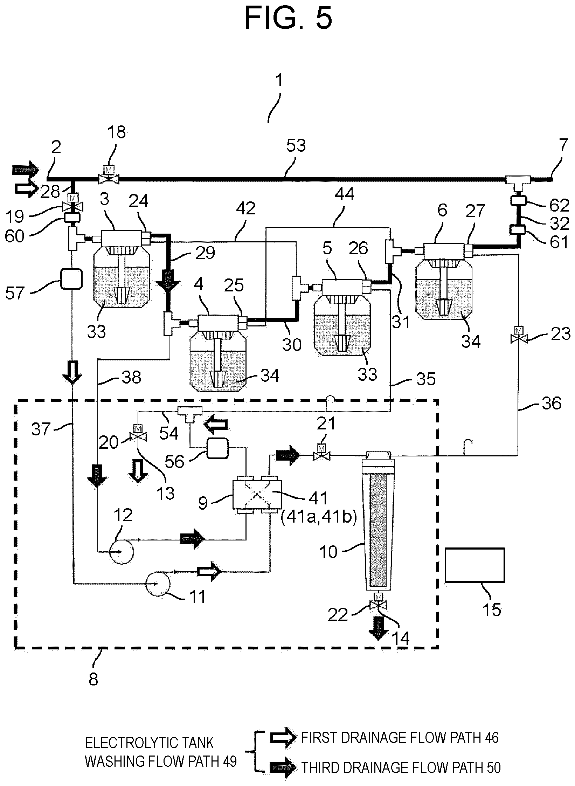

Next, electrolytic tank washing flow path 49 formed in the electrolytic tank washing process of water softening apparatus 1 will be described with reference to Fig. 5. Fig. 5 is a configuration diagram illustrating electrolytic tank washing flow path 49 of water softening apparatus 1.

Electrolytic tank washing flow path 49 is a flow path for removing the precipitates caused by the hardness components in electrolytic tank 9 and neutralization tank regeneration circulation flow path 40 in the electrolytic tank washing process to be described later. Electrolytic tank washing flow path 49 includes first drainage flow path 46 and third drainage flow path 50.

As illustrated in Fig. 5 (black arrow), third drainage flow path 50 is constituted by respective flow paths communicatively connecting inlet port 2 to first soft water tank 3, second water pump 12, electrolytic tank 9, opening and closing valve 21, capture unit 10, opening and closing valve 22, and capture unit drainage port 14. Specifically, third drainage flow path 50 is a flow path that causes the raw water flowing in from inlet port 2 to flow through flow path 28, first soft water tank 3, flow path 29, second collection flow path 38, second water pump 12, electrolytic tank 9, second supply flow path 36, opening and closing valve 21, capture unit 10, and opening and closing valve 22 in this order, and discharges the raw water from capture unit drainage port 14 to the outside of the apparatus.

More specifically, in third drainage flow path 50, the raw water flowing in from inlet port 2 is caused to flow into first soft water tank 3 via flow path 28 to obtain acidic soft water. The generated acid soft water is caused to flow into electrolytic tank 9 by second water pump 12 through flow path 29 and second collection flow path 38. Thereafter, the acidic soft water is circulated through opening and closing valve 21, capture unit 10, and opening and closing valve 22 in this order through second supply flow path 36, the precipitate of capture unit 10 is dissolved in the acidic soft water, and the acidic soft water is discharged to the outside of the apparatus from capture unit drainage port 14.

### <13: Capture unit washing flow path>

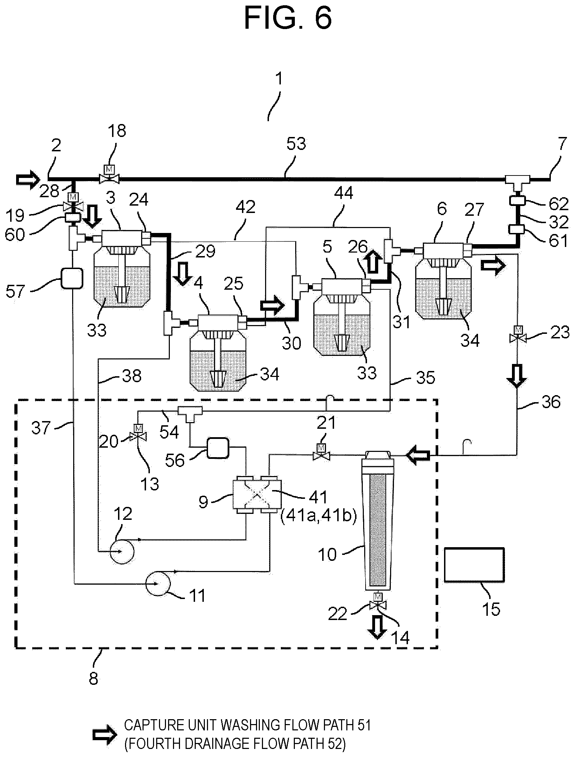

Next, capture unit washing flow path 51 formed in the capture unit washing process of water softening apparatus 1 will be described with reference to Fig. 6. Fig. 6 is a configuration diagram illustrating capture unit washing flow path 51 of water softening apparatus 1.

Capture unit washing flow path 51 is a flow path for removing a precipitate derived from the hardness component precipitated in capture unit 10 in a capture unit washing process described later. Capture unit washing flow path 51 includes fourth drainage flow path 52.

As illustrated in Fig. 6, capture unit washing flow path 51 is configured by respective flow paths that communicatively connect inlet port 2 to first soft water tank 3, first neutralization tank 4, second soft water tank 5, second neutralization tank 6, capture unit 10, and capture unit drainage port 14. Specifically, capture unit washing flow path 51 is a flow path that causes the raw water flowing in from inlet port 2 to flow through flow path 28, first soft water tank 3, flow path 29, first neutralization tank 4, flow path 30, second soft water tank 5, flow path 31, second neutralization tank 6, second supply flow path 36, opening and closing valve 23, capture unit 10, and opening and closing valve 22 in this order, and discharges the raw water from capture unit drainage port 14 to the outside of the apparatus.

### <14. Raw water hardness measurement unit and soft water hardness measurement unit>

Raw water hardness measurement unit 60 and soft water hardness measurement unit 61 (see Fig. 1) included in water softening apparatus 1 measure the hardness components in water at the time of the water softening process.

Raw water hardness measurement unit 60 is installed in flow path 28 that allows inlet port 2 and first soft water tank 3 to communicate with each other, and measures the hardness of the raw water flowing through flow path 28 (that is, the raw water hardness before water softening).

Soft water hardness measurement unit 61 is installed in flow path 32 that allows second neutralization tank 6 and water intake port 7 to communicate with each other, and measures the hardness of the soft water flowing through flow path 32 (that is, the hardness of the soft water after the water softening treatment is performed by the soft water tank and the neutralization tank).

Note that, as raw water hardness measurement unit 60 and soft water hardness measurement unit 61, general-purpose ones can be used, and for example, a detector for measuring the electrical conductivity of a liquid or a detector for measuring an amount of total dissolved solid (TDS) contained in water can be used.

### <15. Flow rate measurement unit>

Flow rate measurement unit 62 (see Fig. 1) included in water softening apparatus 1 is installed in flow path 32 that allows second neutralization tank 6 and water intake port 7 to communicate with each other, and measures the flow rate of water passing through flow path 32. Note that, in the water softening process, the water flowing into first soft water tank 3 flows through first neutralization tank 4, second soft water tank 5, and second neutralization tank 6 without being distributed. Therefore, it can be considered that the amount of water flowing through the flow path is substantially the same before and after water softening. That is, the flow rate of water measured by flow rate measurement unit 62 can be regarded as the raw water passing amount before water softening and the soft water passing amount after water softening.

### <16. First ion concentration measurement unit and second ion concentration measurement unit>

First ion concentration measurement unit 56 (see Fig. 1) included in water softening apparatus 1 is provided on first supply flow path 35, and measures the ion concentration of the acidic electrolytic water after flowing out of electrolytic tank 9 and before flowing into the soft water tank (second soft water tank 5) at the time of the resin regeneration process.

Second ion concentration measurement unit 57 included in water softening apparatus 1 is provided on first collection flow path 37, and measures the ion concentration of the acidic electrolytic water flowing out of the soft water tank (first soft water tank 3) during the resin regeneration process.

Furthermore, the ion concentrations of the acidic electrolytic water measured by first ion concentration measurement unit 56 and second ion concentration measurement unit 57 may be a pH value or an amount of TDS. As each measurement unit, a general-purpose pH meter or TDS detector can be used.

Note that the measurement of the ion concentration of the acidic electrolytic water by first ion concentration measurement unit 56 and second ion concentration measurement unit 57 may be performed in real time during the resin regeneration process or may be performed at regular intervals. For example, the measurement may be performed at intervals of 30 minutes.

### <17. Controller>

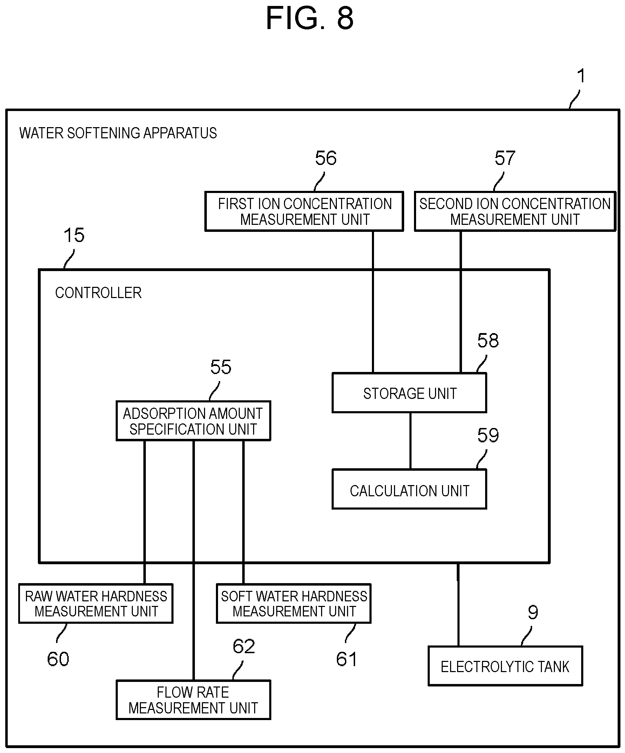

Each function of controller 15 according to the present exemplary embodiment will be described with reference to Fig. 8. Fig. 8 is a functional block diagram of water softening apparatus 1 according to the first exemplary embodiment.

Controller 15 controls execution of each process of the water softening process, the regeneration process, the regeneration flow path washing process, the electrolytic tank washing process, and the capture unit washing process, and switching between the respective processes.

Specifically, the control of switching between the processes indicates switching from the water softening process to the regeneration process, switching from the regeneration process to the regeneration flow path washing process, switching from the regeneration flow path washing process to the electrolytic tank washing process, switching from the electrolytic tank washing process to the capture unit washing process, and switching from the capture unit washing process to the water softening process.

Furthermore, controller 15 controls opening and closing valve 20 and opening and closing valve 22 to control the drainage in the regeneration flow path washing process, the electrolytic tank washing process, and the capture unit washing process.

Furthermore, controller 15 controls flow path switching valves 24 to 27, opening and closing valve 18, opening and closing valve 19, opening and closing valve 21, and opening and closing valve 23, and executes switching between the flow paths.

Controller 15 includes adsorption amount specification unit 55, storage unit 58, and calculation unit 59.

Adsorption amount specification unit 55 can calculate the hardness component adsorption amount adsorbed to the soft water tank from information on the hardness of the raw water measured by raw water hardness measurement unit 60, the hardness of the soft water measured by soft water hardness measurement unit 61, and the amount of water passing through the softened water measured by flow rate measurement unit 62. Specifically, the hardness component adsorption amount can be calculated by subtracting the hardness of the soft water measured by soft water hardness measurement unit 61 from the hardness of the raw water measured by raw water hardness measurement unit 60, and multiplying the value calculated by the subtraction by the water flow rate of the softened water measured by flow rate measurement unit 62.

Storage unit 58 stores the first ion concentration information measured by first ion concentration measurement unit 56, that is, the ion concentration information of the acidic electrolytic water after flowing out of electrolytic tank 9 and before flowing into the soft water tank in the resin regeneration process. Furthermore, similarly, storage unit 58 stores the second ion concentration information measured by second ion concentration measurement unit 57, that is, the ion concentration information after the acidic electrolytic water passes through the soft water tank. Note that the timing at which each piece of ion concentration information is stored in storage unit 58 corresponds to the timing at which each piece of ion concentration information is measured in first ion concentration measurement unit 56 or second ion concentration measurement unit 57.

Calculation unit 59 calculates a reference difference value (difference ion concentration value) that is a difference between the first ion concentration information and the second ion concentration information stored in storage unit 58. Considering a difference in pH value as the difference value here, this difference value is a difference in hydrogen ion concentration between before and after the soft water tank, and thus represents a reaction amount in the exchange reaction between the hardness component adsorbed on weakly acidic cation exchange resin 33 and hydrogen ions in the acidic electrolytic water. From this, it is possible to calculate the exchange reaction efficiency between the hardness component and hydrogen ions at a predetermined time. Based on the exchange reaction efficiency calculated by calculation unit 59, controller 15 determines continuation or end of the regeneration process and determines an operating status of electrolytic tank 9.

The above configuration is the configuration of water softening apparatus 1.

Next, the operation of water softening apparatus 1 will be described.

### <18. Water softening process, regeneration process, regeneration flow path washing process, electrolytic tank washing process, and capture unit washing process>

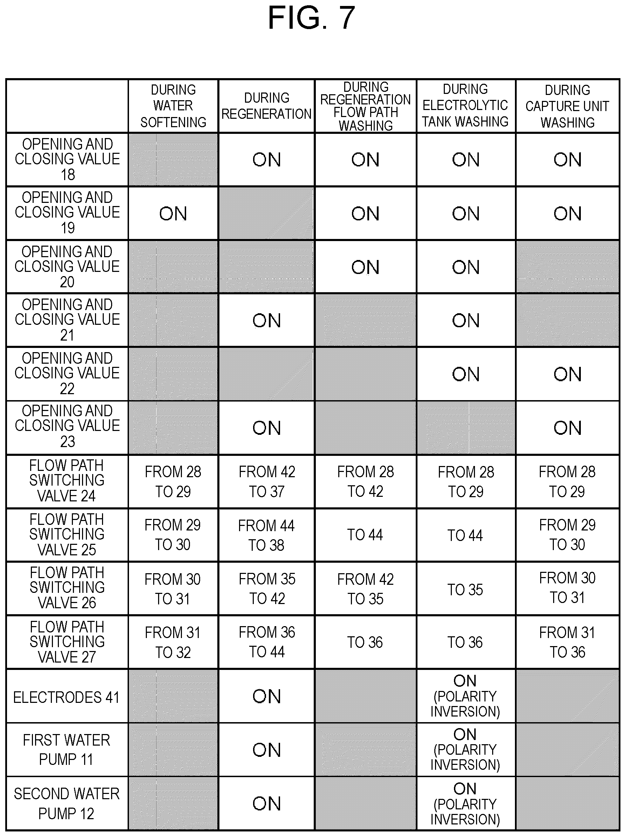

Next, the water softening process, the regeneration process, the regeneration flow path washing process, the electrolytic tank washing process, and the capture unit washing process of water softening apparatus 1 will be described with reference to Fig. 7. Fig. 7 is a diagram illustrating a state of water softening apparatus 1 during operation.

In the water softening process, the regeneration process, the regeneration flow path washing process, the electrolytic tank washing process, and the capture unit washing process, as illustrated in Fig. 7, controller 15 switches opening and closing valves 18 to 23, flow path switching valves 24 to 27, electrodes 41 of electrolytic tank 9, first water pump 11, and second water pump 12, and performs control so as to be in respective circulation states.

Here, "ON" in Fig. 7 indicates a state where the corresponding opening and closing valve is "opened", a state where electrodes 41 are energized, and a state where the corresponding water pump is operating. Blanks indicate a state in which the corresponding opening and closing valve is "closed", a state in which electrodes 41 are not energized, and a state in which the corresponding water pump is stopped, respectively.

Furthermore, "FROM (Number of component A) TO (Number of component B)" in Fig. 7 indicates a state in which the corresponding flow path switching valve connects the flow paths in a direction in which water is supplied from component A to component B. For example, flow path switching valve 24 in the water softening process connects the respective flow paths so that water can be supplied from flow path 28 to flow path 29.

Furthermore, "TO (Number of component C)" in Fig. 7 indicates a state in which the corresponding flow path switching valve connects the flow paths in a direction in which there is a possibility of supplying water to component C. At this time, although the flow path is connected, since the water is in an environment in which inflow and outflow of water to and from the soft water tank or the neutralization tank provided with the corresponding flow path switching valve is unlikely to occur, water supply from the corresponding flow path switching valve is extremely unlikely to occur.

### <18.1 Water softening process>

First, an operation of water softening apparatus 1 in the water softening process will be described with reference to Fig. 2 and a field of "DURING WATER SOFTENING" in Fig. 7.

In water softening apparatus 1, as illustrated in Fig. 7, in the water softening process, opening and closing valve 19 provided in flow path 28 is opened in a state where opening and closing valve 18 is closed. As a result, the raw water containing the hardness component flows in from the outside. Since the flowed raw water flows through first soft water tank 3, first neutralization tank 4, second soft water tank 5, and second neutralization tank 6 in this order, in water softening apparatus 1, it is possible to take out softened water (neutral soft water) from water intake port 7.

At this time, flow path switching valve 24 is in a connection state capable of supplying water from flow path 28 to flow path 29, flow path switching valve 25 is in a connection state capable of supplying water from flow path 29 to flow path 30, flow path switching valve 26 is in a connection state capable of supplying water from flow path 30 to flow path 31, and flow path switching valve 27 is in a connection state capable of supplying water from flow path 31 to flow path 32. Opening and closing valves 20 to 23 are all closed. Furthermore, the operations of electrodes 41 of electrolytic tank 9, first water pump 11, and second water pump 12are also stopped.

With such control, as illustrated in Fig. 1, in the water softening process, the raw water is supplied from inlet port 2 to first soft water tank 3 through flow path 28 by the pressure of the raw water flowing in from the outside. Then, the raw water supplied to first soft water tank 3 is distributed through weakly acidic cation exchange resin 33 provided in first soft water tank 3. At this time, cations as hardness components in the raw water are adsorbed by the action of weakly acidic cation exchange resin 33, and hydrogen ions are released (ion exchange is performed). Cations are removed from the raw water, and thus, the raw water is softened. Since softened water contains a large amount of hydrogen ions that have been exchanged for hardness components and have flowed out, the softened water is acidified to be acidic water (first soft water) having a low pH. Here, when water containing a large amount of a permanent hardness component (for example, a sulfate such as calcium sulfate or a chloride such as magnesium chloride) as the hardness component is softened, the pH of the water containing a large amount of the permanent hardness component is more likely to decrease than water containing a large amount of a temporary hardness component (carbonates such as, for example, calcium carbonate). Since softening of water hardly proceeds in a state in which the pH is lowered, water having flowed through first soft water tank 3 is caused to pass through first neutralization tank 4 to perform neutralization.

The water softened in first soft water tank 3 flows through flow path 29 via flow path switching valve 24 provided in first soft water tank 3 and flows into first neutralization tank 4. In first neutralization tank 4, the hydrogen ions contained in the softened water are adsorbed by an action of weakly basic anion exchange resin 34. That is, since the hydrogen ions are removed from the water softened by first soft water tank 3, the decreased pH is increased and neutralized. Therefore, as compared with the case where water softened in first soft water tank 3 is directly softened in second soft water tank 5, the water softening treatment in second soft water tank 5 can be easily advanced.

The water (neutralized first soft water) neutralized by first neutralization tank 4 is distributed through flow path 30 via flow path switching valve 25 provided in first neutralization tank 4, and flows into second soft water tank 5. In second soft water tank 5, the cations as the hardness components are adsorbed and the hydrogen ions are released by the action of weakly acidic cation exchange resin 33. In second soft water tank 5, hardness components that cannot be removed in first soft water tank 3 are exchanged for the hydrogen ions contained in weakly acidic cation exchange resin 33. That is, the water flowed into second soft water tank 5 is further softened to become the soft water (second soft water).

The second soft water is distributed through flow path 31 via flow path switching valve 26 provided in second soft water tank 5, and flows into second neutralization tank 6. In second neutralization tank 6, the hydrogen ions contained in the flowed second soft water are adsorbed by the action of weakly basic anion exchange resin 34. That is, since the hydrogen ions are removed from the second soft water, the decreased pH increases, and the second soft water becomes the neutral soft water (neutralized second soft water) that can be used as domestic water. The neutralized second soft water flows through flow path 32 via flow path switching valve 27 provided in second neutralization tank 6, and is taken out from water intake port 7.

That is, in the water softening treatment, the raw water is distributed through first soft water tank 3, first neutralization tank 4, second soft water tank 5, and second neutralization tank 6 in this order. As a result, the raw water containing the hardness component flows out of first soft water tank 3 before the pH of the raw water is lowered by the water softening treatment in first soft water tank 3, is neutralized in first neutralization tank 4, is softened in second soft water tank 5, and is neutralized in second neutralization tank 6. Thus, as compared with a case where each of the soft water tank and the neutralization tank is constituted by a single body, since it is possible to suppress the decrease in pH of the water distributed in the soft water tank, that is, acidification, exchange between the hardness components and the hydrogen ions retained in weakly acidic cation exchange resin 33 in the soft water tank (particularly, second soft water tank 5) easily occurs. Therefore, the water softening performance can be improved.

Then, in water softening apparatus 1, in a case where a time zone specified by controller 15 is reached or in a case where the water softening process exceeds a certain amount of water, the water softening process is ended and the regeneration process is executed.

### <18.2 Regeneration process>

Next, an operation of water softening apparatus 1 in the regeneration process by regeneration device 8 will be sequentially described with reference to Fig. 3 and a field of "DURING REGENERATION" in Fig. 7.

In water softening apparatus 1, cation exchange capacities of first soft water tank 3 and second soft water tank 5 filled with weakly acidic cation exchange resin 33 decreases or disappears as the use is continued. That is, ion exchange cannot be performed after all the hydrogen ions, which are functional groups of the cation exchange resin, are exchanged for calcium ions or magnesium ions, which are the hardness components. Even before all the hydrogen ions are exchanged for the hardness components, since the ion exchange reaction is less likely to occur as the hydrogen ions decrease, the water softening performance is deteriorated. In such a state, the hardness components are contained in treated water. Thus, in water softening apparatus 1, it is necessary to perform the regeneration treatment of first soft water tank 3, second soft water tank 5, first neutralization tank 4, and second neutralization tank 6 by regeneration device 8.

In the regeneration process, controller 15 closes opening and closing valve 19, opening and closing valve 20, and opening and closing valve 22, and opens opening and closing valve 18, opening and closing valve 21, and opening and closing valve 23. Controller 15 brings flow path switching valve 24 into a connection state in which water can be supplied from neutralization tank bypass flow path 42 to first collection flow path 37, brings flow path switching valve 25 into a connection state in which water can be supplied from soft water tank bypass flow path 44 to second collection flow path 38, brings flow path switching valve 26 into a connection state in which water can be supplied from first supply flow path 35 to neutralization tank bypass flow path 42, and brings flow path switching valve 27 into a connection state in which water can be supplied from second supply flow path 36 to soft water tank bypass flow path 44. That is, first soft water tank 3 and second soft water tank 5 communicate with each other, and first neutralization tank 4 and second neutralization tank 6 communicate with each other. Controller 15 stops the drainage of drainage port 13 and capture unit drainage port 14. As a result, as illustrated in Fig. 3, soft water tank regeneration circulation flow path 39 and neutralization tank regeneration circulation flow path 40 are formed.

Then, when first water pump 11 and second water pump 12 are operated, the acidic electrolytic water and the alkaline electrolytic water in electrolytic tank 9 circulate through each of soft water tank regeneration circulation flow path 39 and neutralization tank regeneration circulation flow path 40.

Furthermore, controller 15 energizes electrolytic tank 9 so that the anode has a high potential with respect to the cathode (positive electrolysis). As a result, the hydrogen ions are generated at the anode during electrolysis, and the acidic electrolytic water is generated near the anode. On the other hand, the hydroxide ions are generated at the cathode, and the alkaline electrolytic water is generated near the cathode.

The acidic electrolytic water generated in electrolytic tank 9 flows through first supply flow path 35, is supplied into second soft water tank 5 via flow path switching valve 26, and flows through weakly acidic cation exchange resin 33 inside. Then, the acidic electrolytic water flowing through second soft water tank 5 flows through neutralization tank bypass flow path 42, is supplied into first soft water tank 3 via flow path switching valve 24, and flows through weakly acidic cation exchange resin 33 inside. That is, by passing acidic electrolytic water through weakly acidic cation exchange resin 33, cations (hardness components) adsorbed to weakly acidic cation exchange resin 33 and hydrogen ions contained in the acidic electrolytic water undergo an ion exchange reaction. As a result, weakly acidic cation exchange resin 33 is regenerated.

Thereafter, the acidic electrolytic water distributed through first soft water tank 3 contains the cations and flows into first collection flow path 37. That is, the acidic electrolytic water containing the cations distributed through weakly acidic cation exchange resin 33 is collected in electrolytic tank 9 via first collection flow path 37.

As described above, soft water tank regeneration circulation flow path 39 is configured to cause the acidic electrolytic water to flow from the downstream side of second soft water tank 5, which is a soft water tank located on the most downstream side from the inlet port of the raw water and is a soft water tank having weakly acidic cation exchange resin 33 having a smaller adsorption amount of hardness components than that of the upstream soft water tank, and to flow into the downstream side of first soft water tank 3 having weakly acidic cation exchange resin 33 located on the upstream side and having a larger adsorption amount of hardness components than that of second soft water tank 5.

That is, soft water tank regeneration circulation flow path 39 is a flow path that distributes the acidic electrolytic water sent from electrolytic tank 9 through second soft water tank 5, sends the acidic electrolytic water to first soft water tank 3 by neutralization tank bypass flow path 42, distributes the acidic electrolytic water through first soft water tank 3, and causes the acidic electrolytic water to flow into electrolytic tank 9 via first collection flow path 37. As a result, in the regeneration process, first, the acidic electrolytic water discharged from electrolytic tank 9 flows into second soft water tank 5 having a smaller adsorption amount of the hardness component than first soft water tank 3, and the acidic electrolytic water containing the hardness component is discharged from second soft water tank 5 to first soft water tank 3. In the regeneration of weakly acidic cation exchange resin 33 in second soft water tank 5, since the consumption of the hydrogen ions in the acidic electrolytic water is smaller than in first soft water tank 3, a reduction in a hydrogen ion concentration can be suppressed as compared with the regeneration of first soft water tank 3. Thus, it is possible to suppress the acidic electrolytic water containing a large amount of hydrogen ions from flowing into first soft water tank 3 and the hardness components from being re-adsorbed in first soft water tank 3. Accordingly, it is possible to suppress a decrease in the regeneration treatment efficiency and to shorten the regeneration time.

On the other hand, the alkaline electrolytic water generated in the vicinity of the cathode of electrolytic tank 9 flows through second supply flow path 36 and capture unit 10, is supplied into second neutralization tank 6 via flow path switching valve 27, and flows through weakly basic anion exchange resin 34 inside. Then, the alkaline electrolytic water having flowed through second neutralization tank 6 flows through soft water tank bypass flow path 44, is supplied into first neutralization tank 4 via flow path switching valve 25, and flows through weakly basic anion exchange resin 34 inside. That is, by allowing alkaline electrolytic water to pass through weakly basic anion exchange resin 34, anions adsorbed to weakly basic anion exchange resin 34 and hydroxide ions contained in the alkaline electrolytic water undergo an ion exchange reaction. As a result, weakly basic anion exchange resin 34 is regenerated.

Thereafter, the alkaline electrolytic water having flowed through first neutralization tank 4 contains anions and flows into second collection flow path 38. That is, the alkaline electrolytic water containing the anions distributed through weakly basic anion exchange resin 34 is collected in electrolytic tank 9 via second collection flow path 38.

As described above, neutralization tank regeneration circulation flow path 40 is configured to cause the alkaline electrolytic water to flow from the downstream side of second neutralization tank 6, which is the neutralization tank located most downstream from the inlet port of the raw water and includes weakly basic anion exchange resin 34 having a smaller amount of adsorbed anions than the neutralization tank on the upstream side, and to flow into the downstream side of first neutralization tank 4, which is located upstream and includes weakly basic anion exchange resin 34 to which more anions are adsorbed than second neutralization tank 6.

That is, neutralization tank regeneration circulation flow path 40 is a flow path that distributes the alkaline electrolytic water sent from electrolytic tank 9 through second neutralization tank 6, sends the alkaline electrolytic water to first neutralization tank 4 by soft water tank bypass flow path 44, distributes the alkaline electrolytic water through first neutralization tank 4, and causes the alkaline electrolytic water to flow into electrolytic tank 9 via second collection flow path 38. As a result, in the regeneration process, the alkaline electrolytic water flows into second neutralization tank 6 having a smaller adsorption amount of anions than in first neutralization tank 4, and the alkaline electrolytic water containing the anions is ejected from second neutralization tank 6 to first neutralization tank 4. In the regeneration of weakly basic anion exchange resin 34 in second neutralization tank 6, since the consumption of the hydroxide ions in the alkaline electrolytic water is smaller than in first neutralization tank 4, a reduction in a hydroxide ion concentration can be suppressed as compared with the regeneration of first neutralization tank 4. Thus, it is possible to suppress the alkaline electrolytic water containing a large amount of hydroxide ions from flowing into first neutralization tank 4, and it is possible to suppress re-adsorption of anions in first neutralization tank 4. Therefore, it is possible to suppress a decrease in the regeneration treatment efficiency and to shorten the regeneration time.

Furthermore, in neutralization tank regeneration circulation flow path 40, the alkaline electrolytic water delivered from electrolytic tank 9 is introduced into first neutralization tank 4 and second neutralization tank 6 from the downstream side of first neutralization tank 4 and second neutralization tank 6, respectively, and is caused to flow out from the upstream side where the adsorption amount of anions is larger than that on the downstream side of each neutralization tank. As a result, the alkaline electrolytic water flows in from the downstream side where the adsorption amount of the anion component is smaller, and the neutralization tank is regenerated. In the regeneration of weakly basic anion exchange resin 34 on the downstream side, since the consumption of hydroxide ions in the alkaline electrolytic water is smaller than that on the upstream side, a reduction in the hydroxide ion concentration of the alkaline electrolytic water can be suppressed. Accordingly, it is possible to suppress re-adsorption on the upstream side of anions contained in the alkaline electrolytic water from the downstream side. Therefore, it is possible to suppress a decrease in the regeneration treatment efficiency of the neutralization tank and to shorten the regeneration time. Note that the downstream side refers to the downstream side in the flow path during the water softening treatment.

In the present exemplary embodiment, controller 15 determines whether to continue or end the regeneration process according to the progress of the exchange reaction between the hardness component and hydrogen ions at weakly acidic cation exchange resin 33.

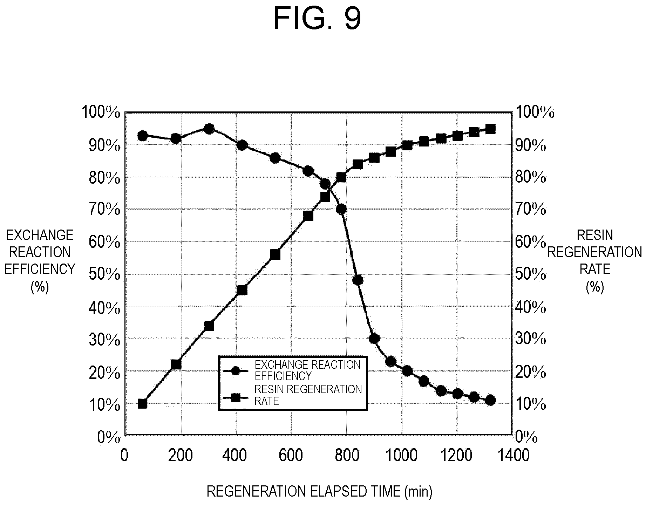

In the regeneration process, a resin regeneration rate and an elapsed time from the start of the regeneration process are not always in a proportional relationship. This will be described with reference to Fig. 9. Fig. 9 is a schematic diagram illustrating the resin regeneration rate and the reaction exchange efficiency with the lapse of the regeneration time of water softening apparatus 1 according to the first exemplary embodiment. Note that the regeneration elapsed time is an elapsed time from the start of the regeneration process, and varies depending on conditions such as the capacity of electrolytic tank 9, and thus the time illustrated in Fig. 9 is an example.

With the progress of the resin regeneration, the ease of the exchange reaction between the hardness component and hydrogen ions changes, and the speed of the resin regeneration also changes. An occurrence frequency of the exchange reaction is determined by a concentration difference between the hardness component and the hydrogen ions, and in a case where the concentration of the hardness component is significantly smaller than the concentration of the hydrogen ions, the exchange reaction is less likely to occur. Specifically, as the regeneration process progresses, an amount of unregenerated resin to which the hardness component is adsorbed decreases, that is, when the adsorption hardness per resin volume decreases, a desorption speed of the hardness component from weakly acidic cation exchange resin 33 decreases.

That is, since a large amount of hardness components are adsorbed to weakly acidic cation exchange resin 33 from the initial stage to the middle stage of the regeneration process, the exchange reaction efficiency between the hardness components and hydrogen ions is high, but the hardness components adsorbed to weakly acidic cation exchange resin 33 decrease toward the end stage of the regeneration process, so that the exchange reaction efficiency between the hardness components and hydrogen ions decreases. When the regeneration process is continued even in a case where the amount of the hardness component adsorbed to such weakly acidic cation exchange resin 33 decreases, the time taken to complete the regeneration of the resin becomes long. Therefore, in the present exemplary embodiment, the regeneration process is performed only in a region where exchange reaction efficiency is high in order to prevent an increase in regeneration time as described above.

Specifically, the hardness component adsorption amount adsorbed to the soft water tank is calculated based on the hardness of the raw water measured by raw water hardness measurement unit 60, the hardness of the soft water after water softening measured by soft water hardness measurement unit 61, and the water flow rate measured by flow rate measurement unit 62. Controller 15 continues the regeneration process in a case where the hardness component adsorption amount is more than or equal to a reference value, and ends the regeneration process in a case where the hardness component adsorption amount is less than the reference value.

Note that the reference value is a ratio of the amount of the hardness component actually adsorbed to weakly acidic cation exchange resin 33 (actual adsorption hardness component amount) to the amount of the hardness component that can be adsorbed to weakly acidic cation exchange resin 33, and in the present exemplary embodiment, the reference value is 20%.

In the present exemplary embodiment, the reason why the reference value is set to 20% is that the exchange reaction efficiency during the regeneration process can be maintained at a high efficiency of 70% or more.

The calculation of the exchange reaction efficiency is performed by calculation unit 59. Calculation unit 59 calculates the exchange reaction efficiency based on the first ion concentration information measured by first ion concentration measurement unit 56 and stored in storage unit 58 and the second ion concentration information measured by second ion concentration measurement unit 57 and stored in storage unit 58. For example, when the pH of the acidic electrolytic water before flowing into the soft water tank is 2.74 and the pH after flowing into the soft water tank is 3.71, the hydrogen ion concentrations are 1.82 mM and 0.19 mM, respectively, and the exchange reaction efficiency can be calculated to be about 89% from the consumption amount of hydrogen ions.

In a case where the actual adsorption hardness component amount is more than or equal to 20%, the exchange reaction between the hardness component and hydrogen ions easily proceeds in the vicinity of the resin in the soft water tank, and the exchange reaction efficiency shows a high value. On the other hand, in a case where the regeneration process proceeds and the amount of the actual adsorption hardness component is less than 20%, the ion concentration difference between the hardness component and hydrogen ions reduces the ease of desorption of the hardness component from weakly acidic cation exchange resin 33 and adsorption of the hydrogen ions to weakly acidic cation exchange resin 33. In other words, the exchange reaction between the hardness component and hydrogen ions hardly occurs. That is, when the amount of the actual adsorption hardness component is less than 20%, the regeneration process proceeds in a state where the exchange reaction efficiency is poor. Therefore, although 80% or more of weakly acidic cation exchange resin 33 as a whole has been completely regenerated, it takes a lot of regeneration time to regenerate the remaining 20% of the resin, which leads to prolongation of the regeneration process.

Note that "takes a lot of regeneration time" described above means that the regeneration time required to reduce the actual adsorption hardness component from 20% to approximately 0% is longer than the regeneration time required to reduce the actual adsorption hardness component by 20% in a range where the actual adsorption hardness component amount is 40% to 100%. In other words, in a case where the regeneration process is performed until the resin regeneration rate reaches 80%, and the regeneration process is ended when the regeneration rate exceeds 80%, the regeneration process can be ended in a time shorter than 80% of the time required for the regeneration process in a case where the regeneration process is performed until the resin regeneration rate reaches approximately 100%.

Therefore, controller 15 performs control to end the regeneration process when the regeneration process progresses and the hardness component adsorption amount becomes less than the reference value. Note that the resin regeneration rate in Fig. 9 is a ratio of weakly acidic cation exchange resin 33 to which no hardness component is adsorbed among weakly acidic cation exchange resins 33.

Furthermore, as a result of intensive studies, it has been found that when the exchange reaction efficiency between the hardness component and hydrogen ions is at least 70% or more, the resin can be regenerated in a region having high exchange reactivity. In a region where the exchange reaction efficiency is maintained at 70% or more, the concentration of hydrogen ions is higher when the concentration of the hardness ions adsorbed to the resin is compared with the concentration of hydrogen ions in the acidic electrolytic water. Therefore, it is considered that hardness ions are easily desorbed due to the adsorption selectivity of weakly acidic cation exchange resin 33, and hydrogen ions are easily brought into contact with a resin layer which is not regenerated, so that hydrogen ions are easily adsorbed to the resin. In the present exemplary embodiment, a second reference value, which is a reference value of the exchange reaction efficiency, is set to 70%.

Note that the reference value of the hardness component adsorption amount may be changed as long as the exchange reaction efficiency is 70% or more. For example, by setting the reference value of the hardness component adsorption amount to 30% instead of 20%, the amount of the hardness component removed from weakly acidic cation exchange resin 33 from the start of the regeneration process to the end of the regeneration process is reduced, so that the regeneration time can be further shortened.

Then, in water softening apparatus 1, the regeneration process is performed based on the control as described above, and the process proceeds to the regeneration flow path washing process when the regeneration process is ended.

Note that, in a case where the user desires to obtain soft water during the regeneration process, by opening a faucet (not illustrated) or the like connected to water softening apparatus 1, the raw water passes through bypass flow path 53 from inlet port 2 and flows out from water intake port 7, so that the raw water can be used without waiting for the end of the regeneration process.

### <18.3 Regeneration flow path washing process>

Next, an operation of water softening apparatus 1 in the regeneration flow path washing process will be sequentially described with reference to Fig. 4 and a field of "DURING REGENERATION FLOW PATH WASHING" in Fig. 7.

In water softening apparatus 1, during the regeneration process, hardness components are released from first soft water tank 3 and second soft water tank 5 into acidic electrolytic water, and the acidic electrolytic water circulates in the flow path without being discharged from soft water tank regeneration circulation flow path 39. Accordingly, the inside of soft water tank regeneration circulation flow path 39 after the end of the regeneration process is filled with high hardness water containing the hardness components released from first soft water tank 3 and second soft water tank 5. The hardness of the high hardness water is significantly higher than the hardness (for example, 450 ppm) of the raw water, and may increase to, for example, about 2000 ppm. When the process proceeds to the water softening process in a state where the high hardness water remains in water softening apparatus 1, the high hardness water or the mixed water of the raw water and the high hardness water is discharged from water intake port 7. Therefore, in a case where the user of water softening apparatus 1 executes the water softening process after the end of the regeneration process, there is a problem that not only soft water cannot be obtained immediately after the start of the water softening process but also water having hardness higher than that of raw water is obtained.

Furthermore, the high hardness water is distributed through weakly acidic cation exchange resin 33 in first soft water tank 3 and second soft water tank 5, and thus, the water containing the hardness components is distributed again even though the hardness components adsorbed in the regeneration process are replaced with the hydrogen ions and the regeneration is performed. Therefore, the hydrogen ions filled by the regeneration treatment that has been performed with great effort and the hardness components cause the exchange reaction, and the hardness components are adsorbed to weakly acidic cation exchange resin 33 again. Accordingly, the amount of hydrogen ions available for softening the raw water is reduced, and the water softening performance is deteriorated. In order to solve these problems, the regeneration flow path washing process for draining the high hardness water in soft water tank regeneration circulation flow path 39 is performed.

In the regeneration flow path washing process, controller 15 closes opening and closing valves 21 to 23 and opens opening and closing valves 18 to 20. Furthermore, controller 15 brings flow path switching valve 24 into a connection state where water can be sent from flow path 28 to neutralization tank bypass flow path 42, brings flow path switching valve 25 into a connection state where water can be sent to soft water tank bypass flow path 44, brings flow path switching valve 26 into a connection state where water can be sent from neutralization tank bypass flow path 42 to first supply flow path 35, and brings flow path switching valve 27 into a connection state where water can be sent to second supply flow path 36. That is, first soft water tank 3 and second soft water tank 5 are communicably connected to each other, second soft water tank 5 and drainage port 13 are communicably connected to each other, and electrolytic tank 9 and drainage port 13 are communicably connected to each other. Controller 15 stops the drainage of capture unit drainage port 14. As a result, as illustrated in Fig. 4, first drainage flow path 46 and second drainage flow path 47 are formed. Note that, at this time, operations of electrodes 41, first water pump 11, and second water pump 12 are stopped.

In the regeneration flow path washing process, specifically, opening and closing valve 19 is opened, and thus, the raw water flows into first drainage flow path 46 and second drainage flow path 47 from the outside.

In first drainage flow path 46, the high hardness water in flow path 28, first collection flow path 37, first water pump 11, electrolytic tank 9, and first supply flow path 35 is swept away by the pressure of the flowed raw water, and flows into drainage flow path 54. The high hardness water having flowed into drainage flow path 54 is discharged from drainage port 13 to the outside of the apparatus.

In second drainage flow path 47, the high hardness water in flow path 28, first soft water tank 3, neutralization tank bypass flow path 42, second soft water tank 5, and first supply flow path 35 is swept away by the pressure of the raw water that has flowed in, and flows into drainage flow path 54. The high hardness water having flowed into drainage flow path 54 is discharged from drainage port 13 to the outside of the apparatus.

By doing this, by the regeneration flow path washing process, the high hardness water in first drainage flow path 46 and second drainage flow path 47, which are main remaining portions of the high hardness water after the regeneration process, can be replaced with the raw water while the distribution of the high hardness water to the neutralization tank is suppressed. Therefore, in the regeneration flow path washing process, adsorption of hydrogen ions to weakly basic anion exchange resin 34 in the neutralization tank can be suppressed, so that consumption of filled hydroxide ions can be suppressed, and neutralization performance can be maintained. Therefore, it is possible to suppress a decrease in water softening performance caused by high hardness water.

Note that controller 15 supplies the raw water to each flow path such that the flow rate of the raw water flowing through second drainage flow path 47 is larger than the flow rate of the raw water flowing through first drainage flow path 46.

As a result, it is possible to preferentially replace the high hardness water in second drainage flow path 47, which is a flow path including the soft water tank used in the water softening process and is a flow path in which drainage of the high hardness water in the flow path is essential, with the raw water. Accordingly, it is possible to suppress the decrease in water softening performance caused by the high hardness water when the water softening process is started. Furthermore, since the water amount discharged from first drainage flow path 46, which is a flow path that is not used in the water softening process and is a flow path that has little influence on the water softening process even though the high hardness water remains, can be reduced, wasteful drainage can be prevented, and the water amount required for the regeneration flow path washing process can be suppressed.

Furthermore, thus, the high hardness water is discharged to the outside of the apparatus by the flow path not including the neutralization tank. That is, the water can be drained while the hardness components in the high hardness water stored in soft water tank regeneration circulation flow path 39 are inhibited from being adsorbed to weakly basic anion exchange resin 34 in the neutralization tank, so that it is possible to prevent a decrease in water softening performance caused by the high hardness water generated during the regeneration process and maintain the water softening performance.

Then, in water softening apparatus 1, in a case where the time zone specified by controller 15 is reached, in a case where the regeneration flow path washing process exceeds a certain time (for example, 1 minute), or in a case where the amount of water passing through the regeneration flow path washing process exceeds a certain value, the regeneration flow path washing process is ended, and the electrolytic tank washing process is executed.

Note that, in a case where the user desires to obtain soft water during the regeneration flow path washing process, by opening a faucet (not illustrated) or the like connected to water softening apparatus 1, the raw water passes through bypass flow path 53 from inlet port 2 and flows out from water intake port 7. Therefore, the raw water can be used without waiting for the end of the regeneration flow path washing process.

### <18.4 Electrolytic tank washing process>

Next, an operation of water softening apparatus 1 in the electrolytic tank washing process will be sequentially described with reference to Fig. 5 and a field of "DURING ELECTROLYTIC TANK WASHING" in Fig. 7.

In the regeneration process, when electrolytic tank 9 is operating, the hardness components (calcium ions or magnesium ions) in the water is precipitated as a solid (scale) on the cathode. Since the precipitate deposited on the cathode is a non-conductor, the operating voltage of electrolytic tank 9 is increased, and the power consumption during the regeneration process is increased. It is necessary to perform the electrolytic tank washing process for removing the precipitates precipitated on the cathode.

In the electrolytic tank washing process, controller 15 opens opening and closing valves 18 to 22 and closes opening and closing valve 23. Furthermore, controller 15 brings flow path switching valve 24 into a connection state where water can be sent from flow path 28 to flow path 29, brings flow path switching valve 25 into a connection state where water can be sent to soft water tank bypass flow path 44, brings flow path switching valve 26 into a connection state where water can be sent to first supply flow path 35, and brings flow path switching valve 27 into a connection state where water can be sent to second supply flow path 36. That is, first soft water tank 3 and electrolytic tank 9 communicate with each other, electrolytic tank 9 and drainage port 13 communicate with each other, and electrolytic tank 9 and capture unit drainage port 14 communicate with each other. As a result, as illustrated in Fig. 5, first drainage flow path 46 and third drainage flow path 50 are formed.

Specifically, in the electrolytic tank washing process, when controller 15 opens opening and closing valve 19, the raw water flows into first drainage flow path 46 and third drainage flow path 50 from the outside.

In first drainage flow path 46, the introduced raw water flows through flow path 28, first collection flow path 37, and first water pump 11, and flows into electrolytic tank 9.

On the other hand, in third drainage flow path 50, the flowed raw water flows through flow path 28, first soft water tank 3, second collection flow path 38, and second water pump 12, and flows into electrolytic tank 9.

In the electrolytic tank washing process, controller 15 energizes the electrodes so that the cathode has a higher potential (reverse electrolysis) than the anode. Thus, electrolytic tank 9 electrolyzes the raw water flowed into the electrolytic tank to generate the alkaline electrolytic water near the anode and the acidic electrolytic water near the cathode.

At this time, the precipitate deposited on the cathode can be dissolved by the acidic electrolytic water generated on the cathode. Accordingly, it is possible to suppress a decrease in electrolysis performance due to adhesion of the precipitates to surfaces of electrodes 41.

The alkaline electrolytic water generated at the anode is distributed through first supply flow path 35, flows into drainage flow path 54, and is discharged from drainage port 13 to the outside of the apparatus.

On the other hand, the acidic electrolytic water generated at the cathode dissolves the precipitates precipitated at the cathode, is distributed through second supply flow path 36, and flows into capture unit 10. Since the acidic electrolytic water having flowed into capture unit 10 can dissolve the precipitate adhering to capture unit 10, capture unit 10 can be preliminarily washed. Accordingly, a time required for the capture unit washing process which is a next process can be shortened. Then, the acidic electrolytic water is discharged to the outside of the apparatus from capture unit drainage port 14 provided below capture unit 10.

That is, in the electrolytic tank washing process, the removal of the precipitates in electrolytic tank 9 and the removal of the precipitates in capture unit 10 can be simultaneously performed, and a time required from the end of the regeneration process to the start of the water softening process can be shortened.

Then, in water softening apparatus 1, in a case where the time zone specified by controller 15 is reached or in a case where the electrolytic tank washing process exceeds a certain period of time (for example, 5 minutes), the electrolytic tank washing process is ended, and the capture unit washing process is executed.

Note that, in third drainage flow path 50, since the raw water passes through first soft water tank 3, the acidified water passes through capture unit 10. Thus, capture unit 10 becomes acidic, and the precipitates adhering to capture unit 10 are dissolved by the acidic water. Accordingly, since capture unit 10 can be preliminarily washed, a time required for the capture unit washing process which is a next process can be shortened. That is, the removal of the precipitates in electrolytic tank 9 and the removal of the precipitates in capture unit 10 can be simultaneously performed, and a time required from the end of the regeneration process to the start of the water softening process can be shortened.

Note that, in a case where the user desires to obtain soft water during the electrolytic tank washing process, by opening a faucet (not illustrated) or the like connected to water softening apparatus 1, the raw water passes through bypass flow path 53 from inlet port 2 and flows out from water intake port 7. Therefore, the raw water can be used without waiting for the end of the electrolytic tank washing process.

### <18.5 Capture unit washing process>

Next, an operation of water softening apparatus 1 in the capture unit washing process will be sequentially described with reference to Fig. 6 and a field of "DURING CAPTURE UNIT WASHING" in Fig. 7.

In the regeneration process, the high hardness water containing the hardness components released from first soft water tank 3 and second soft water tank 5 flows into electrolytic tank 9. The hardness component moves to the cathode side during electrolysis, reacts with hydroxide ions generated at the cathode, and becomes a precipitate. A part of the precipitated precipitates is contained in the alkaline electrolytic water released from electrolytic tank 9, is distributed through second supply flow path 36, and is captured by capture unit 10. Therefore, since the precipitate gradually accumulates in capture unit 10 during the regeneration process, the pressure loss caused by capture unit 10 gradually increases, and the flow rate of the alkaline electrolytic water flowing through neutralization tank regeneration circulation flow path 40 gradually decreases. Accordingly, when the precipitates are left, a time required for regenerating weakly basic anion exchange resin 34 in first neutralization tank 4 and second neutralization tank 6 is extended, and the filling of weakly basic anion exchange resin 34 with the hydroxide ions may not be completed at the end. Thus, it is necessary to perform the capture unit washing process for removing the precipitates adhering to or precipitated on capture unit 10.

In the capture unit washing process, controller 15 opens opening and closing valve 18, opening and closing valve 19, opening and closing valve 22, and opening and closing valve 23, and closes opening and closing valve 20 and opening and closing valve 21. Furthermore, controller 15 brings flow path switching valve 24 into a connection state where water can be sent from flow path 28 to flow path 29, brings flow path switching valve 25 into a connection state where water can be sent from flow path 29 to flow path 30, brings flow path switching valve 26 into a connection state where water can be sent from flow path 30 to flow path 31, and brings flow path switching valve 27 into a connection state where water can be sent from flow path 31 to second supply flow path 36. That is, first soft water tank 3 and first neutralization tank 4 are communicatively connected to each other, first neutralization tank 4 and second soft water tank 5 are communicatively connected to each other, second soft water tank 5 and second neutralization tank 6 are communicatively connected to each other, and second neutralization tank 6 and capture unit drainage port 14 are communicatively connected to each other. As a result, as illustrated in Fig. 6, fourth drainage flow path 52 is formed.

In the capture unit washing process, specifically, when controller 15 opens opening and closing valve 19, the raw water flows into flow path 28 from the outside. The flowed raw water are distributed through flow path 28, first soft water tank 3, flow path 29, first neutralization tank 4, flow path 30, second soft water tank 5, flow path 31, second neutralization tank 6, and second supply flow path 36, and flows into capture unit 10.

In capture unit 10, the neutral soft water flows in from a side opposite to the water flowing direction of the regeneration process. That is, backwashing of capture unit 10 is performed by the flowed neutral soft water. At this time, since a part of the precipitate fixed or precipitated on capture unit 10 is dissolved in advance by the electrolytic tank washing process, capture unit 10 can be easily washed with neutral soft water. The neutral soft water containing the precipitates is discharged to the outside of the apparatus from capture unit drainage port 14 provided below capture unit 10.

By doing this, since capture unit 10 can be backwashed, the precipitates remaining in capture unit 10 can be removed. Therefore, the blocking of capture unit 10 can be suppressed, and the pressure loss caused by capture unit 10 can be reduced when the regeneration process is performed again. As a result, a reduction in a flow rate of neutralization tank regeneration circulation flow path 40, which is a regeneration flow path including capture unit 10, can be suppressed, and the flow rate of the alkaline electrolytic water can be secured. As a result, regeneration performance can be secured.

Then, in water softening apparatus 1, in a case where the time zone specified by controller 15 is reached or in a case where the capture unit washing process exceeds a certain period of time (for example, 5 minutes), the capture unit washing process is ended, and the water softening process is executed.

Note that, a flow path from inlet port 2 to second neutralization tank 6 is the same as the flow path in the water softening process. That is, fourth drainage flow path 52 is used, and thus, second neutralization tank 6, which is a neutralization tank at a last stage in the water softening process, is filled with the softened water. Accordingly, the water softening process is performed after performing the capture unit washing process by using fourth drainage flow path 52, the user of water softening apparatus 1 can obtain, from water intake port 7, the soft water subjected to the water softening treatment and having reduced hardness immediately after the start of the water softening process.

Note that, in a case where the user desires to obtain soft water during the capture unit washing process, by opening a faucet (not illustrated) or the like connected to water softening apparatus 1, the raw water passes through bypass flow path 53 from inlet port 2 and flows out from water intake port 7. Therefore, the raw water can be used without waiting for the end of the capture unit washing process.

As described above, in water softening apparatus 1, the water softening process, the regeneration process, the regeneration flow path washing process, the electrolytic tank washing process, and the capture unit washing process are repeatedly executed in this order. The capture unit washing process is performed immediately before the water softening process, and thus, the neutralization tank at the last stage in the water softening process is filled with the softened water. Accordingly, when the user of water softening apparatus 1 opens the faucet, the discharge of the high hardness water from water intake port 7 can be suppressed, and the soft water having stable hardness can be provided immediately after the start of the water softening process.

Furthermore, by performing the electrolytic tank washing process after performing the regeneration flow path washing process, since the high hardness water is already discharged to the outside of the apparatus at the time of polarity inversion in the electrolytic tank washing process, it is possible to suppress the possibility that the high hardness water is electrolyzed. Therefore, it is possible to suppress electrolysis of water having high hardness, and it is possible to suppress generation of a large amount of scale in a flow path through which alkaline electrolytic water is supplied at the time of polarity inversion.

From above, in accordance with water softening apparatus 1 according to the exemplary embodiment, the following effects can be obtained.
(1) Water softening apparatus 1 includes a soft water tank that softens raw water containing a hardness component with weakly acidic cation exchange resin 33 to generate acidic soft water, a neutralization tank that neutralizes the pH of the acidic soft water passing through the soft water tank with weakly basic anion exchange resin 34 to generate neutralized soft water, and controller 15 that controls a regeneration process that is a process of regenerating at least one of weakly acidic cation exchange resin 33 and weakly basic anion exchange resin 34. Controller 15 includes adsorption amount specification unit 55 that specifies the hardness component adsorption amount in the soft water tank from the hardness of the raw water, the amount of the raw water passed through the soft water tank, and the hardness of the water after passing through the soft water tank, and controls execution of the regeneration process based on the hardness component adsorption amount specified by adsorption amount specification unit 55 at the time of the regeneration process so as to continue the regeneration process in a case where the hardness component adsorption amount is more than or equal to a reference value and to end the regeneration process in a case where the hardness component adsorption amount is less than the reference value.

According to such a configuration, the regeneration process can be ended at the end of regeneration when the exchange reaction efficiency between the hardness component adsorbed to weakly acidic cation exchange resin 33 and hydrogen ions in the acidic electrolytic water decreases. Therefore, it is possible to suppress prolongation of the regeneration process and to shorten the regeneration time.

(2) Water softening apparatus 1 may further include electrolytic tank 9 that generates acidic electrolytic water to be used for regenerating weakly acidic cation exchange resin 33 and alkaline electrolytic water to be used for regenerating weakly basic anion exchange resin 34. The reference value may be a value when the exchange reaction efficiency between the hardness component adsorbed in the soft water tank and hydrogen ions in the acidic electrolytic water during the regeneration process is at least 70% or more.

Moreover, according to such a configuration, in a case where the exchange reaction efficiency is less than 70%, the regeneration process can be ended. That is, the regeneration process can be performed only in a region where the reactivity between the hardness component and the hydrogen ion is high, and weakly acidic cation exchange resin 33 is not regenerated in a region where the reactivity is low, so that the regeneration time can be shortened.

(3) Water softening apparatus 1 may further include first ion concentration measurement unit 56 that measures the ion concentration of the acidic electrolytic water flowing into the soft water tank during the regeneration process, and second ion concentration measurement unit 57 that measures the ion concentration of the acidic electrolytic water flowing out of the soft water tank during the regeneration process. Controller 15 may include storage unit 58 that stores the first ion concentration information measured by first ion concentration measurement unit 56 and the second ion concentration information measured by second ion concentration measurement unit 57, and calculation unit 59 that calculates a difference between the first ion concentration information and the second ion concentration information, and may calculate the exchange reaction efficiency on the basis of a calculation result of calculation unit 59.

According to such a configuration, it is possible to further measure the ion concentration of the acidic electrolytic water before and after the soft water tank, monitor the ion concentration information based on the measured value of the ion concentration, and calculate the exchange reaction efficiency in real time.

(4) In water softening apparatus 1, calculation unit 59 may calculate a differential ion concentration value that is a difference between the first ion concentration information and the second ion concentration information at a predetermined reference time. Controller 15 may continue the regeneration process in a case where the exchange reaction efficiency calculated based on the differential ion concentration value is more than or equal to the second reference value, and may end the regeneration process in a case where the exchange reaction efficiency is less than the second reference value.

As a result, it is possible to further grasp the timing at which the exchange reaction efficiency between the hardness component and the hydrogen ions decreases in real time and then control the continuation and end of the regeneration process. Therefore, it is possible to avoid performing the regeneration process in a period in which the exchange reaction efficiency is low, which is a factor of prolonging the regeneration time.

From above, the present disclosure has been described based on the exemplary embodiments. It is understood by those skilled in the art that the exemplary embodiment is merely an example, that various modifications can be made to each component or combination of each treatment process, and that such modifications are also within the scope of the present disclosure.

Furthermore, a combination of each component or each treatment process of the present exemplary embodiment and each component or each treatment process of other exemplary embodiments is also possible, and it is understood by those skilled in the art that it is within the scope of the present disclosure.

Note that, in water softening apparatus 1 according to the present exemplary embodiment, the regeneration flow path washing process, the electrolytic tank washing process, and the capture unit washing process are executed in this order after the end of the regeneration process, but the present disclosure is not limited thereto. For example, the regeneration flow path washing process may be performed after the electrolytic tank washing process, and the capture unit washing process may be performed as a preceding process of the water softening process. Even if the inside of the apparatus is washed in such order, the precipitates of electrolytic tank 9 and capture unit 10 can be removed, and soft water can be filled in second neutralization tank 6 immediately before the water softening process.

Furthermore, in the present exemplary embodiment, in a case where the hardness component adsorption amount is less than the reference value during the regeneration process, the regeneration process is ended, but the present disclosure is not limited thereto. Depending on the status of use of water softening apparatus 1, the ion adsorption capacity of weakly acidic cation exchange resin 33 may decrease, or a deviation may occur between the calculated hardness adsorption amount and the actual hardness adsorption amount, so that an error may occur between the exchange reaction efficiency calculated by measurement and the actual exchange reaction efficiency. When the regeneration process is performed with deviation (error), there is a possibility that the regeneration process is performed even in a region where the exchange reaction efficiency decreases, and there is a possibility that the regeneration process is ended although the resin is actually regenerated with high exchange reaction efficiency.

Therefore, a regeneration process of additionally regenerating weakly acidic cation exchange resin 33 may be incorporated in a series of operations of water softening apparatus 1 including the regeneration process. Specifically, even in a case where the hardness component adsorption amount is less than the reference value, control to continue the regeneration process may be performed m times out of n times (n is an integer of 2 or more, m is an integer of 1 or more, and n > m), and additional regeneration may be performed. For example, complete regeneration of the resin may be performed once during the five regeneration processes.

Note that the additional regeneration is a regeneration process in which an operation is performed until the amount of the hardness component adsorbed to weakly acidic cation exchange resin 33 reaches approximately 0%. As a result, even in a case where water softening apparatus 1 is used for a long period of time, and weakly acidic cation exchange resin 33 is deteriorated and the ion exchange capacity is lowered, the amount of the hardness component adsorbed to weakly acidic cation exchange resin 33 by regeneration can be reduced, and the possibility that an error occurs in the calculation of the amount of the hardness adsorbed and the exchange reaction efficiency can be reduced.

### (Second exemplary embodiment)

A second exemplary embodiment of the present disclosure is described next.

The present disclosure solves the above-described first conventional problem, and provides a water softening apparatus capable of reducing the time required to complete the regeneration process of the ion exchange resin.

In order to achieve this object, the water softening apparatus according to the present exemplary embodiment includes a soft water tank that softens raw water containing a hardness component with a weakly acidic cation exchange resin to generate acidic soft water, a neutralization tank that neutralizes the pH of the acidic soft water having passed through the soft water tank with a weakly basic anion exchange resin to generate neutralized soft water, an electrolytic tank that generates acidic electrolytic water to be used for regenerating the weakly acidic cation exchange resin and alkaline electrolytic water to be used for regenerating the weakly basic anion exchange resin, and a controller that controls a regeneration process that is a process of regenerating at least one of the weakly acidic cation exchange resin and the weakly basic anion exchange resin. The controller includes: an adsorption amount specification unit that specifies a hardness component adsorption amount to the soft water tank from hardness of the raw water, a water amount of the raw water passed through the soft water tank, and hardness of water after passing through the soft water tank; and a main regeneration time calculation unit that calculates, based on the hardness component adsorption amount, a main regeneration time required for the regeneration process necessary for removal of a hardness component of the hardness component adsorption amount, and determines a time taken for the regeneration process based on a comparison between a predetermined reference time and the main regeneration time.

According to such a configuration, it is possible to provide a water softening apparatus capable of shortening the time required to complete the regeneration process of the ion exchange resin.

Hereinafter, the second exemplary embodiment of the present disclosure will be described with reference to the drawings. Note that, the following exemplary embodiments are examples embodying the present disclosure, and do not limit the technical scope of the present disclosure. Furthermore, each drawing described in the exemplary embodiment is a schematic diagram, and the ratio of the size and the thickness of each component in each drawing does not necessarily reflect the actual dimensional ratio.

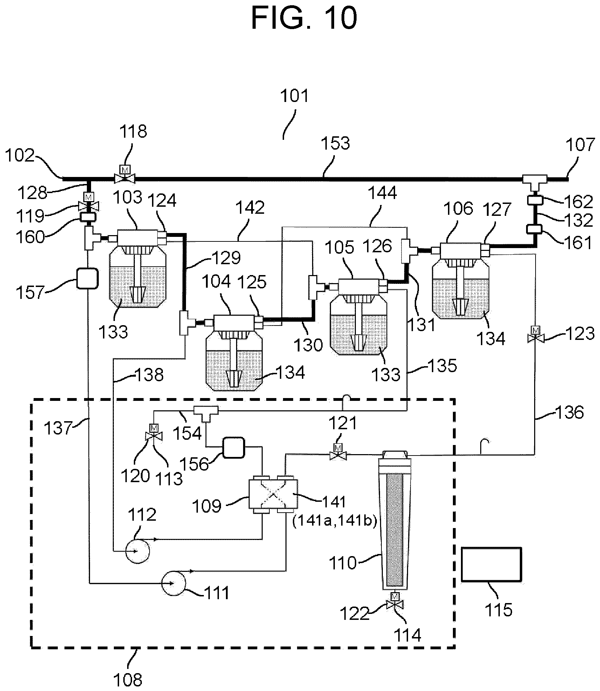

With reference to Fig. 10, water softening apparatus 101 according to the second exemplary embodiment of the present disclosure will be described. Fig. 10 is a conceptual diagram illustrating a configuration of water softening apparatus 101 according to the second exemplary embodiment of the present disclosure. Note that Fig. 10 conceptually illustrates each element of water softening apparatus 101.

### [1. Overall configuration]

Water softening apparatus 101 is an apparatus that generates neutral soft water from raw water containing a hardness component supplied from the outside. Note that the raw water is water (water to be treated) introduced into the apparatus from inlet port 102, and is, for example, city water or well water. The raw water includes hardness components (for example, calcium or magnesium ions). By performing the water softening treatment using water softening apparatus 101, neutral soft water with reduced hardness is obtained, and soft water can be used even in an area where the hardness of raw water is high.

Specifically, as illustrated in Fig. 10, water softening apparatus 101 includes inlet port 102, soft water tank, neutralization tank, water intake port 107, regeneration device 108, and controller 115.

Furthermore, water softening apparatus 101 includes drainage port 113, a plurality of opening and closing valves (opening and closing valves 118 to 123), and a plurality of flow path switching valves (flow path switching valves 124 to 127). Details of these will be described later.

### <2. Inlet port and water intake port>

Inlet port 102 is connected to a source of raw water. Inlet port 102 is an opening for introducing raw water into water softening apparatus 101.

Water intake port 107 is an opening that supplies the water distributed in water softening apparatus 101 and subjected to the water softening treatment to the outside of the apparatus. In water softening apparatus 101, the water after the water softening treatment can be taken out from water intake port 107 by the pressure of the raw water flowing in from inlet port 102.

In water softening apparatus 101, in the water softening process of performing the water softening treatment, raw water supplied from the outside flows through inlet port 102, flow path 128, first soft water tank 103, flow path 129, first neutralization tank 104, flow path 130, second soft water tank 105, flow path 131, second neutralization tank 106, flow path 132, and water intake port 107 in this order, and is discharged as neutral soft water.

### <3. Soft water tank>

In the soft water tanks (first soft water tank 103 and second soft water tank 105), raw water containing hardness components is softened by the action of weakly acidic cation exchange resin 133. Specifically, in the soft water tank, cations (calcium ions or magnesium ions), which are hardness components contained in flowing water (raw water), are exchanged for hydrogen ions, so that the hardness of the raw water decreases and the raw water is softened. Water softening apparatus 101 according to the present exemplary embodiment includes first soft water tank 103 and second soft water tank 105 as soft water tanks.

First soft water tank 103 softens the raw water flowing in from inlet port 102. First soft water tank 103 includes flow path switching valve 124. Details of the flow path switching valve will be collectively described later.

Second soft water tank 105 softens the water flowing through first neutralization tank 104 described later. Second soft water tank 105 includes flow path switching valve 126.

Each of first soft water tank 103 and second soft water tank 105 is filled with weakly acidic cation exchange resin 133.

Weakly acidic cation exchange resin 133 is an ion exchange resin having a hydrogen ion at the terminal of the functional group. Weakly acidic cation exchange resin 133 adsorbs cations (calcium ions or magnesium ions), which are hardness components contained in the raw water to be passed, and releases hydrogen ions. The soft water treated with weakly acidic cation exchange resin 133 contains a large amount of hydrogen ions exchanged for hardness components. That is, the soft water flowing out of first soft water tank 103 and second soft water tank 105 is soft water (acidic soft water) acidified by containing a large amount of hydrogen ions.

Since the terminal of the functional group of weakly acidic cation exchange resin 133 is a hydrogen ion, weakly acidic cation exchange resin 133 can be regenerated using acidic electrolytic water in the regeneration treatment described later. At this time, cations, which are hardness components taken in during the water softening treatment, are released from weakly acidic cation exchange resin 133.

Weakly acidic cation exchange resin 133 is not particularly limited, and general-purpose ones can be used, and examples thereof include those having a carboxyl group (-COOH) as an exchange group. Furthermore, a hydrogen ion (H⁺) as a counter ion of a carboxyl group may be a cation such as a metal ion or an ammonium ion (NH₄⁺).

### <4. Neutralization tank>

In the neutralization tanks (first neutralization tank 104 and second neutralization tank 106), the pH (hydrogen ion concentration index) of soft water (acidified soft water) containing hydrogen ions discharged from the soft water tank is neutralized by the action of weakly basic anion exchange resin 134 to obtain neutral soft water. Specifically, since the neutralization tank adsorbs hydrogen ions contained in soft water from the soft water tank together with anions (negative ions), the pH of the soft water increases, and neutral soft water can be obtained. Water softening apparatus 101 according to the present exemplary embodiment includes first neutralization tank 104 and second neutralization tank 106 as neutralization tanks.

First neutralization tank 104 neutralizes the acidic soft water having flowed through first soft water tank 103. First neutralization tank 104 includes flow path switching valve 125.

Second neutralization tank 106 neutralizes the acidic soft water having flowed through second soft water tank 105. Second neutralization tank 106 includes flow path switching valve 127.

First neutralization tank 104 and second neutralization tank 106 are each filled with weakly basic anion exchange resin 134.

Weakly basic anion exchange resin 134 neutralizes the hydrogen ions contained in the water to be passed to generate the neutral water. Weakly basic anion exchange resin 134 can be regenerated using alkaline electrolytic water in a regeneration treatment to be described later.

Weakly basic anion exchange resin 134 is not particularly limited, and general-purpose resins can be used, and examples thereof include those in a free base form.

### <5. Regeneration device>

Regeneration device 108 is a device that regenerates weakly acidic cation exchange resin 133 filled in first soft water tank 103 and second soft water tank 105, and regenerates weakly basic anion exchange resin 134 filled in first neutralization tank 104 and second neutralization tank 106.

Regeneration device 108 includes electrolytic tank 109, capture unit 110, first water pump 111, and second water pump 112. In regeneration device 108, first supply flow path 135, second supply flow path 136, first collection flow path 137, and second collection flow path 138 are connected to second soft water tank 105, second neutralization tank 106, flow path 128, and flow path 129, respectively. Details of each flow path will be described later. Note that first supply flow path 135, second supply flow path 136, first collection flow path 137, second collection flow path 138, neutralization tank bypass flow path 142, and soft water tank bypass flow path 144 form soft water tank regeneration circulation flow path 139 and neutralization tank regeneration circulation flow path 140 described later.

### <5.1. Electrolytic tank>

Electrolytic tank 109 electrolyzes water that has entered (water supplied from inlet port 102) by using a pair of electrodes 141 (electrode 141a and electrode 141b) provided inside to generate acidic electrolytic water and alkaline electrolytic water, and discharges the acidic electrolytic water and the alkaline electrolytic water. More specifically, in electrode 141a serving as an anode during electrolysis in the regeneration process, hydrogen ions are generated by electrolysis, and acidic electrolytic water is generated. Furthermore, in electrode 141b serving as a cathode during electrolysis in the regeneration process, hydroxide ions are generated by electrolysis, and alkaline electrolytic water is generated. Then, electrolytic tank 109 supplies the acidic electrolytic water to first soft water tank 103 and second soft water tank 105 via first supply flow path 135 and neutralization tank bypass flow path 142, and supplies the alkaline electrolytic water to first neutralization tank 104 and second neutralization tank 106 via second supply flow path 136 and soft water tank bypass flow path 144. Although details will be described later, the acidic electrolytic water generated by electrolytic tank 109 is used for the regeneration of weakly acidic cation exchange resin 133 in first soft water tank 103 and second soft water tank 105, and the alkaline electrolytic water generated by electrolytic tank 109 is used for the regeneration of weakly basic anion exchange resin 134 in first neutralization tank 104 and second neutralization tank 106. Note that electrolytic tank 109 is configured such that an energization state to the pair of electrodes 141 can be controlled by controller 115 described later.

### <5.2 Water pump>

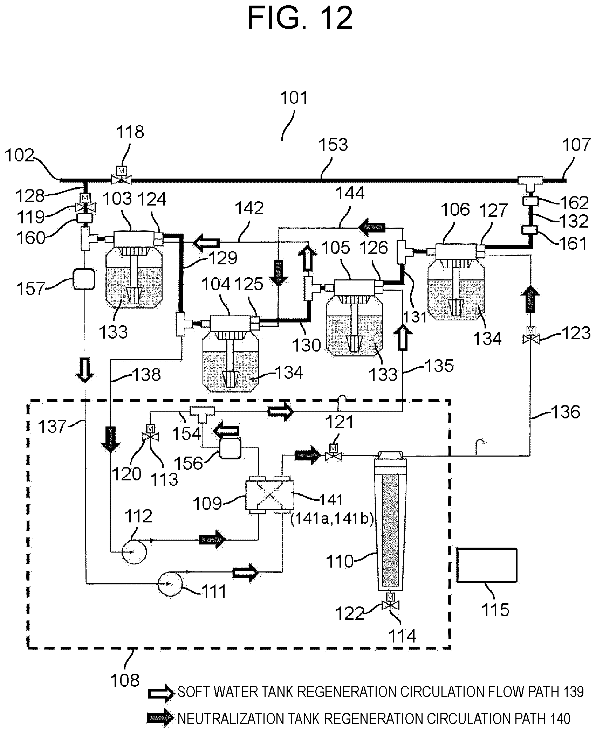

First water pump 111 is a device that distributes the acidic electrolytic water through soft water tank regeneration circulation flow path 139 (see Fig. 12) during the regeneration treatment by regeneration device 108. First water pump 111 is provided in first collection flow path 137 that communicatively connects first soft water tank 103 and electrolytic tank 109. Such an arrangement is adopted in order to facilitate circulation of the acidic electrolytic water to soft water tank regeneration circulation flow path 139 only by first water pump 111.

Second water pump 112 is a device that distributes the alkaline electrolytic water through neutralization tank regeneration circulation flow path 140 (see Fig. 12). Second water pump 112 is provided in second collection flow path 138 that communicatively connects first neutralization tank 104 and electrolytic tank 109. Such an arrangement is adopted in order to facilitate the circulation of the alkaline electrolytic water to neutralization tank regeneration circulation flow path 140 only by second water pump 112.

First water pump 111 and second water pump 112 are connected to controller 115 described later so as to be able to communicate with each other in a wireless or wired manner.

### <5.3 Capture unit>

Capture unit 110 is provided in second supply flow path 136 that communicatively connects electrolytic tank 109 and second neutralization tank 106.

Capture unit 110 captures precipitates contained in the alkaline electrolytic water fed from electrolytic tank 109. The precipitate is a reaction product generated when a hardness component, which is a cation released from first soft water tank 103 and second soft water tank 105 during the regeneration treatment, reacts with alkaline electrolytic water in electrolytic tank 109. More specifically, while the electrolysis of water is performed in electrolytic tank 109, the hardness components (for example, calcium ions or magnesium ions) released from first soft water tank 103 and second soft water tank 105 during the regeneration treatment move to the cathode (electrode 141b) side. Since alkaline electrolytic water is generated on the cathode side, the hardness component and the alkaline electrolytic water react with each other to form a precipitate. For example, in a case where the hardness components are calcium ions, a reaction in which calcium carbonate is generated or calcium hydroxide is generated occurs by mixing the calcium ions with the alkaline electrolytic water. Precipitates derived from the hardness component are captured as precipitates by capture unit 110 provided in second supply flow path 136. Then, the precipitates derived from the hardness component are captured by capture unit 110, so that the precipitate can be suppressed from flowing into second neutralization tank 106 and accumulating. Therefore, in a case where the water softening treatment is resumed after the end of the regeneration treatment, it is possible to suppress an increase in hardness of soft water fed from second neutralization tank 106 due to ionization caused by a reaction between a precipitate deposited in second neutralization tank 106 and hydrogen ions released from first soft water tank 103 and second soft water tank 105.

Furthermore, in the regeneration treatment, the alkaline electrolytic water in which the precipitates derived from the hardness components has passed through capture unit 110 is distributed through second neutralization tank 106 and first neutralization tank 104, is then electrolyzed again in electrolytic tank 109, and is used again as the alkaline electrolytic water to regenerate weakly basic anion exchange resin 134. At this time, the hardness component contained in the acidic electrolytic water is reduced as compared with the case where capture unit 110 is not provided. That is, since the hardness of the acidic electrolytic water is reduced by capturing the precipitate by capture unit 110, the hardness components flowing into first soft water tank 103 and second soft water tank 105 can be reduced, and a decrease in the regeneration efficiency of weakly acidic cation exchange resin 133 can be suppressed.

Note that, the expression "the hardness components react" includes not only a state where all the hardness components react but also a state where the component that does not react or the component that does not exceed a solubility product is included.

The form of capture unit 110 is not limited as long as the precipitate generated by the reaction between the hardness component and the alkaline electrolytic water can be separated. Examples thereof include a form using a cartridge type filter, a filtration layer using a granular filter material, a cyclone type solid-liquid separator, a hollow fiber membrane, and the like.

As means generally used as the form of capture unit 110, a cartridge type filter can be exemplified. As the cartridge type filter, a deep filtration type such as a pincushion filter, a surface filtration type such as a pleated filter and a membrane filter, or a combination thereof can be used.

Capture unit 110 includes opening and closing valve 122 and capture unit drainage port 114.

Opening and closing valve 122 is a valve that controls drainage from capture unit 110, and is provided, for example, below capture unit 110. Opening and closing valve 122 is opened, and thus, water in capture unit 110 can be discharged from capture unit drainage port 114 to the outside of the apparatus.

Capture unit drainage port 114 is an opening through which the water in capture unit 110 is discharged to the outside of the apparatus. Opening and closing valve 122 provided upstream of capture unit drainage port 114 is opened, and thus, the water in capture unit 110 can be discharged from capture unit drainage port 114 to the outside of the apparatus.

### <6. Opening and closing valve and flow path switching valve>

A plurality of opening and closing valves (opening and closing valves 118 to 123) are provided in the respective flow paths, and switches between an "open" state and a "closed" state in the respective flow paths.

The plurality of opening and closing valves (opening and closing valve 118, opening and closing valve 119, opening and closing valve 121, and opening and closing valve 123) start or stop the flow of water to the respective flow paths by opening and closing the valves.

Opening and closing valve 120 and opening and closing valve 122 are opened at the time of a regeneration flow path washing process, an electrolytic tank washing process, and a capture unit washing process described later, and discharge the regenerated circulating water to the outside of the apparatus.

A plurality of flow path switching valves (flow path switching valves 124 to 127) are provided in first soft water tank 103, first neutralization tank 104, second soft water tank 105, and second neutralization tank 106, respectively. Each of the plurality of flow path switching valves includes three openings. A first opening is an inlet and outlet port through which water can flow in and out, a second opening is an inlet port that does not function as an outlet port but functions as an inlet port, and a third opening is an outlet port that does not function as an inlet port but functions as an outlet port. In each of the plurality of flow path switching valves, the inflow and outflow port is always "opened", and when one of the inlet port and the outflow port is "opened" depending on the water flow direction, the other is "closed". Flow path switching valves 124 to 127 are provided, and thus, the number of opening and closing valves required for each flow path in water softening apparatus 101 can be reduced. As a result, cost of water softening apparatus 101 can be reduced.

Furthermore, the plurality of opening and closing valves (opening and closing valves 118 to 123) and the plurality of flow path switching valves (flow path switching valves 124 to 127) are each connected to controller 115 to be described later so as to be able to communicate with each other in a wireless or wired manner.

### <7. Drainage port>

Drainage port 113 is an opening provided at an end of drainage flow path 154, and is an opening for discharging water in the apparatus to the outside of the apparatus in the regeneration path washing process and the electrolytic tank washing process. Opening and closing valve 120 is provided upstream of drainage port 113, and drainage from drainage port 113 can be performed by opening opening and closing valve 120.

### <8. Flow path>

Bypass flow path 153 is a flow path that communicatively connects inlet port 102 and water intake port 107, and opening and closing valve 118 is provided on the flow path. Due to bypass flow path 153, even in a case where any one of the regeneration process, the regeneration flow path washing process, the electrolytic tank washing process, and the capture unit washing process is performed, the user of water softening apparatus 101 can obtain raw water from water intake port 107.

### <9. Water softening flow path>

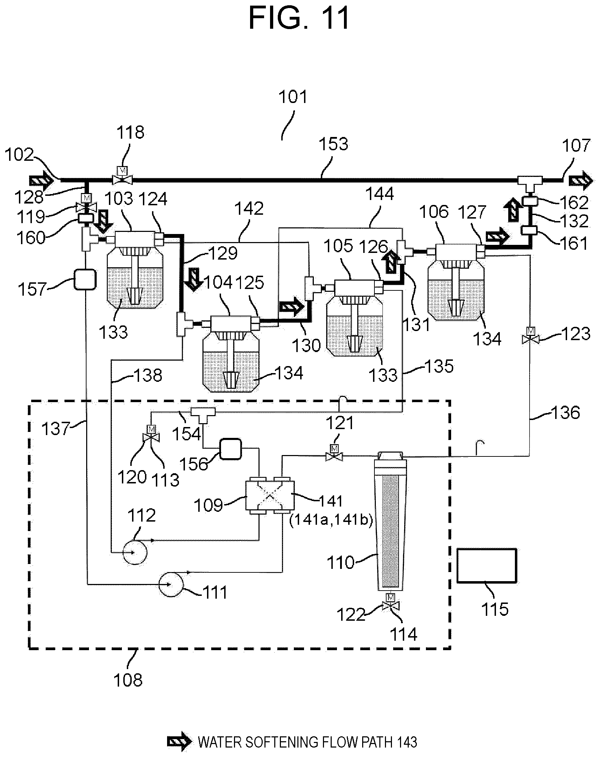

Water softening flow path 143 formed in the water softening process of water softening apparatus 101 will be described with reference to Fig. 11. Fig. 11 is a configuration diagram illustrating water softening flow path 143 of water softening apparatus 101.

Water softening flow path 143 (indicated by a hatched arrow in Fig. 11) is a flow path for softening raw water, and the raw water having flowed through water softening flow path 143 becomes neutral soft water and is discharged from water intake port 107 to the outside of the apparatus.

Water softening flow path 143 is formed by inlet port 102, flow path 128, first soft water tank 103, flow path 129, first neutralization tank 104, flow path 130, second soft water tank 105, flow path 131, second neutralization tank 106, flow path 132, and water intake port 107.

Flow path 128 is a flow path that connects inlet port 102 to first soft water tank 103. That is, flow path 128 is a flow path that guides the raw water containing the hardness components from inlet port 102 to first soft water tank 103.

Flow path 129 is a flow path that connects first soft water tank 103 to first neutralization tank 104. That is, flow path 129 is a flow path that guides the water softened in first soft water tank 103 to first neutralization tank 104.

Flow path 130 is a flow path that connects first neutralization tank 104 to second soft water tank 105. That is, flow path 130 is a flow path that guides the water neutralized in first neutralization tank 104 to second soft water tank 105.

Flow path 131 is a flow path that connects second soft water tank 105 to second neutralization tank 106. That is, flow path 131 is a flow path that guides the water softened in second soft water tank 105 to second neutralization tank 106.

Flow path 132 is a flow path connecting second neutralization tank 106 to water intake port 107. That is, flow path 132 is a flow path that guides the softened raw water from second neutralization tank 106 to water intake port 107.

As illustrated in Fig. 11, opening and closing valve 119 is installed on flow path 128 on the downstream side of inlet port 102 and on the upstream side of first soft water tank 103. Furthermore, opening and closing valve 118 is installed in bypass flow path 153 described above. Then, by closing opening and closing valve 118 and opening opening and closing valve 119, first soft water tank 103 and inlet port 102 are connected to communicate with each other. Furthermore, flow path switching valve 124 is switched so that first soft water tank 103 and first neutralization tank 104 communicate with each other, flow path switching valve 125 is switched so that first neutralization tank 104 and second soft water tank 105 communicate with each other, flow path switching valve 126 is switched so that second soft water tank 105 and second neutralization tank 106 communicate with each other, and flow path switching valve 127 is switched so that second neutralization tank 106 and water intake port 107 communicate with each other. As a result, water softening flow path 143 that communicatively connects inlet port 102 to flow path 128, first soft water tank 103, flow path 129, first neutralization tank 104, flow path 130, second soft water tank 105, flow path 131, second neutralization tank 106, flow path 132, and water intake port 107 is formed. At this time, opening and closing valve 120, opening and closing valve 121, and opening and closing valve 123 are closed.

### <10. Regeneration circulation flow path>

Next, soft water tank regeneration circulation flow path 139 and neutralization tank regeneration circulation flow path 140 formed at the time of the regeneration process of water softening apparatus 101 will be described with reference to Fig. 12. Fig. 12 is a configuration diagram illustrating soft water tank regeneration circulation flow path 139 and neutralization tank regeneration circulation flow path 140 of water softening apparatus 101.

First, soft water tank regeneration circulation flow path 139 will be described.

Soft water tank regeneration circulation flow path 139 is a flow path for regenerating first soft water tank 103 and second soft water tank 105 by circulating acidic electrolytic water during the regeneration process, and as illustrated in Fig. 12 (white arrow), water delivered by first water pump 111 flows through electrolytic tank 109, second soft water tank 105, and first soft water tank 103, and returns to electrolytic tank 109 to circulate.

Specifically, soft water tank regeneration circulation flow path 139 includes the respective flow paths of first supply flow path 135, neutralization tank bypass flow path 142, and first collection flow path 137, which connect electrolytic tank 109, second soft water tank 105, first soft water tank 103, and first water pump 111.

First supply flow path 135 is a flow path communicably connecting a downstream side of electrolytic tank 109 to a downstream side of second soft water tank 105, and is a flow path for supplying the acidic electrolytic water from electrolytic tank 109 to second soft water tank 105.

Neutralization tank bypass flow path 142 is a flow path that bypasses first neutralization tank 104 and communicatively connects an upstream side of second soft water tank 105 to a downstream side of first soft water tank 103, and is a flow path for supplying the acidic electrolytic water from second soft water tank 105 to first soft water tank 103.

First collection flow path 137 is a flow path that communicatively connects the upstream side of first soft water tank 103 to electrolytic tank 109, and is a flow path that collects acidic electrolytic water containing a hardness component that has passed through first soft water tank 103 and second soft water tank 105 into electrolytic tank 109. First collection flow path 137 is provided with first water pump 111.

Furthermore, soft water tank regeneration circulation flow path 139 is a flow path that introduces the acidic electrolytic water delivered from electrolytic tank 109 into first soft water tank 103 and second soft water tank 105 from the downstream sides of first soft water tank 103 and second soft water tank 105, respectively, and causes the acidic electrolytic water to flow out from the upstream side of each of first soft water tank 103 and second soft water tank 105 having a larger adsorption amount of hardness components than that on the downstream side of the soft water tank.

Note that, in the above description, the downstream side (or upstream side) refers to the downstream side (or upstream side) in the flow path at the time of the water softening treatment.

Next, neutralization tank regeneration circulation flow path 140 will be described.

Neutralization tank regeneration circulation flow path 140 is a flow path for regenerating first neutralization tank 104 and second neutralization tank 106 by circulating alkaline electrolytic water during the regeneration process, and as illustrated in Fig. 12 (black arrow), is a flow path in which water delivered by second water pump 112 circulates through electrolytic tank 109, second neutralization tank 106, and first neutralization tank 104, and returns to electrolytic tank 109 to circulate.

Specifically, neutralization tank regeneration circulation flow path 140 includes the respective flow paths of second supply flow path 136, soft water tank bypass flow path 144, and second collection flow path 138, which connect electrolytic tank 109, second neutralization tank 106, first neutralization tank 104, and second water pump 112.

Second supply flow path 136 is a flow path communicably connecting the downstream side of electrolytic tank 109 to a downstream side of second neutralization tank 106, and is a flow path for supplying the alkaline electrolytic water from electrolytic tank 109 to second neutralization tank 106. Capture unit 110, opening and closing valve 121, and opening and closing valve 123 are installed in second supply flow path 136.

Soft water tank bypass flow path 144 is a flow path that bypasses second soft water tank 105 and communicatively connects the upstream side of second neutralization tank 106 to the downstream side of first neutralization tank 104, and is a flow path for supplying alkaline electrolytic water from second neutralization tank 106 to first neutralization tank 104.

Second collection flow path 138 is a flow path that communicatively connects the upstream side of first neutralization tank 104 to electrolytic tank 109, and is a flow path that collects the alkaline electrolytic water having passed through first neutralization tank 104 and second neutralization tank 106 into electrolytic tank 109. Second collection flow path 138 is provided with second water pump 112.

### <11: Regeneration flow path washing flow path>

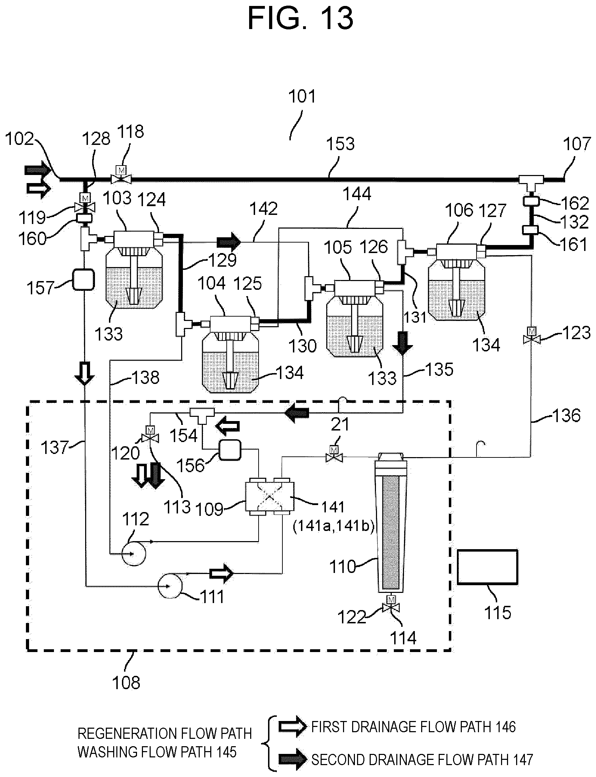

Next, regeneration flow path washing flow path 145 formed in the regeneration flow path washing process of water softening apparatus 101 will be described with reference to Fig. 13. Fig. 13 is a configuration diagram illustrating regeneration flow path washing flow path 145 of water softening apparatus 101.

Regeneration flow path washing flow path 145 is a flow path for discharging the high hardness water remaining in the flow path to the outside of the apparatus without flowing into first neutralization tank 104 and second neutralization tank 106 in a regeneration flow path washing process to be described later. Regeneration flow path washing flow path 145 includes first drainage flow path 146 and second drainage flow path 147.

As illustrated in Fig. 13 (white arrow), first drainage flow path 146 is constituted by flow paths connecting first water pump 111, electrolytic tank 109, opening and closing valve 120, and drainage port 113 from inlet port 102. Specifically, first drainage flow path 146 is a flow path that causes the raw water flowing in from inlet port 102 to flow through flow path 128, first collection flow path 137, first water pump 111, electrolytic tank 109, drainage flow path 154, opening and closing valve 120, and drainage port 113 in this order.

Drainage flow path 154 is a flow path connected to first supply flow path 135 at one end, and is a flow path connected to drainage port 113 at the other end. Opening and closing valve 120 is provided in drainage flow path 154, and the water in the flow path can be drained to the outside of the apparatus by opening opening and closing valve 120, and drainage from drainage port 113 can be stopped by closing opening and closing valve 120.

As illustrated in Fig. 13 (black arrow), second drainage flow path 147 is constituted by respective flow paths that communicatively connect inlet port 102 to first soft water tank 103, second soft water tank 105, opening and closing valve 120, and drainage port 113. Specifically, second drainage flow path 147 is a flow path that causes the raw water flowing in from inlet port 102 to flow through flow path 128, first soft water tank 103, neutralization tank bypass flow path 142, second soft water tank 105, first supply flow path 135, opening and closing valve 120, and drainage port 113 in this order.

Note that the flow rate of water flowing through second drainage flow path 147 is preferably controlled to be larger than the flow rate of water flowing through first drainage flow path 146. As a result, it is possible to preferentially replace the high hardness water in second drainage flow path 147 which is a flow path including the soft water tank used in the water softening process with the raw water. Accordingly, it is possible to suppress the influence of the high hardness water when the water softening process is started.

### <12. Electrolytic tank washing flow path>

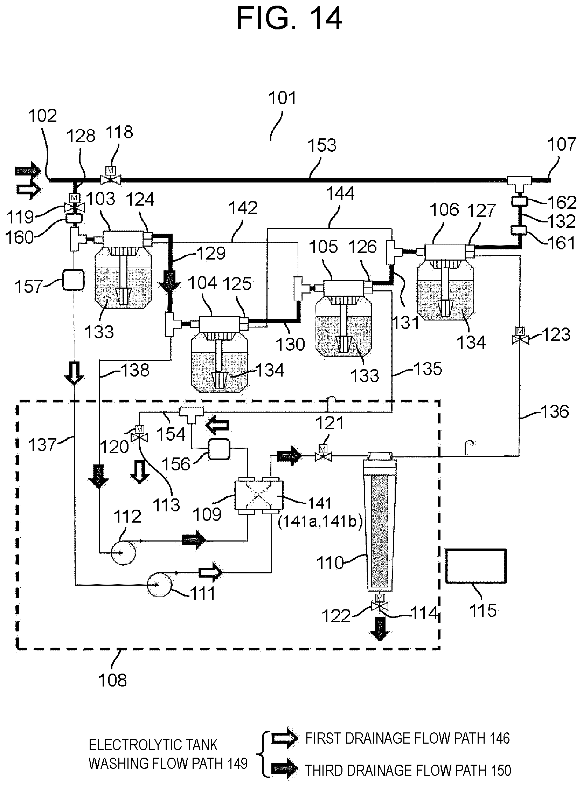

Next, electrolytic tank washing flow path 149 formed in the electrolytic tank washing process of water softening apparatus 101 will be described with reference to Fig. 14. Fig. 14 is a configuration diagram illustrating electrolytic tank washing flow path 149 of water softening apparatus 101.

Electrolytic tank washing flow path 149 is a flow path for removing the precipitates caused by the hardness components in electrolytic tank 109 and neutralization tank regeneration circulation flow path 140 in the electrolytic tank washing process to be described later. Electrolytic tank washing flow path 149 includes first drainage flow path 146 and third drainage flow path 150.

As illustrated in Fig. 14 (black arrow), third drainage flow path 150 is constituted by respective flow paths communicatively connecting inlet port 102 to first soft water tank 103, second water pump 112, electrolytic tank 109, opening and closing valve 121, capture unit 110, opening and closing valve 122, and capture unit drainage port 114. Specifically, third drainage flow path 150 is a flow path that causes the raw water flowing in from inlet port 102 to flow through flow path 128, first soft water tank 103, flow path 129, second collection flow path 138, second water pump 112, electrolytic tank 109, second supply flow path 136, opening and closing valve 121, capture unit 110, and opening and closing valve 122 in this order, and discharges the raw water from capture unit drainage port 114 to the outside of the apparatus.

More specifically, in third drainage flow path 150, the raw water flowing in from inlet port 102 is caused to flow into first soft water tank 103 via flow path 128 to obtain acidic soft water. The generated acid soft water is caused to flow into electrolytic tank 109 by second water pump 112 through flow path 129 and second collection flow path 138. Thereafter, the acidic soft water is circulated through opening and closing valve 121, capture unit 110, and opening and closing valve 122 in this order through second supply flow path 136, the precipitate of capture unit 110 is dissolved in the acidic soft water, and the acidic soft water is discharged to the outside of the apparatus from capture unit drainage port 114.

### <13: Capture unit washing flow path>

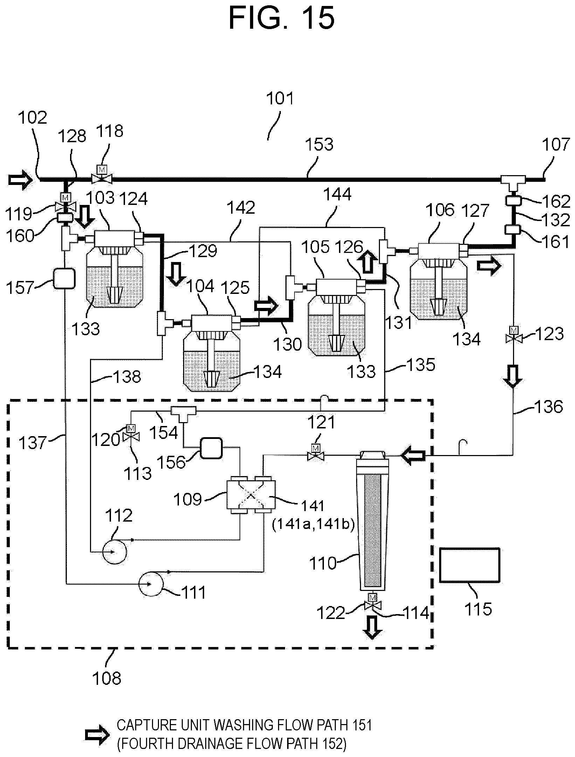

Next, capture unit washing flow path 151 formed in the capture unit washing process of water softening apparatus 101 will be described with reference to Fig. 15. Fig. 15 is a configuration diagram illustrating capture unit washing flow path 151 of water softening apparatus 101.

Capture unit washing flow path 151 is a flow path for removing a precipitate derived from the hardness component precipitated in capture unit 110 in a capture unit washing process described later. Capture unit washing flow path 151 includes fourth drainage flow path 152.

As illustrated in Fig. 15, capture unit washing flow path 151 is configured by respective flow paths that communicatively connect inlet port 102 to first soft water tank 103, first neutralization tank 104, second soft water tank 105, second neutralization tank 106, capture unit 110, and capture unit drainage port 114. Specifically, capture unit washing flow path 151 is a flow path that causes the raw water flowing in from inlet port 102 to flow through flow path 128, first soft water tank 103, flow path 129, first neutralization tank 104, flow path 130, second soft water tank 105, flow path 131, second neutralization tank 106, second supply flow path 136, opening and closing valve 123, capture unit 110, and opening and closing valve 122 in this order, and discharges the raw water from capture unit drainage port 114 to the outside of the apparatus.

### <14. Raw water hardness measurement unit and soft water hardness measurement unit>

Raw water hardness measurement unit 160 and soft water hardness measurement unit 161 (see Fig. 10) included in water softening apparatus 101 measure the hardness component concentration in water at the time of the water softening process.

Raw water hardness measurement unit 160 is installed in flow path 128 that allows inlet port 102 and first soft water tank 103 to communicate with each other, and measures the hardness of the raw water flowing through flow path 128 (that is, the raw water hardness before water softening).

Soft water hardness measurement unit 161 is installed in flow path 132 that allows second neutralization tank 106 and water intake port 107 to communicate with each other, and measures the hardness of the soft water flowing through flow path 132 (that is, the hardness of the soft water after the water softening treatment is performed by the soft water tank and the neutralization tank).

Note that, as raw water hardness measurement unit 160 and soft water hardness measurement unit 161, general-purpose ones can be used, and for example, a detector for measuring the electrical conductivity of a liquid or a detector for measuring an amount of total dissolved solid (TDS) contained in water can be used.

### <15. Flow rate measurement unit>

Flow rate measurement unit 162 (see Fig. 10) included in water softening apparatus 101 is installed in flow path 132 that allows second neutralization tank 106 and water intake port 107 to communicate with each other, and measures the flow rate flowing through flow path 132. Note that, in the water softening process, the water flowing into first soft water tank 103 flows through first neutralization tank 104, second soft water tank 105, and second neutralization tank 106 without being distributed. Therefore, it can be considered that the amount of water flowing through the flow path is substantially the same before and after water softening. That is, the flow rate of water measured by flow rate measurement unit 162 can be regarded as the raw water passing amount before water softening and the soft water passing amount after water softening.

### <16. Controller>

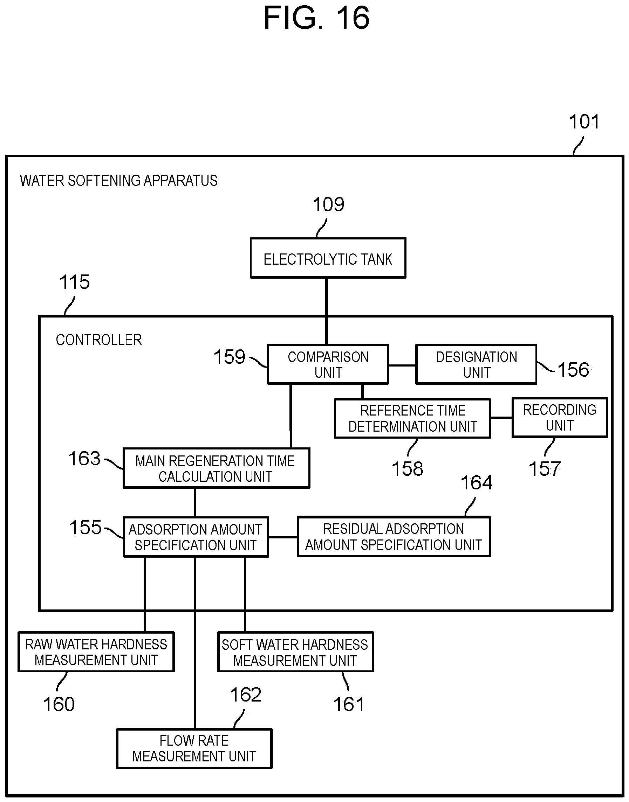

With reference to Fig. 16, each function of controller 115 according to the present exemplary embodiment will be described. Fig. 16 is a functional block diagram of water softening apparatus 101 according to the second exemplary embodiment.

Controller 115 controls execution of each process of the water softening process, the regeneration process, the regeneration flow path washing process, the electrolytic tank washing process, and the capture unit washing process, and switching between the respective processes.

Specifically, the control of switching between the respective processes indicates, for example, switching from the water softening process to the regeneration process, switching from the regeneration process to the regeneration flow path washing process, switching from the regeneration flow path washing process to the electrolytic tank washing process, switching from the electrolytic tank washing process to the capture unit washing process, and switching from the capture unit washing process to the water softening process.

Furthermore, controller 115 controls opening and closing valve 120 and opening and closing valve 122 to control the drainage in the regeneration flow path washing process, the electrolytic tank washing process, and the capture unit washing process.

Furthermore, controller 115 controls flow path switching valves 124 to 127, opening and closing valve 118, opening and closing valve 119, opening and closing valve 121, and opening and closing valve 123, and executes switching between the flow paths.

Controller 115 includes adsorption amount specification unit 155, designation unit 156, recording unit 157, reference time determination unit 158, comparison unit 159, main regeneration time calculation unit 163, and residual adsorption amount specification unit 164.

### <16.1 Adsorption amount specification unit>

Adsorption amount specification unit 155 calculates a hardness component adsorption amount adsorbed to weakly acidic cation exchange resin 133 in the soft water tank from information on the hardness of the raw water measured by raw water hardness measurement unit 160, the hardness of the soft water measured by soft water hardness measurement unit 161, and the amount of water passing through the softened water measured by flow rate measurement unit 162. Specifically, the hardness of the soft water measured by soft water hardness measurement unit 161 is subtracted from the hardness of the raw water measured by raw water hardness measurement unit 160. Then, the value calculated by the subtraction is multiplied by the amount of water passing through the softened water measured by flow rate measurement unit 162. Thus, the hardness component adsorption amount is calculated.

Furthermore, in a case where the cycle of the water softening process and the regeneration process is repeated, weakly acidic cation exchange resin 133 cannot be completely regenerated depending on the setting of the regeneration time, and there is a possibility that a hardness component remains in weakly acidic cation exchange resin 133. As described above, even in a case where the residual hardness component at the previous regeneration is adsorbed to weakly acidic cation exchange resin 133, adsorption amount specification unit 155 cooperates with residual adsorption amount specification unit 164 to be described later in order to accurately calculate the amount of the hardness component adsorbed to weakly acidic cation exchange resin 133.

Specifically, adsorption amount specification unit 155 calculates the amount of the adsorption hardness component adsorbed in the k-th water softening process by subtracting the hardness of the soft water after passing through the soft water tank from the hardness of the raw water and multiplying the subtracted value by the amount of water. Adsorption amount specification unit 155 adds the residual hardness component adsorption amount after the (k-1)th regeneration process specified by residual adsorption amount specification unit 164 to the calculated adsorption hardness component amount in the k-th water softening process (k is an integer of 2 or more). As a result, the hardness component adsorption amount can be calculated more accurately.

### <16.2 Residual adsorption amount specification unit>

Residual adsorption amount specification unit 164 specifies the residual hardness component adsorption amount after the (k-1)th regeneration process based on the (k-1)th regeneration time when adsorption amount specification unit 155 specifies the adsorption amount in the k-th water softening process in a case where the cycle of the water softening process and the regeneration process is repeated (k is an integer of 2 or more).

Specifically, the residual hardness component adsorption amount is specified from the change in soft water hardness after passing through the soft water tank when the repeated water softening process is performed. Comparing the amount of water passing through which the soft water hardness after passing through the soft water tank in the first water softening process is more than or equal to the reference value (for example, 30ppm) with the amount of water passing through which the soft water hardness after passing through the soft water tank in the k-th water softening process is more than or equal to the reference value, the amount of water passing through until the soft water hardness reaches the reference value is smaller in the k-th water softening process due to the influence of the residual hardness component adsorption amount. Since it is considered that the decrease rate obtained by comparing the amount of water passing in the k-th water softening process with the amount of water passing in the first water softening process without adsorption of the residual hardness component is equal to the ratio of the residual hardness component adsorption amount to the hardness adsorbable amount based on the resin amount of weakly acidic cation exchange resin 133, the residual hardness adsorption amount is specified by the above method. For example, in a case where the water passing amount exceeding the reference value in the first water softening process is 500 L and the water passing amount exceeding the reference value in the k-th water softening process is 400 L, the water passing amount is reduced by 20% in the k-th water softening process as compared with the first water softening process. That is, since 20% of the adsorbable amount of the resin does not function, the residual hardness component adsorption amount can also be estimated to be 20%. By specifying the residual hardness component adsorption amount in this manner, the k-th regeneration time can be accurately determined based on the (k-1)th residual hardness component adsorption amount that can be specified in the k-th water softening process.

The information on the residual hardness component adsorption amount specified by residual adsorption amount specification unit 164 is transmitted to adsorption amount specification unit 155, and used for accurate calculation of the hardness component adsorption amount.

Note that the reference value (third reference value) is a hardness component adsorption amount that can be removed in a predetermined reference time. The predetermined reference time is a continuous time zone among times during which the water softening process is performed less frequently, and is, for example, seven hours at night. In other words, the reference value can be said to be the amount of the hardness component that can be removed by performing the regeneration process during a time zone in which the water softening process is less frequently performed.

### <16.3 Main regeneration time calculation unit>

Main regeneration time calculation unit 163 calculates a main regeneration time, which is the time taken for the resin regeneration process, from the relationship between the amount of the hardness component adsorbed to the soft water tank calculated by adsorption amount specification unit 155 and the amount of protons supplied from electrolytic tank 109. Note that the main regeneration time is a time required to remove the hardness component adsorbed to the ion exchange resin from the ion exchange resin and complete the regeneration of the ion exchange resin.

A method of calculating the main regeneration time of the resin will be described. First, in order to regenerate the resin, it is necessary to supply protons to the soft water tank, and in order to complete the resin regeneration, it is necessary to supply to the resin an amount of protons equivalent to the amount of hardness components adsorbed to weakly acidic cation exchange resin 133 in the soft water tank. A proton generation amount (mol) in electrolytic tank 9 is derived from a current value (A = C/sec), a Faraday constant (C/mol), proton generation efficiency (%), and a regeneration time (h). Specifically, it is derived by the following Formula (1). Proton generation amount (mol) = current value (A = C/sec) × proton generation efficiency (%) × regeneration time (h) × 3600 ÷ Faraday constant (C/mol)............ (1)

Note that, since the current value and the proton generation efficiency are set by predetermined electrolysis performance information, the current value and the proton generation efficiency are fixed values. Furthermore, from a relationship of 2R-COOH⁺Ca²⁺ ↔ (R-COO)₂Ca+2H⁺, in a case where 1 mol of hardness component ions is adsorbed to weakly acidic cation exchange resin 133, the proton amount required for regeneration is 2 mol. That is, when the hardness component adsorption amount to be removed is determined, the amount of protons necessary for regeneration can be calculated, so that the main regeneration time can be derived.

As a method of determining the predetermined reference time for the regeneration process, there are a case where designation unit 156 sets the predetermined reference time in advance, and a case where reference time determination unit 158 determines a time zone in which there is a low possibility that the water softening process is performed on the basis of the actual use state and determines the predetermined reference time. Note that the predetermined reference time is a continuous time zone among times during which the water softening process is performed less frequently.

### <16.4 Designation unit>

Designation unit 156 sets in advance a time during which the water softening process is not executed, and designates this time as a predetermined reference time in the regeneration process. For example, in a case where the time zone in which the water softening process is not executed is set from 23:00 to 6:00, it is determined to execute the regeneration process in this time zone (7 hours).

### <16.5 Recording unit>

Recording unit 157 monitors a use state of water softening apparatus 101 and records a time zone in which the water softening process is performed. Information regarding the recorded time zone is transmitted to reference time determination unit 158.

### <16.6 Reference time determination unit>

Reference time determination unit 158 specifies a time zone in which the water softening process is performed less frequently based on the time zone information of the water softening process performed recorded in recording unit 157, and determines to perform the regeneration process in this time zone. For example, the usage status in the past month is monitored, and a time zone in which the amount of used soft water is smaller than that in a time zone in which the water softening process is performed is calculated on average, and set as a predetermined reference time.

Note that, since the regeneration process is basically performed continuously without interruption, a continuous time zone is set. In a case where a continuous time zone is set, a case where the amount of soft water used is small (for example, in a case where the amount of water used is 5% or less of the amount of water used in a day, etc.) may be determined as an error value, and a time zone including the error value may be set as a time zone in which the regeneration process is performed.

Furthermore, in a state where there is little information regarding the use history of water softening apparatus 101, such as at the start of use of water softening apparatus 101, a time zone in which the water softening process is not performed is unclear. Therefore, the method of determining the predetermined reference time may be changed according to the information on the usage status. Specifically, as the predetermined reference time, a predetermined reference time preset by designation unit 156 may be used instead of the time zone determined by reference time determination unit 158.

### <16.7 Comparison unit>

Comparison unit 159 receives the main regeneration time calculated by main regeneration time calculation unit 163 and the time information regarding the regeneration process from designation unit 156 or reference time determination unit 158, and compares the magnitude relationship between the regeneration times.

In a case where the predetermined reference time determined by designation unit 156 or reference time determination unit 158 is longer than the main regeneration time calculated by main regeneration time calculation unit 163, the main regeneration time is set as a resin regeneration time. Note that the resin regeneration time is a time for performing the regeneration process.

On the other hand, in a case where the main regeneration time calculated by main regeneration time calculation unit 163 is longer than the predetermined reference time determined by designation unit 156 or reference time determination unit 158, the predetermined reference time is set as the resin regeneration time. In a case where the predetermined reference time is adopted as the resin regeneration time, the adsorbed hardness component cannot be completely removed in one regeneration process. However, in the latter stage of the regeneration process, the concentration of the hardness component with respect to the concentration of hydrogen ions decreases, and the ion exchange reaction hardly occurs, so that the regeneration efficiency is lower than that in the early to middle stages of the regeneration process. Furthermore, in the period of high regeneration efficiency from the initial stage to the middle stage of regeneration, the regeneration of the resin is completed by about 70% to 80%. Therefore, even in a case where the regeneration process is performed with the predetermined reference time as the resin regeneration time, in many cases, the late stage of the regeneration process in which the regeneration efficiency is reduced is omitted, so that the water softening performance is secured even if the water softening process and the regeneration process are repeatedly performed.

Based on the time taken for the regeneration process determined by comparison unit 159, controller 115 operates electrolytic tank 109 to implement the regeneration process.

In controller 115, when the cycle of the water softening process and the regeneration process is repeated, the hardness component adsorbed in the water softening process cannot be completely removed at the time of performing the regeneration process, and there is a possibility that the hardness component in an incompletely regenerated and adsorbed state remains in weakly acidic cation exchange resin 133. When the water softening process and the regeneration process are repeatedly performed with the hardness components remaining as described above, the amount of residual hardness components in weakly acidic cation exchange resin 133 gradually increases, and the regeneration efficiency of weakly acidic cation exchange resin 133 may decrease due to the relationship between the hardness components and the hydrogen ion concentration. Specifically, as the residual hardness component adsorption amount increases, in order to complete the regeneration in consideration of the residual hardness component adsorption amount, a hydrogen ion concentration higher than the hydrogen ion concentration necessary for removing the amount of the hardness component adsorbed in one water softening process is required. Therefore, it is difficult to remove all the amount of the hardness component adsorbed to the resin by the required regeneration time calculated from the amount of the hardness component actually adsorbed in one water softening process. That is, as the number of repetitions of the water softening process and the regeneration process increases, it is assumed that the regeneration efficiency in one regeneration process deteriorates.

In order to suppress such a decrease in regeneration efficiency during repeated use, even in a case where the hardness component adsorption amount exceeds the reference value, controller 115 executes the regeneration process at least for the main regeneration time determined by main regeneration time calculation unit 163 in m of n regeneration processes (n is an integer of 2 or more, m is an integer of 1 or more, and n > m). In this way, it is possible to periodically remove the hardness component adsorbed to the ion exchange resin and to regenerate substantially the entire amount of the ion exchange resin. Therefore, even in a case where the water softening process and the regeneration process are repeated for a long period of time, a decrease in the regeneration efficiency can be suppressed. Note that n and m can be arbitrarily set, and for example, n = 5 and m = 1, or n = 3 and m = 2.

Furthermore, as another means for suppressing a decrease in regeneration efficiency during repeated use, there is a means for performing a regeneration process during a main regeneration time in a case where a decrease in regeneration efficiency is detected. Specifically, in a case where the hardness of the soft water measured by soft water hardness measurement unit 161 exceeds the reference hardness value (for example, 50 ppm) in the (a+1)th water softening process after the end of the a-th regeneration process, the regeneration process is performed at least for the main regeneration time calculated by main regeneration time calculation unit 163 in the (a+1)th regeneration process. As a result, it is possible to detect a decrease in water softening performance and perform the regeneration process during the main regeneration time, so that it is possible to suppress the decrease in water softening performance even in a case where the water softening process and the regeneration process are repeatedly performed. Note that a is an integer of 1 or more.

The above is the configuration of water softening apparatus 101.

Next, the operation of water softening apparatus 101 will be described.

### <17. Water softening process, regeneration process, regeneration flow path washing process, electrolytic tank washing process, and capture unit washing process>

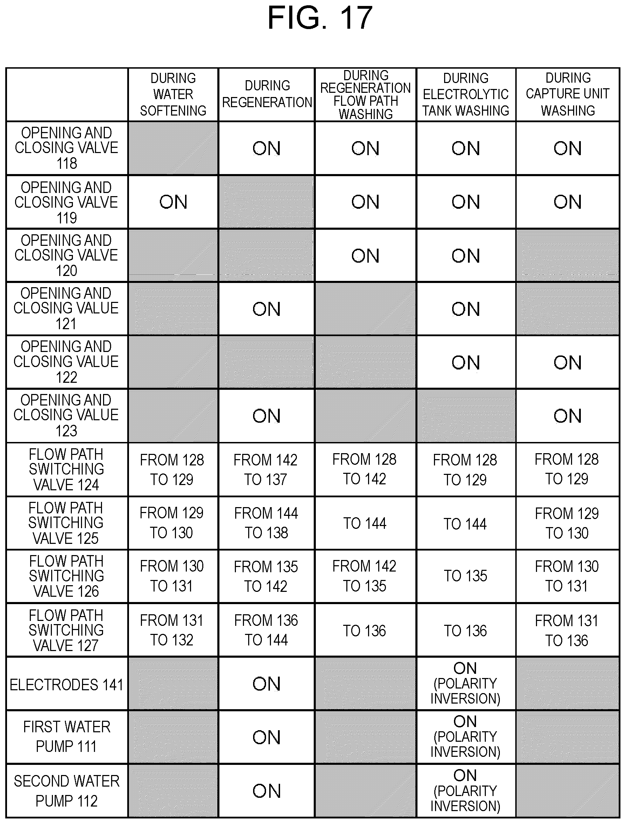

Next, the water softening process, the regeneration process, the regeneration flow path washing process, the electrolytic tank washing process, and the capture unit washing process of water softening apparatus 101 will be described with reference to Fig. 17. Fig. 17 is a diagram illustrating a state of water softening apparatus 101 during operation.

In the water softening process, the regeneration process, the regeneration flow path washing process, the electrolytic tank washing process, and the capture unit washing process, as illustrated in Fig. 17, controller 115 switches opening and closing valves 118 to 123, flow path switching valves 124 to 127, electrodes 141 of electrolytic tank 109, first water pump 111, and second water pump 112 to perform control so as to be in respective circulation states.

Here, "ON" in Fig. 17 indicates a state where the corresponding opening and closing valve is "opened", a state where electrodes 141 are energized, and a state where the corresponding water pump is operating. Blanks indicate a state in which the corresponding opening and closing valve is "closed", a state in which electrodes 141 are not energized, and a state in which the corresponding water pump is stopped, respectively.

Furthermore, "FROM (Number of component A) TO (Number of component B)" in Fig. 17 indicates a state in which the corresponding flow path switching valve connects the flow paths in a direction in which water is supplied from component A to component B. For example, flow path switching valve 124 in the water softening process connects the respective flow paths so that water can be supplied from flow path 128 to flow path 129.

Furthermore, "TO (Number of component C)" in Fig. 17 indicates a state in which the corresponding flow path switching valve connects the flow paths in a direction in which there is a possibility of supplying water to component C. At this time, although the flow path is connected, since the water is in an environment in which inflow and outflow of water to and from the soft water tank or the neutralization tank provided with the corresponding flow path switching valve is unlikely to occur, water supply from the corresponding flow path switching valve is extremely unlikely to occur.

### <17.1 Water softening process>

First, an operation of water softening apparatus 101 in the water softening process will be described with reference to Fig. 11 and a field of "DURING WATER SOFTENING" in Fig. 17.

In water softening apparatus 101, as illustrated in Fig. 17, in the water softening process, opening and closing valve 119 provided in flow path 128 is opened in a state where opening and closing valve 118 is closed. As a result, the raw water containing the hardness component flows in from the outside. Since the flowed raw water flows through first soft water tank 103, first neutralization tank 104, second soft water tank 105, and second neutralization tank 106 in this order, in water softening apparatus 101, it is possible to take out softened water (neutral soft water) from water intake port 107.

At this time, flow path switching valve 124 is in a connection state capable of supplying water from flow path 128 to flow path 129, flow path switching valve 125 is in a connection state capable of supplying water from flow path 129 to flow path 130, flow path switching valve 126 is in a connection state capable of supplying water from flow path 130 to flow path 131, and flow path switching valve 127 is in a connection state capable of supplying water from flow path 131 to flow path 132. Opening and closing valves 120 to 123 are all closed. Furthermore, the operations of electrodes 141 of electrolytic tank 109, first water pump 111, and second water pump 112 are also stopped.

With such control, as illustrated in Fig. 11, in the water softening process, the raw water is supplied from inlet port 102 to first soft water tank 103 through flow path 128 by the pressure of the raw water flowing in from the outside. Then, the raw water supplied to first soft water tank 103 is distributed through weakly acidic cation exchange resin 133 provided in first soft water tank 103. At this time, cations as hardness components in the raw water are adsorbed by the action of weakly acidic cation exchange resin 133, and hydrogen ions are released (ion exchange is performed). Cations are removed from the raw water, and thus, the raw water is softened. Since softened water contains a large amount of hydrogen ions that have been exchanged for hardness components and have flowed out, the softened water is acidified to be acidic water (first soft water) having a low pH. Here, when water containing a large amount of a permanent hardness component (for example, a sulfate such as calcium sulfate or a chloride such as magnesium chloride) as the hardness component is softened, the pH of the water containing a large amount of the permanent hardness component is more likely to decrease than water containing a large amount of a temporary hardness component (carbonates such as, for example, calcium carbonate). Since softening of water hardly proceeds in a state in which the pH is lowered, water having flowed through first soft water tank 103 is caused to pass through first neutralization tank 104 to perform neutralization.

The water softened in first soft water tank 103 flows through flow path 129 via flow path switching valve 124 provided in first soft water tank 103 and flows into first neutralization tank 104. In first neutralization tank 104, the hydrogen ions contained in the softened water are adsorbed by an action of weakly basic anion exchange resin 134. That is, since the hydrogen ions are removed from the water softened by first soft water tank 103, the decreased pH is increased and neutralized. Therefore, as compared with the case where water softened in first soft water tank 103 is directly softened in second soft water tank 105, the water softening treatment in second soft water tank 105 can be easily advanced.

The water (neutralized first soft water) neutralized by first neutralization tank 104 is distributed through flow path 130 via flow path switching valve 125 provided in first neutralization tank 104, and flows into second soft water tank 105. In second soft water tank 105, the cations as the hardness components are adsorbed and the hydrogen ions are released by the action of weakly acidic cation exchange resin 133. In second soft water tank 105, hardness components that cannot be removed in first soft water tank 103 are exchanged for the hydrogen ions contained in weakly acidic cation exchange resin 133. That is, the water flowed into second soft water tank 105 is further softened to become the soft water (second soft water).

The second soft water is distributed through flow path 131 via flow path switching valve 126 provided in second soft water tank 105, and flows into second neutralization tank 106. In second neutralization tank 106, the hydrogen ions contained in the flowed second soft water are adsorbed by the action of weakly basic anion exchange resin 134. That is, since the hydrogen ions are removed from the second soft water, the decreased pH increases, and the second soft water becomes the neutral soft water (neutralized second soft water) that can be used as domestic water. The neutralized second soft water flows through flow path 132 via flow path switching valve 127 provided in second neutralization tank 106, and is taken out from water intake port 107.

That is, in the water softening treatment, the raw water is distributed through first soft water tank 103, first neutralization tank 104, second soft water tank 105, and second neutralization tank 106 in this order. As a result, the raw water containing the hardness component flows out of first soft water tank 103 before the pH of the raw water is lowered by the water softening treatment in first soft water tank 103, is neutralized in first neutralization tank 104, is softened in second soft water tank 105, and is neutralized in second neutralization tank 106. Thus, as compared with a case where each of the soft water tank and the neutralization tank is constituted by a single body, since it is possible to suppress the decrease in pH of the water distributed in the soft water tank, that is, acidification, exchange between the hardness components and the hydrogen ions retained in weakly acidic cation exchange resin 133 in the soft water tank (particularly, second soft water tank 105) easily occurs. Therefore, the water softening performance can be improved.

Then, in water softening apparatus 101, in a case where a time zone specified by controller 115 is reached or in a case where the water softening process exceeds a certain amount of water, the water softening process is ended and the regeneration process is executed.

### <17.2 Regeneration process>

Next, an operation of water softening apparatus 101 in the regeneration process by regeneration device 108 will be sequentially described with reference to Fig. 12 and a field of "DURING REGENERATION" in Fig. 17.

In water softening apparatus 101, cation exchange capacities of first soft water tank 103 and second soft water tank 105 filled with weakly acidic cation exchange resin 133 decreases or disappears as the use is continued. That is, ion exchange cannot be performed after all the hydrogen ions, which are functional groups of the cation exchange resin, are exchanged for calcium ions or magnesium ions, which are the hardness components. Even before all the hydrogen ions are exchanged for the hardness components, since the ion exchange reaction is less likely to occur as the hydrogen ions decrease, the water softening performance is deteriorated. In such a state, the hardness components are contained in treated water. Thus, in water softening apparatus 101, it is necessary to perform the regeneration treatment of first soft water tank 103, second soft water tank 105, first neutralization tank 104, and second neutralization tank 106 by regeneration device 108.

In the regeneration process, controller 115 closes opening and closing valve 119, opening and closing valve 120, and opening and closing valve 122, and opens opening and closing valve 118, opening and closing valve 121, and opening and closing valve 123. Controller 115 brings flow path switching valve 124 into a connection state in which water can be supplied from neutralization tank bypass flow path 142 to first collection flow path 137, brings flow path switching valve 125 into a connection state in which water can be supplied from soft water tank bypass flow path 144 to second collection flow path 138, brings flow path switching valve 126 into a connection state in which water can be supplied from first supply flow path 135 to neutralization tank bypass flow path 142, and brings flow path switching valve 127 into a connection state in which water can be supplied from second supply flow path 136 to soft water tank bypass flow path 144. That is, first soft water tank 103 and second soft water tank 105 communicate with each other, and first neutralization tank 104 and second neutralization tank 106 communicate with each other. Controller 115 stops the drainage of drainage port 113 and capture unit drainage port 114. As a result, as illustrated in Fig. 12, soft water tank regeneration circulation flow path 139 and neutralization tank regeneration circulation flow path 140 are formed.

Then, when first water pump 111 and second water pump 112 are operated, the acidic electrolytic water and the alkaline electrolytic water in electrolytic tank 109 circulate through each of soft water tank regeneration circulation flow path 139 and neutralization tank regeneration circulation flow path 140.

Furthermore, controller 115 energizes electrolytic tank 109 so that the anode has a high potential with respect to the cathode (positive electrolysis). As a result, the hydrogen ions are generated at the anode during electrolysis, and the acidic electrolytic water is generated near the anode. On the other hand, the hydroxide ions are generated at the cathode, and the alkaline electrolytic water is generated near the cathode.

The acidic electrolytic water generated in electrolytic tank 109 flows through first supply flow path 135, is supplied into second soft water tank 105 via flow path switching valve 126, and flows through weakly acidic cation exchange resin 133 inside. Then, the acidic electrolytic water flowing through second soft water tank 105 flows through neutralization tank bypass flow path 142, is supplied into first soft water tank 103 via flow path switching valve 124, and flows through weakly acidic cation exchange resin 133 inside. That is, by passing acidic electrolytic water through weakly acidic cation exchange resin 133, cations (hardness components) adsorbed to weakly acidic cation exchange resin 133 and hydrogen ions contained in the acidic electrolytic water undergo an ion exchange reaction. As a result, weakly acidic cation exchange resin 133 is regenerated.

Thereafter, the acidic electrolytic water distributed through first soft water tank 103 contains the cations and flows into first collection flow path 137. That is, the acidic electrolytic water containing the cations distributed through weakly acidic cation exchange resin 133 is collected in electrolytic tank 109 via first collection flow path 137.

As described above, soft water tank regeneration circulation flow path 139 is configured to cause the acidic electrolytic water to flow from the downstream side of second soft water tank 105, which is a soft water tank located on the most downstream side from the inlet port of the raw water and is a soft water tank having weakly acidic cation exchange resin 133 having a smaller adsorption amount of hardness components than that of the upstream soft water tank, and to flow into the downstream side of first soft water tank 103 having weakly acidic cation exchange resin 133 located on the upstream side and having a larger adsorption amount of hardness components than that of second soft water tank 105.

That is, soft water tank regeneration circulation flow path 139 is a flow path that distributes the acidic electrolytic water sent from electrolytic tank 109 through second soft water tank 105, sends the acidic electrolytic water to first soft water tank 103 by neutralization tank bypass flow path 142, distributes the acidic electrolytic water through first soft water tank 103, and causes the acidic electrolytic water to flow into electrolytic tank 109 via first collection flow path 137. As a result, in the regeneration process, first, the acidic electrolytic water discharged from electrolytic tank 109 flows into second soft water tank 105 having a smaller adsorption amount of the hardness component than first soft water tank 103, and the acidic electrolytic water containing the hardness component is discharged from second soft water tank 105 to first soft water tank 103. In the regeneration of weakly acidic cation exchange resin 133 in second soft water tank 105, since the consumption of the hydrogen ions in the acidic electrolytic water is smaller than in first soft water tank 103, a reduction in a hydrogen ion concentration can be suppressed as compared with the regeneration of first soft water tank 103. Thus, it is possible to suppress the acidic electrolytic water containing a large amount of hydrogen ions from flowing into first soft water tank 103 and the hardness components from being re-adsorbed in first soft water tank 103. Accordingly, it is possible to suppress a decrease in the regeneration treatment efficiency and to shorten the regeneration time.

On the other hand, the alkaline electrolytic water generated in the vicinity of the cathode of electrolytic tank 109 flows through second supply flow path 136 and capture unit 110, is supplied into second neutralization tank 106 via flow path switching valve 127, and flows through weakly basic anion exchange resin 134 inside. Then, the alkaline electrolytic water having flowed through second neutralization tank 106 flows through soft water tank bypass flow path 144, is supplied into first neutralization tank 104 via flow path switching valve 125, and flows through weakly basic anion exchange resin 134 inside. That is, by allowing alkaline electrolytic water to pass through weakly basic anion exchange resin 134, anions adsorbed to weakly basic anion exchange resin 134 and hydroxide ions contained in the alkaline electrolytic water undergo an ion exchange reaction. As a result, weakly basic anion exchange resin 134 is regenerated.

Thereafter, the alkaline electrolytic water having flowed through first neutralization tank 104 contains anions and flows into second collection flow path 138. That is, the alkaline electrolytic water containing the anions distributed through weakly basic anion exchange resin 134 is collected in electrolytic tank 109 via second collection flow path 138.

As described above, neutralization tank regeneration circulation flow path 140 is configured to cause the alkaline electrolytic water to flow from the downstream side of second neutralization tank 106, which is the neutralization tank located most downstream from the inlet port of the raw water and includes weakly basic anion exchange resin 134 having a smaller amount of adsorbed anions than the neutralization tank on the upstream side, and to flow into the downstream side of first neutralization tank 104, which is located upstream and includes weakly basic anion exchange resin 134 to which more anions are adsorbed than second neutralization tank 106.

That is, neutralization tank regeneration circulation flow path 140 is a flow path that distributes the alkaline electrolytic water sent from electrolytic tank 109 through second neutralization tank 106, sends the alkaline electrolytic water to first neutralization tank 104 by soft water tank bypass flow path 144, distributes the alkaline electrolytic water through first neutralization tank 104, and causes the alkaline electrolytic water to flow into electrolytic tank 109 via second collection flow path 138. As a result, in the regeneration process, the alkaline electrolytic water flows into second neutralization tank 106 having a smaller adsorption amount of anions than in first neutralization tank 104, and the alkaline electrolytic water containing the anions is ejected from second neutralization tank 106 to first neutralization tank 104. In the regeneration of weakly basic anion exchange resin 134 in second neutralization tank 106, since the consumption of the hydroxide ions in the alkaline electrolytic water is smaller than in first neutralization tank 104, a reduction in a hydroxide ion concentration can be suppressed as compared with the regeneration of first neutralization tank 104. Thus, it is possible to suppress the alkaline electrolytic water containing a large amount of hydroxide ions from flowing into first neutralization tank 104, and it is possible to suppress re-adsorption of anions in first neutralization tank 104. Therefore, it is possible to suppress a decrease in the regeneration treatment efficiency and to shorten the regeneration time.

Furthermore, neutralization tank regeneration circulation flow path 140 introduces the alkaline electrolytic water sent from electrolytic tank 109 into first neutralization tank 104 and second neutralization tank 106 from the downstream side of first neutralization tank 104 and second neutralization tank 106, and causes the alkaline electrolytic water to flow out from the upstream side where the adsorption amount of anions is larger than on the downstream side of each neutralization tank. As a result, the alkaline electrolytic water flows in from the downstream side where the adsorption amount of the anion component is smaller, and the neutralization tank is regenerated. In the regeneration of weakly basic anion exchange resin 134 on the downstream side, since the consumption of hydroxide ions in the alkaline electrolytic water is smaller than that on the upstream side, a reduction in the hydroxide ion concentration of the alkaline electrolytic water can be suppressed. Accordingly, it is possible to suppress re-adsorption on the upstream side of anions contained in the alkaline electrolytic water from the downstream side. Therefore, it is possible to suppress a decrease in the regeneration treatment efficiency of the neutralization tank and to shorten the regeneration time. Note that the downstream side refers to the downstream side in the flow path during the water softening treatment.

### <17.2.1 Method of controlling water softening apparatus>

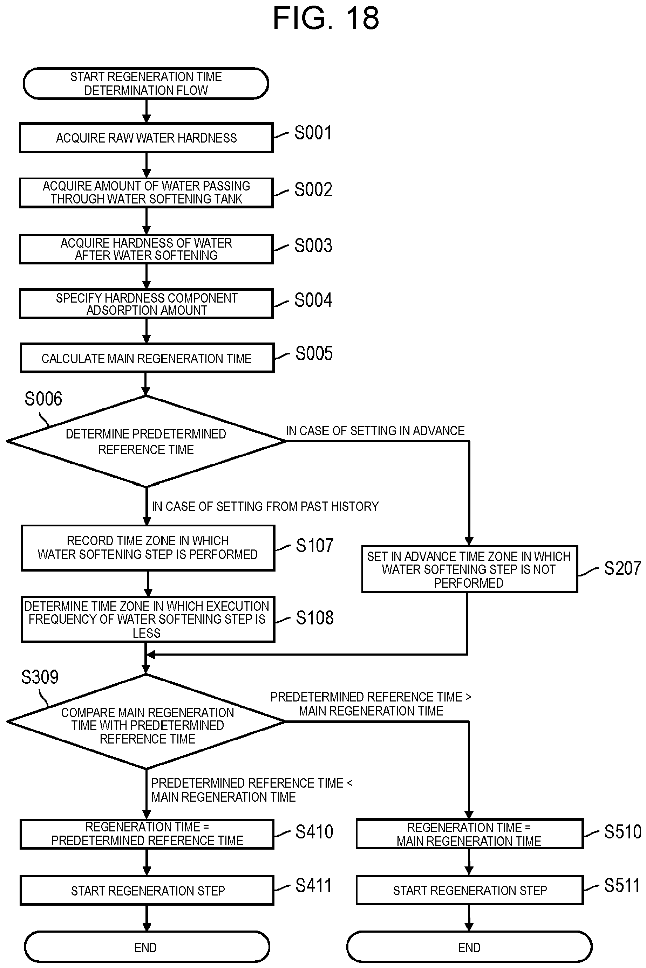

Next, control executed by controller 115 in the above configuration will be described with reference to Fig. 18. Fig. 18 is a flowchart for determining a regeneration time of water softening apparatus 101 according to the second exemplary embodiment. Herein, in the flowchart, numbers with S as an initial letter are assigned. For example, S1 and the like indicate treatment processes. However, the magnitude of the numerical value indicating the treatment process is not related to the treatment order.

Hereinafter, control executed at the time of determining the regeneration process in water softening apparatus 101 will be described.

First, raw water hardness measurement unit 160 acquires hardness information of the raw water (S001).

Next, flow rate measurement unit 162 measures the amount of raw water passing through the soft water tank (S002).

Furthermore, soft water hardness measurement unit 161 acquires hardness information of soft water after passing through the soft water tank (S003).

Then, based on the information acquired in each of steps 5001 to S003, adsorption amount specification unit 155 specifies the amount of the hardness component adsorbed to weakly acidic cation exchange resin 133 during the water softening process (S004).

Next, main regeneration time calculation unit 163 derives a main regeneration time, which is a time required to completely remove the adsorbed hardness component, from the hardness component adsorption amount specified in step S004 and the proton generation amount in electrolytic tank 109 (S005).

In water softening apparatus 101 of the present exemplary embodiment, the main regeneration time is compared with a predetermined reference time to determine the execution time of the regeneration process. As a method of determining the predetermined reference time, there are a pattern for setting in advance (S207) and a pattern for setting a time zone in which the frequency of the water softening process is low (S107 to S108) based on the actual use state.

First, in the pattern (S207) in which the regeneration time is set in advance, designation unit 156 sets a time zone for performing regeneration assuming a time zone in which the water softening process is not performed.

Next, in the pattern (S107 to S108) in which a time zone in which the frequency of the water softening process is low is set on the basis of the actual use state, recording unit 157 monitors the actual use state and records the time zone in which the water softening process is performed (S107).

Then, reference time determination unit 158 determines a time zone in which the execution frequency of the water softening process is low from the recorded information, and sets this time zone as a predetermined reference time (S108).

Thereafter, comparison unit 159 compares the main regeneration time with a predetermined reference time (S309).

As a result of the comparison, in a case where the main regeneration time is longer than the predetermined reference time, comparison unit 159 sets the predetermined reference time as the regeneration time (S410).

Then, controller 115 drives electrolytic tank 109 to start the regeneration process (S411).

On the other hand, in a case where the predetermined reference time is longer than the main regeneration time, comparison unit 159 sets the main regeneration time as the regeneration time (S510).

Then, controller 115 drives electrolytic tank 109 to start the regeneration process (S511).

In water softening apparatus 101, the regeneration process is performed based on the control as described above, and the process proceeds to the regeneration flow path washing process when the regeneration process is ended.

Note that, in a case where the user desires to obtain soft water during the regeneration process, the raw water passes through bypass flow path 153 from inlet port 102 and flows out from water intake port 107 by opening a faucet or the like connected to water softening apparatus 101, so that the raw water can be used without waiting for the end of the regeneration process.

### <17.3 Regeneration flow path washing process>

Next, an operation of water softening apparatus 101 in the regeneration flow path washing process will be sequentially described with reference to Fig. 13 and a field of "DURING REGENERATION FLOW PATH WASHING" in Fig. 17.

In water softening apparatus 101, during the regeneration process, hardness components are released from first soft water tank 103 and second soft water tank 5 into acidic electrolytic water, and the acidic electrolytic water circulates in the flow path without being discharged from soft water tank regeneration circulation flow path 139. Accordingly, the inside of soft water tank regeneration circulation flow path 139 after the end of the regeneration process is filled with high hardness water containing the hardness components released from first soft water tank 103 and second soft water tank 105. The hardness of the high hardness water is significantly higher than the hardness (for example, 450 ppm) of the raw water, and may increase to, for example, about 2000 ppm. When the process proceeds to the water softening process in a state where the high hardness water remains in water softening apparatus 101, the high hardness water or the mixed water of the raw water and the high hardness water is discharged from water intake port 107. Therefore, in a case where the user of water softening apparatus 101 executes the water softening process after the end of the regeneration process, there is a problem that not only soft water cannot be obtained immediately after the start of the water softening process but also water having hardness higher than that of raw water is obtained.

Furthermore, the high hardness water is distributed through weakly acidic cation exchange resin 133 in first soft water tank 103 and second soft water tank 105, and thus, the water containing the hardness components is distributed again even though the hardness components adsorbed in the regeneration process are replaced with the hydrogen ions and the regeneration is performed. Therefore, the hydrogen ions filled by the regeneration treatment that has been performed with great effort and the hardness components cause the exchange reaction, and the hardness components are adsorbed to weakly acidic cation exchange resin 133 again. Accordingly, the amount of hydrogen ions available for softening the raw water is reduced, and the water softening performance is deteriorated. In order to solve these problems, the regeneration flow path washing process for draining the high hardness water in soft water tank regeneration circulation flow path 139 is performed.

In the regeneration flow path washing process, controller 115 closes opening and closing valves 121 to 123 and opens opening and closing valves 118 to 120. Furthermore, controller 115 brings flow path switching valve 124 into a connection state where water can be sent from flow path 128 to neutralization tank bypass flow path 142, brings flow path switching valve 125 into a connection state where water can be sent to soft water tank bypass flow path 144, brings flow path switching valve 126 into a connection state where water can be sent from neutralization tank bypass flow path 142 to first supply flow path 135, and brings flow path switching valve 127 into a connection state where water can be sent to second supply flow path 136. That is, first soft water tank 103 and second soft water tank 105 are communicably connected to each other, second soft water tank 105 and drainage port 113 are communicably connected to each other, and electrolytic tank 109 and drainage port 113 are communicably connected to each other. Controller 115 stops the drainage of capture unit drainage port 114. As a result, as illustrated in Fig. 13, first drainage flow path 146 and second drainage flow path 147 are formed. Note that, at this time, operations of electrodes 141, first water pump 111, and second water pump 112 are stopped.

In the regeneration flow path washing process, specifically, opening and closing valve 119 is opened, and thus, the raw water flows into first drainage flow path 146 and second drainage flow path 147 from the outside.

In first drainage flow path 146, the high hardness water in flow path 128, first collection flow path 137, first water pump 111, electrolytic tank 109, and first supply flow path 135 is swept away by the pressure of the flowed raw water, and flows into drainage flow path 154. The high hardness water having flowed into drainage flow path 154 is discharged from drainage port 113 to the outside of the apparatus.

In second drainage flow path 147, the high hardness water in flow path 128, first soft water tank 103, neutralization tank bypass flow path 142, second soft water tank 105, and first supply flow path 135 is swept away by the pressure of the raw water that has flowed in, and flows into drainage flow path 154. The high hardness water having flowed into drainage flow path 154 is discharged from drainage port 113 to the outside of the apparatus.

By doing this, by the regeneration flow path washing process, the high hardness water in first drainage flow path 146 and second drainage flow path 147, which are main remaining portions of the high hardness water after the regeneration process, can be replaced with the raw water while the distribution of the high hardness water to the neutralization tank is suppressed. Therefore, in the regeneration flow path washing process, adsorption of hydrogen ions to weakly basic anion exchange resin 134 in the neutralization tank can be suppressed, so that consumption of filled hydroxide ions can be suppressed, and neutralization performance can be maintained. Therefore, it is possible to suppress a decrease in water softening performance caused by high hardness water.

Note that, controller 115 supplies the raw water to each flow path such that a flow rate of the raw water distributed through second drainage flow path 147 is larger than a flow rate of the raw water distributed through first drainage flow path 146.

As a result, it is possible to preferentially replace the high hardness water in second drainage flow path 147, which is a flow path including the soft water tank used in the water softening process and is a flow path in which drainage of the high hardness water in the flow path is essential, with the raw water. Accordingly, it is possible to suppress the decrease in water softening performance caused by the high hardness water when the water softening process is started. Furthermore, since the water amount discharged from first drainage flow path 146, which is a flow path that is not used in the water softening process and is a flow path that has little influence on the water softening process even though the high hardness water remains, can be reduced, wasteful drainage can be prevented, and the water amount required for the regeneration flow path washing process can be suppressed.

Furthermore, thus, the high hardness water is discharged to the outside of the apparatus by the flow path not including the neutralization tank. That is, the water can be drained while the hardness components in the high hardness water stored in soft water tank regeneration circulation flow path 139 are inhibited from being adsorbed to weakly basic anion exchange resin 134 in the neutralization tank, so that it is possible to prevent a decrease in water softening performance caused by the high hardness water generated during the regeneration process and maintain the water softening performance.

Then, in water softening apparatus 101, in a case where the time zone specified by controller 115 is reached, in a case where the regeneration flow path washing process exceeds a certain time (for example, 1 minute), or in a case where the amount of water passing through the regeneration flow path washing process exceeds a certain value, the regeneration flow path washing process is ended, and the electrolytic tank washing process is executed.

Note that, in a case where the user desires to obtain soft water during the regeneration flow path washing process, by opening a faucet or the like connected to water softening apparatus 101, the raw water passes through bypass flow path 153 from inlet port 102 and flows out from water intake port 107. Therefore, the raw water can be used without waiting for the end of the regeneration flow path washing process.

### <17.4 Electrolytic tank washing process>

Next, an operation of water softening apparatus 101 in the electrolytic tank washing process will be sequentially described with reference to Fig. 14 and a field of "DURING ELECTROLYTIC TANK WASHING" in Fig. 17.

In the regeneration process, when electrolytic tank 109 is operating, the hardness components (calcium ions or magnesium ions) in the water is precipitated as a solid (scale) on the cathode. Since the precipitate deposited on the cathode is a non-conductor, the operating voltage of electrolytic tank 109 is increased, and the power consumption during the regeneration process is increased. It is necessary to perform the electrolytic tank washing process for removing the precipitates precipitated on the cathode.

In the electrolytic tank washing process, controller 115 opens opening and closing valves 118 to 122 and closes opening and closing valve 123. Furthermore, controller 115 brings flow path switching valve 124 into a connection state where water can be sent from flow path 128 to flow path 129, brings flow path switching valve 125 into a connection state where water can be sent to soft water tank bypass flow path 144, brings flow path switching valve 126 into a connection state where water can be sent to first supply flow path 135, and brings flow path switching valve 127 into a connection state where water can be sent to second supply flow path 136. That is, first soft water tank 103 and electrolytic tank 109 communicate with each other, electrolytic tank 109 and drainage port 113 communicate with each other, and electrolytic tank 109 and capture unit drainage port 114 communicate with each other. As a result, as illustrated in Fig. 14, first drainage flow path 146 and third drainage flow path 150 are formed.

Specifically, in the electrolytic tank washing process, when controller 115 opens opening and closing valve 119, the raw water flows into first drainage flow path 146 and third drainage flow path 150 from the outside.

In first drainage flow path 146, the introduced raw water flows through flow path 128, first collection flow path 137, and first water pump 111, and flows into electrolytic tank 109.

On the other hand, in third drainage flow path 150, the flowed raw water flows through flow path 128, first soft water tank 103, second collection flow path 138, and second water pump 112, and flows into electrolytic tank 109.

In the electrolytic tank washing process, controller 115 energizes the electrodes so that the cathode has a higher potential (reverse electrolysis) than the anode. Thus, electrolytic tank 109 electrolyzes the raw water flowed into the electrolytic tank to generate the alkaline electrolytic water near the anode and the acidic electrolytic water near the cathode.

At this time, the precipitate deposited on the cathode can be dissolved by the acidic electrolytic water generated on the cathode. Accordingly, it is possible to suppress a decrease in electrolysis performance due to adhesion of the precipitates to surfaces of electrodes 141.

The alkaline electrolytic water generated at the anode is distributed through first supply flow path 135, flows into drainage flow path 154, and is discharged from drainage port 113 to the outside of the apparatus.

On the other hand, the acidic electrolytic water generated at the cathode dissolves the precipitates precipitated at the cathode, is distributed through second supply flow path 136, and flows into capture unit 110. Since the acidic electrolytic water having flowed into capture unit 110 can dissolve the precipitate adhering to capture unit 110, capture unit 110 can be preliminarily washed. Accordingly, a time required for the capture unit washing process which is a next process can be shortened. Then, the acidic electrolytic water is discharged to the outside of the apparatus from capture unit drainage port 114 provided below capture unit 110.

That is, in the electrolytic tank washing process, the removal of the precipitates in electrolytic tank 109 and the removal of the precipitates in capture unit 110 can be simultaneously performed, and a time required from the end of the regeneration process to the start of the water softening process can be shortened.

Then, in water softening apparatus 101, in a case where the time zone specified by controller 115 is reached or in a case where the electrolytic tank washing process exceeds a certain period of time (for example, 5 minutes), the electrolytic tank washing process is ended, and the capture unit washing process is executed.

Note that, in third drainage flow path 150, since the raw water passes through first soft water tank 103, the acidified water passes through capture unit 110. Thus, capture unit 110 becomes acidic, and the precipitates adhering to capture unit 110 are dissolved by the acidic water. Accordingly, since capture unit 110 can be preliminarily washed, a time required for the capture unit washing process which is a next process can be shortened. That is, the removal of the precipitates in electrolytic tank 109 and the removal of the precipitates in capture unit 110 can be simultaneously performed, and a time required from the end of the regeneration process to the start of the water softening process can be shortened.

Note that, in a case where the user desires to obtain soft water during the electrolytic tank washing process, the raw water passes through bypass flow path 153 from inlet port 102 and flows out from water intake port 107 by opening a faucet or the like connected to water softening apparatus 101. Therefore, the raw water can be used without waiting for the end of the electrolytic tank washing process.

### <17.5 Capture unit washing process>

Next, an operation of water softening apparatus 101 in the capture unit washing process will be sequentially described with reference to Fig. 15 and a field of "DURING CAPTURE UNIT WASHING" in Fig. 17.

In the regeneration process, the high hardness water containing the hardness components released from first soft water tank 103 and second soft water tank 105 flows into electrolytic tank 109. The hardness component moves to the cathode side during electrolysis, reacts with hydroxide ions generated at the cathode, and becomes a precipitate. A part of the precipitated precipitates is contained in the alkaline electrolytic water released from electrolytic tank 109, is distributed through second supply flow path 136, and is captured by capture unit 110. Therefore, since the precipitate gradually accumulates in capture unit 110 during the regeneration process, the pressure loss caused by capture unit 110 gradually increases, and the flow rate of the alkaline electrolytic water flowing through neutralization tank regeneration circulation flow path 140 gradually decreases. Accordingly, when the precipitates are left, a time required for regenerating weakly basic anion exchange resin 134 in first neutralization tank 104 and second neutralization tank 106 is extended, and the filling of weakly basic anion exchange resin 134 with the hydroxide ions may not be completed at the end. Thus, it is necessary to perform the capture unit washing process for removing the precipitates adhering to or precipitated on capture unit 110.

In the capture unit washing process, controller 115 opens opening and closing valve 118, opening and closing valve 119, opening and closing valve 122, and opening and closing valve 123, and closes opening and closing valve 120 and opening and closing valve 121. Furthermore, controller 115 brings flow path switching valve 124 into a connection state where water can be sent from flow path 128 to flow path 129, brings flow path switching valve 125 into a connection state where water can be sent from flow path 129 to flow path 130, brings flow path switching valve 126 into a connection state where water can be sent from flow path 130 to flow path 131, and brings flow path switching valve 127 into a connection state where water can be sent from flow path 131 to second supply flow path 136. That is, first soft water tank 103 and first neutralization tank 104 are communicatively connected to each other, first neutralization tank 104 and second soft water tank 105 are communicatively connected to each other, second soft water tank 105 and second neutralization tank 106 are communicatively connected to each other, and second neutralization tank 106 and capture unit drainage port 114 are communicatively connected to each other. As a result, as illustrated in Fig. 15, fourth drainage flow path 152 is formed.

In the capture unit washing process, specifically, when controller 115 opens opening and closing valve 119, the raw water flows into flow path 128 from the outside. The flowed raw water are distributed through flow path 128, first soft water tank 103, flow path 129, first neutralization tank 104, flow path 130, second soft water tank 105, flow path 131, second neutralization tank 106, and second supply flow path 136, and flows into capture unit 110.

In capture unit 110, the neutral soft water flows in from a side opposite to the water flowing direction of the regeneration process. That is, backwashing of capture unit 110 is performed by the flowed neutral soft water. At this time, since a part of the precipitate fixed or precipitated on capture unit 110 is dissolved in advance by the electrolytic tank washing process, capture unit 110 can be easily washed with neutral soft water. The neutral soft water containing the precipitates is discharged to the outside of the apparatus from capture unit drainage port 114 provided below capture unit 110.

In this way, since capture unit 110 can be backwashed, precipitates remaining in capture unit 110 can be removed. Therefore, the blocking of capture unit 110 can be suppressed, and the pressure loss caused by capture unit 110 can be reduced when the regeneration process is performed again. As a result, a reduction in a flow rate of neutralization tank regeneration circulation flow path 140, which is a regeneration flow path including capture unit 110, can be suppressed, and the flow rate of the alkaline electrolytic water can be secured. As a result, regeneration performance can be secured.

Then, in water softening apparatus 101, in a case where the time zone specified by controller 115 is reached or in a case where the capture unit washing process exceeds a certain period of time (for example, 5 minutes), the capture unit washing process is ended, and the water softening process is executed.

Note that, a flow path from inlet port 102 to second neutralization tank 106 is the same as the flow path in the water softening process. That is, fourth drainage flow path 152 is used, and thus, second neutralization tank 106, which is a neutralization tank at a last stage in the water softening process, is filled with the softened water. Accordingly, the water softening process is performed after performing the capture unit washing process by using fourth drainage flow path 152, the user of water softening apparatus 101 can obtain, from water intake port 107, the soft water subjected to the water softening treatment and having reduced hardness immediately after the start of the water softening process.

Note that, in a case where the user desires to obtain soft water during the capture unit washing process, the raw water passes through bypass flow path 153 from inlet port 102 and flows out from water intake port 107 by opening a faucet or the like connected to water softening apparatus 101. Therefore, the raw water can be used without waiting for the end of the capture unit washing process.

As described above, in water softening apparatus 101, the water softening process, the regeneration process, the regeneration flow path washing process, the electrolytic tank washing process, and the capture unit washing process are repeatedly executed in this order. The capture unit washing process is performed immediately before the water softening process, and thus, the neutralization tank at the last stage in the water softening process is filled with the softened water. Therefore, when the user of water softening apparatus 101 opens the faucet, discharge of high hardness water from water intake port 107 can be suppressed, and soft water having stable hardness can be provided immediately after the start of the water softening process.

Furthermore, by performing the electrolytic tank washing process after performing the regeneration flow path washing process, since the high hardness water is already discharged to the outside of the apparatus at the time of polarity inversion in the electrolytic tank washing process, it is possible to suppress the possibility that the high hardness water is electrolyzed. Therefore, it is possible to suppress electrolysis of water having high hardness, and it is possible to suppress generation of a large amount of scale in a flow path through which alkaline electrolytic water is supplied at the time of polarity inversion.

As described above, according to water softening apparatus 101 of the present exemplary embodiment, the following effects can be obtained.
(1) Water softening apparatus 101 includes a soft water tank that softens raw water containing a hardness component with weakly acidic cation exchange resin 133 to generate acidic soft water, a neutralization tank that neutralizes the pH of the acidic soft water passing through the soft water tank with weakly basic anion exchange resin 134 to generate neutralized soft water, electrolytic tank 109 that generates acidic electrolytic water to be used for regenerating weakly acidic cation exchange resin 133 and alkaline electrolytic water to be used for regenerating weakly basic anion exchange resin 134, and controller 115 that controls a regeneration process that is a process of regenerating at least one of weakly acidic cation exchange resin 133 and weakly basic anion exchange resin 134. Controller 115 includes adsorption amount specification unit 155 that specifies a hardness component adsorption amount to the soft water tank from the hardness of the raw water, the amount of the raw water passed through the soft water tank, and the hardness of the water after passing through the soft water tank, and main regeneration time calculating unit 163 that calculates, based on the hardness component adsorption amount, a main regeneration time required for a regeneration process necessary for removing the hardness component in the hardness component adsorption amount. Controller 115 determines the time required for the regeneration process based on the comparison between the predetermined reference time and the main regeneration time.

According to such a configuration, it is possible to specify the resin regeneration time from the amount of the hardness component adsorbed to weakly acidic cation exchange resin 133 and the water flow rate, set the upper limit time required for the regeneration process per unit cycle between the water softening process and the regeneration process, and then perform the resin regeneration time based on the amount of the adsorption hardness component. Therefore, the time required to complete the process of regenerating the ion exchange resin can be shortened.

(2) In water softening apparatus 101, in a case where the hardness component adsorption amount is less than or equal to a reference value (third reference value), which is the amount of the hardness component that can be removed in a predetermined reference time, controller 115 may execute the regeneration process at least for the main regeneration time.

According to such a configuration, in a case where the amount of the hardness component adsorbed to the resin is small, it is possible to further remove the hardness component adsorbed to the resin even in a case where the execution time of the regeneration process is less than or equal to a predetermined reference time. Therefore, the resin regeneration can be completed in a short time. In a case where a predetermined reference time is set in advance as the regeneration time, the regeneration process is continued even after the regeneration of the ion exchange resin is completed, but with such a configuration, the regeneration process is performed during the main regeneration time, and thus it is possible to suppress the regeneration process from being performed more than necessary. Furthermore, it is possible to suppress a burden on electrolytic tank 109 to which a current is continuously applied at the time of performing the regeneration process, and the durability of electrolytic tank 109 is improved.

(3) In water softening apparatus 101, in a case where the hardness component adsorption amount is larger than a reference value (third reference value), which is the amount of the hardness component that can be removed in a predetermined reference time, controller 115 may end the regeneration process in a case where the predetermined reference time is exceeded.

According to such a configuration, since the regeneration process is ended based on the predetermined reference time, it is possible to further suppress an increase in time required for the regeneration process.

(4) In water softening apparatus 101, controller 115 may further include recording unit 157 that records an execution time zone of the water softening process, and reference time determination unit 158 that determines a time zone in which the execution frequency of the water softening process is low as a predetermined reference time based on the execution time zone recorded by recording unit 157. Controller 115 may determine a time zone in which the regeneration process is performed based on the determined predetermined reference time.

According to such a configuration, since the time required for the regeneration process can be set in advance, it is possible to further suppress an increase in the time required for the regeneration process. Furthermore, it is possible to set a regeneration time and a time zone in which the regeneration process is performed based on a usage state of water softening apparatus 101. Therefore, water softening apparatus 101 can perform the regeneration treatment according to the convenience of the user.

(5) In water softening apparatus 101, controller 115 may further include designation unit 156 that designates a time set in advance as a time during which the water softening process is not executed as a predetermined reference time, and may determine the designated predetermined reference time as a time zone during which the regeneration process is executed.

As a result, since the time required for the regeneration process can be set in advance, it is possible to further prevent the time required for the regeneration process from becoming longer than the set time.

(6) In water softening apparatus 101, in a case where the regeneration process is performed a plurality of times, even if the hardness component adsorption amount exceeds the reference value (third reference value), controller 115 may perform the regeneration process at least for the main regeneration time m times out of n times (where n is an integer of 2 or more, m is an integer of 1 or more, and n > m.).

As a result, when the water softening process and the regeneration process are repeated, the relationship between the amount of the hardness component remaining in the ion exchange resin and the hydrogen ion concentration at the time of regenerating changes, and thus the regeneration efficiency is predicted to decrease. However, even in a case where the amount of the hardness component adsorbed exceeds the reference value, the regeneration process can be performed m times out of n times during the main regeneration time. Therefore, it is possible to repeatedly execute the water softening process and the regeneration process over a long period of time while maintaining the water softening performance.

(7) Water softening apparatus 101 may include soft water hardness measurement unit 161 that measures the hardness of water after passing through the soft water tank. In a case where the hardness measured by soft water hardness measurement unit 161 at the end of the regeneration process is higher than the reference hardness value that is the target hardness after the regeneration treatment, controller 115 may execute the regeneration process for at least the main regeneration time even in a case where the hardness component adsorption amount exceeds the reference value (third reference value) in the next regeneration process.

As a result, the water softening performance can be further monitored by soft water hardness measurement unit 161. Therefore, a decrease in the regeneration efficiency can be grasped, and in a case where the regeneration efficiency is decreased, the water softening process and the regeneration process can be repeatedly executed for a long period of time while maintaining the water softening performance by performing the regeneration process during the main regeneration time.

(8) In water softening apparatus 101, adsorption amount specification unit 155 may include residual adsorption amount specification unit 164 that specifies the residual hardness component adsorption amount after the (k-1)th regeneration process based on the (k-1)th regeneration time. Then, adsorption amount specification unit 155 may specify the hardness component adsorption amount from the hardness of the raw water, the amount of the raw water passed through the soft water tank, the hardness of the water after passing through the soft water tank, and the residual hardness component adsorption amount specified by residual adsorption amount specification unit 164 (where k is an integer of 2 or more).

As a result, while repeating the water softening process and the regeneration process, the amount of the hardness component remaining in the ion exchange resin that cannot be removed after the regeneration process is accurately measured, and then the amount of the adsorption hardness component can be specified. Therefore, the setting of the regeneration time becomes more accurate.

From above, the present disclosure has been described based on the exemplary embodiments. It is understood by those skilled in the art that these exemplary embodiments are merely examples, that the components or the treatment processes of those can be combined as various modifications, and that such modifications also fall within the scope of the present disclosure.

Furthermore, a combination of each component or each treatment process of the present exemplary embodiment and each component or each treatment process of other exemplary embodiments is also possible, and it is understood by those skilled in the art that it is within the scope of the present disclosure.

Note that, in water softening apparatus 101 according to the present exemplary embodiment, the regeneration flow path washing process, the electrolytic tank washing process, and the capture unit washing process are executed in this order after the end of the regeneration process, but the present disclosure is not limited thereto. For example, the regeneration flow path washing process may be performed after the electrolytic tank washing process, and the capture unit washing process may be performed as a preceding process of the water softening process. Even if the inside of the apparatus is washed in such order, the precipitates in electrolytic tank 109 and capture unit 110 can be removed, and second neutralization tank 106 immediately before the water softening process can be filled with soft water.

### (Third exemplary embodiment)

Next, a third exemplary embodiment of the present disclosure will be described.

The present disclosure solves the above-described conventional second problem, and provides a water softening apparatus capable of suppressing a decrease in efficiency of a process of regenerating a weakly basic anion exchange resin and a weakly acidic cation exchange resin.

The water softening apparatus according to the present exemplary embodiment includes a soft water tank, a neutralization tank, an electrolytic tank, and a controller. The controller includes a hardness storage unit, an adsorption amount calculation unit, a removal amount calculation unit, and a process management unit. The soft water tank softens raw water containing a hardness component with a weakly acidic cation exchange resin to generate acidic soft water. In the neutralization tank, the pH of the acidic soft water that has passed through the soft water tank is neutralized with a weakly basic anion exchange resin to generate neutralized soft water. The electrolytic tank generates acidic electrolytic water and alkaline electrolytic water. The controller controls a regeneration process that is a process of regenerating at least one of the weakly acidic cation exchange resin and the weakly basic anion exchange resin. The hardness storage unit stores the hardness component concentration of the raw water including the hardness component. The adsorption amount calculation unit calculates the ion adsorption amount to at least one of the soft water tank and the neutralization tank from the hardness component concentration of the raw water, the amount of the raw water passed through the soft water tank, and the hardness of the water after passing through the soft water tank. The removal amount calculation unit calculates an ion removal amount that can be removed from at least one of the soft water tank and the neutralization tank based on the amount of hydrogen ions in the acidic electrolytic water and the amount of hydroxide ions in the alkaline electrolytic water obtained by operating the electrolytic tank for a predetermined time. The process management unit performs the regeneration process based on the comparison between the ion adsorption amount and the ion removal amount.

According to the present exemplary embodiment, it is possible to provide a water softening apparatus capable of suppressing a decrease in efficiency of a process regenerating the weakly basic anion exchange resin and the weakly acidic cation exchange resin.

Hereinafter, an exemplary embodiment of the present disclosure will be described with reference to the drawings. Note that, the following exemplary embodiments are examples embodying the present disclosure, and do not limit the technical scope of the present disclosure. Furthermore, each drawing described in the exemplary embodiment is a schematic diagram, and the ratio of the size and the thickness of each component in each drawing does not necessarily reflect the actual dimensional ratio.

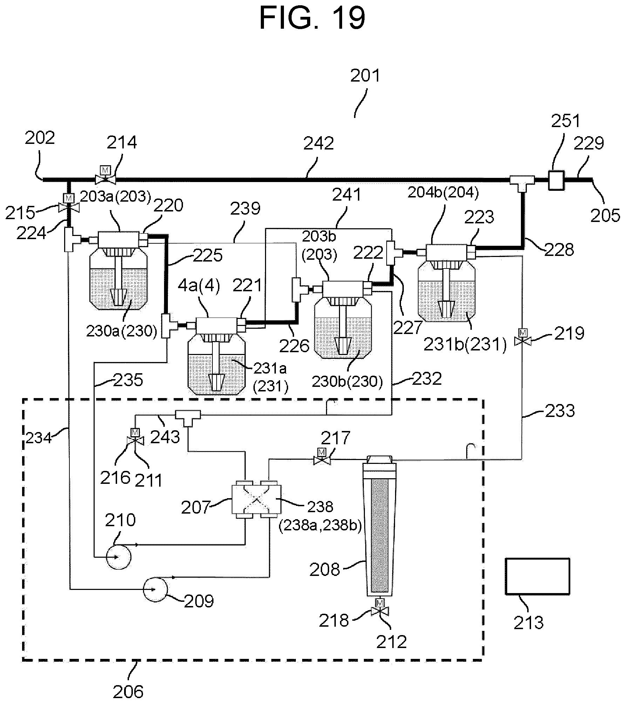

With reference to Fig. 19, water softening apparatus 201 according to a third exemplary embodiment of the present disclosure will be described. Fig. 19 is a conceptual diagram illustrating a configuration of water softening apparatus 201 according to the third exemplary embodiment of the present disclosure. Note that Fig. 19 conceptually illustrates each element of water softening apparatus 201.

### [1. Overall configuration]

Water softening apparatus 201 is an apparatus that generates neutral soft water from raw water containing a hardness component supplied from the outside. Note that the raw water is water (water to be treated) introduced into the apparatus from inlet port 202, and is, for example, city water or well water. The raw water includes hardness components (for example, calcium or magnesium ions). By performing the water softening process using water softening apparatus 201, neutral soft water having a hardness lower than that of the raw water is obtained, and the soft water can be used even in a region where the hardness of the raw water is high. Note that the water softening in water softening apparatus 201 refers to a state in which the amount of hardness components in water after softening is smaller than the amount of hardness components in raw water.

Specifically, as illustrated in Fig. 19, water softening apparatus 201 includes inlet port 202, soft water tank 203, neutralization tank 204, water intake port 205, regeneration device 206, flow rate measurement unit 251, and controller 213.

Furthermore, water softening apparatus 201 includes drainage port 211, a plurality of opening and closing valves (opening and closing valves 214 to 219), and a plurality of flow path switching valves (flow path switching valves 220 to 223). Details of these will be described later.

### <2. Inlet port and water intake port>

Inlet port 202 is connected to a source of raw water. Inlet port 202 is an opening for introducing raw water into water softening apparatus 201.

Water intake port 205 is an opening that supplies the water flowed in water softening apparatus 201 and subjected to the water softening process to the outside of the apparatus. In water softening apparatus 201, it is possible to take out the water after the water softening process from water intake port 205 by the pressure of the raw water flowing in from inlet port 202.

In water softening apparatus 201, in the water softening process of performing the water softening process, raw water supplied from the outside flows through inlet port 202, flow path 224, first soft water tank 203a, flow path 225, first neutralization tank 204a, flow path 226, second soft water tank 203b, flow path 227, second neutralization tank 204b, flow path 228, flow path 229, flow rate measurement unit 251, and water intake port 205 in this order, and is discharged as neutral soft water.

### <3. Soft water tank>

In soft water tank 203 (first soft water tank 203a and second soft water tank 203b), raw water containing hardness components is softened by the action of weakly acidic cation exchange resin 230. Specifically, in soft water tank 203, cations (calcium ions or magnesium ions), which are hardness components contained in flowing water (raw water), are exchanged for hydrogen ions, so that the hardness of the raw water decreases and the raw water is softened. In water softening apparatus 201 according to the present exemplary embodiment, first soft water tank 203a and second soft water tank 203b are provided as the soft water tanks 203, and both are collectively referred to as soft water tank 203 unless otherwise distinguished.

First soft water tank 203a softens the raw water flowing in from inlet port 202. First soft water tank 203a includes flow path switching valve 220. Details of the flow path switching valve will be collectively described later.

Second soft water tank 203b softens the water flowing through first neutralization tank 204a described later. Second soft water tank 203b includes flow path switching valve 222.

Each of first soft water tank 203a and second soft water tank 203b is filled with weakly acidic cation exchange resin 230.

Specifically, first soft water tank 203a is filled with first weakly acidic cation exchange resin 230a. Second soft water tank 203b is filled with second weakly acidic cation exchange resin 230b. Note that, hereinafter, first weakly acidic cation exchange resin 230a and second weakly acidic cation exchange resin 230b will be described as weakly acidic cation exchange resin 230 unless it is particularly necessary to distinguish between them.

Weakly acidic cation exchange resin 230 is an ion exchange resin having a hydrogen ion at the terminal of the functional group. Weakly acidic cation exchange resin 230 adsorbs cations (calcium ions or magnesium ions), which are hardness components contained in the raw water to be passed, and releases hydrogen ions. The soft water treated with weakly acidic cation exchange resin 230 contains a large amount of hydrogen ions exchanged for hardness components. That is, the soft water flowing out of first soft water tank 203a and second soft water tank 203b is soft water (acidic soft water) acidified by containing a large amount of hydrogen ions.

Since the terminal of the functional group of weakly acidic cation exchange resin 230 is a hydrogen ion, weakly acidic cation exchange resin 230 can be regenerated using acidic electrolytic water in the regeneration process described later. At this time, cations, which are hardness components taken in during the water softening process, are released from weakly acidic cation exchange resin 230.

Weakly acidic cation exchange resin 230 is not particularly limited, and general-purpose ones can be used, and examples thereof include those having a carboxyl group (-COOH) as an exchange group. Furthermore, a hydrogen ion (H⁺) as a counter ion of a carboxyl group may be a cation such as a metal ion or an ammonium ion (NH₄⁺).

### <4. Neutralization tank>

Neutralization tank 204 (first neutralization tank 204a and second neutralization tank 204b) neutralizes the pH (hydrogen ion concentration index) of soft water (acidified soft water) containing hydrogen ions coming out of the soft water tank by the action of weakly basic anion exchange resin 231 to obtain neutral soft water. Specifically, since neutralization tank 204 adsorbs hydrogen ions contained in the soft water from soft water tank 203 together with anions, the pH of the soft water increases, and neutral soft water can be obtained. In water softening apparatus 201 according to the present exemplary embodiment, first neutralization tank 204a and second neutralization tank 204b are provided as neutralization tanks 204, and in a case where they are not particularly distinguished from each other, they are collectively referred to as neutralization tank 204.

First neutralization tank 204a neutralizes the acidic soft water having flowed through first soft water tank 203a. First neutralization tank 204a includes flow path switching valve 221.

Second neutralization tank 204b neutralizes the acidic soft water having flowed through second soft water tank 203b. Second neutralization tank 204b includes flow path switching valve 223.

First neutralization tank 204a and second neutralization tank 204b are each filled with weakly basic anion exchange resin 231. First neutralization tank 204a is configured by, for example, filling a cylindrical container with first weakly basic anion exchange resin 231a. Second neutralization tank 204b is filled with second weakly basic anion exchange resin 231b. Note that, hereinafter, first weakly basic anion exchange resin 231a and second weakly basic anion exchange resin 231b will be described as weakly basic anion exchange resin 231 unless it is particularly necessary to distinguish between them.

Weakly basic anion exchange resin 231 adsorbs hydrogen ions contained in water to be passed and generates neutral water. Weakly basic anion exchange resin 231 is regenerated using alkaline electrolytic water in a regeneration process described later.

Weakly basic anion exchange resin 231 is not particularly limited, and a general-purpose resin can be used, and examples thereof include a resin in a free base form of a tertiary amine.

### <5. Flow rate measurement unit>

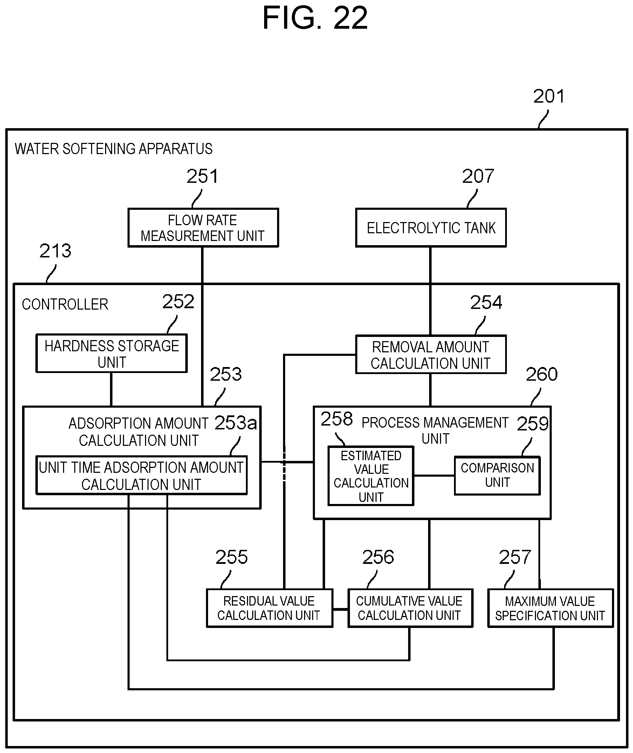

Flow rate measurement unit 251 included in water softening apparatus 201 detects a flow rate of neutral soft water having flowed out of second neutralization tank 204b. Flow rate measurement unit 251 is connected to adsorption amount calculation unit 253 and controller 213 to be described later so as to be able to communicate with each other in a wireless or wired manner. Information regarding the detected flow rate of soft water is used as input signals of adsorption amount calculation unit 253 (see Fig. 22) and controller 213. As flow rate measurement unit 251, a general-purpose detector such as an impeller type or an ultrasonic type can be used as long as the detector measures the flow rate of the water flow. Flow rate measurement unit 251 is provided on the downstream side of neutralization tank 204, and is provided in flow path 229 in the present exemplary embodiment. Note that, in a case where a plurality of the neutralization tanks 204 are provided, flow rate measurement unit 251 is preferably provided on the downstream side of neutralization tank 204 at the last stage. Note that the downstream side indicates the downstream side in the water softening process.

### <6. Regeneration device>

Regeneration device 206 is a device that regenerates weakly acidic cation exchange resin 230 filled in first soft water tank 203a and second soft water tank 203b, and regenerates weakly basic anion exchange resin 231 filled in first neutralization tank 204a and second neutralization tank 204b.

Regeneration device 206 includes electrolytic tank 207, capture unit 208, first water pump 209, and second water pump 210. In regeneration device 206, first supply flow path 232, second supply flow path 233, first collection flow path 234, and second collection flow path 235 are connected to second soft water tank 203b, second neutralization tank 204b, flow path 224, and flow path 225, respectively. Details of each flow path will be described later. Note that first supply flow path 232, second supply flow path 233, first collection flow path 234, second collection flow path 235, neutralization tank bypass flow path 239, and soft water tank bypass flow path 241 form soft water tank regeneration circulation flow path 236 and neutralization tank regeneration circulation flow path 237 described later.

### <6.1 Electrolytic tank>

Electrolytic tank 207 generates acidic electrolytic water and alkaline electrolytic water by electrolyzing water that has entered using a pair of electrodes 238 (electrode 238a and electrode 238b) provided inside. More specifically, in electrode 238a serving as an anode during electrolysis in the regeneration process, hydrogen ions are generated by electrolysis, and acidic electrolytic water is generated. Furthermore, in electrode 238b serving as a cathode during the electrolysis in the regeneration process, hydroxide ions are generated by the electrolysis, and alkaline electrolytic water is generated. Then, electrolytic tank 207 supplies the generated acidic electrolytic water to first soft water tank 203a and second soft water tank 203b via first supply flow path 232 and neutralization tank bypass flow path 239. Furthermore, electrolytic tank 207 supplies the generated alkaline electrolytic water to first neutralization tank 204a and second neutralization tank 204b via second supply flow path 233 and soft water tank bypass flow path 241. Although details will be described later, the acidic electrolytic water generated by electrolytic tank 207 is used for the regeneration of weakly acidic cation exchange resin 230 in first soft water tank 203a and second soft water tank 203b, and the alkaline electrolytic water generated by electrolytic tank 207 is used for the regeneration of weakly basic anion exchange resin 231 in first neutralization tank 204a and second neutralization tank 204b. Note that electrolytic tank 207 is configured such that an energization state to the pair of electrodes 238 can be controlled by controller 213 described later.

Electrolytic tank 207 includes a diaphragm, which is a porous membrane that separates liquid, inside the bath. The diaphragm is a membrane that enables ion migration by electrophoresis while suppressing mixing of acidic electrolytic water and alkaline electrolytic water due to convection. This makes it possible to suppress consumption of hydrogen ions in acidic electrolytic water and hydroxide ions in alkaline electrolytic water by neutralization reaction, so that it is possible to suppress a decrease in regeneration efficiency of weakly acidic cation exchange resin 230 and weakly basic anion exchange resin 231.

### <6.2 Water pump>

First water pump 209 is a device that circulates acidic electrolytic water to first soft water tank 203a and second soft water tank 203b during the regeneration process by regeneration device 206. First water pump 209 is provided in first collection flow path 234 that communicatively connects first soft water tank 203a and electrolytic tank 207. Such an arrangement is adopted in order to facilitate circulation of acidic electrolytic water only by first water pump 209.

Second water pump 210 is a device that circulates alkaline electrolytic water to first neutralization tank 204a and second neutralization tank 204b during the regeneration process by regeneration device 206. Second water pump 210 is provided in second collection flow path 235 that communicatively connects first neutralization tank 204a and electrolytic tank 207. Such an arrangement is adopted in order to facilitate circulation of alkaline electrolytic water only by second water pump 210.

Furthermore, first water pump 209 and second water pump 210 are communicably connected to controller 213 described later in a wireless or wired manner.

### <6.3 Capture unit>

Capture unit 208 is provided in second supply flow path 233 that communicatively connects electrolytic tank 207 and second neutralization tank 204b. In other words, capture unit 208 is provided on the downstream side of electrolytic tank 207 and on the upstream side of neutralization tank 204 at the time of the regeneration process.

Capture unit 208 captures a precipitate contained in the alkaline electrolytic water fed from electrolytic tank 207. The precipitate is a reaction product generated by the reaction between the hardness component, which is a cation released from first soft water tank 203a and second soft water tank 203b during the regeneration process, and the alkaline electrolytic water in electrolytic tank 207. More specifically, while the electrolysis of water is performed in electrolytic tank 207, the hardness components (for example, calcium ions or magnesium ions) released from first soft water tank 203a and second soft water tank 203b during the regeneration process move from the anode (electrode 238a) side to the cathode (electrode 238b) side via the diaphragm. Since alkaline electrolytic water is generated on the cathode side, the hardness component and the alkaline electrolytic water react with each other to form a precipitate. For example, in a case where the hardness components are calcium ions, a reaction in which calcium carbonate is generated or calcium hydroxide is generated occurs by mixing the calcium ions with the alkaline electrolytic water. Precipitates derived from the hardness component are captured as precipitates by capture unit 208 provided in second supply flow path 233. By providing capture unit 208 on second supply flow path 233 which is a flow path on the downstream side of electrolytic tank 207 and on the upstream side of neutralization tank 204, precipitates derived from the hardness component can be captured by capture unit 208, and the precipitates can be suppressed from flowing into neutralization tank 204 and accumulating in neutralization tank 204. In a case where capture unit 208 is not provided on the downstream side of electrolytic tank 207 and on the upstream side of neutralization tank 204, when the water softening process is resumed after the completion of the regeneration process, the precipitate deposited in neutralization tank 204 reacts with hydrogen ions in the acidic soft water released from soft water tank 203 to be ionized. As a result, since the soft water fed from neutralization tank 204 contains the hardness component again, the hardness increases as compared with the hardness when the soft water is discharged from soft water tank 203 provided immediately before. By providing capture unit 208 on second supply flow path 233, it is possible to suppress an increase in hardness associated with deposition and dissolution of such precipitates.

Furthermore, in the regeneration process, the alkaline electrolytic water in which the precipitate derived from the hardness component is captured by capture unit 208 flows through second neutralization tank 204b and first neutralization tank 204a, is then electrolyzed again in electrolytic tank 207, and is used again as alkaline electrolytic water to regenerate weakly basic anion exchange resin 231. At this time, the hardness component contained in the acidic electrolytic water is reduced as compared with the case where capture unit 208 is not provided. That is, since the hardness of the acidic electrolytic water is reduced by capturing the precipitate by capture unit 208, the hardness components flowing into first soft water tank 203a and second soft water tank 203b can be reduced, and a decrease in the regeneration efficiency of weakly acidic cation exchange resin 230 can be suppressed.

Note that, the expression "the hardness components react" includes not only a state where all the hardness components react but also a state where the component that does not react or the component that does not exceed a solubility product is included.

The form of capture unit 208 is not limited as long as the precipitate generated by the reaction between the hardness component and the alkaline electrolytic water can be separated. Examples thereof include a form using a cartridge type filter, a filtration layer using a granular filter material, a cyclone type solid-liquid separator, a hollow fiber membrane, and the like.

As means generally used as the form of capture unit 208, a cartridge type filter can be exemplified. As the cartridge type filter, a deep filtration type such as a pincushion filter, a surface filtration type such as a pleated filter and a membrane filter, or a combination thereof can be used.

Capture unit 208 includes opening and closing valve 218 and capture unit drainage port 212.

Opening and closing valve 218 is a valve provided below capture unit 208, and is a valve that controls drainage from capture unit 208. By opening opening and closing valve 218, water in capture unit 208 can be discharged from capture unit drainage port 212 to the outside of the apparatus.

Capture unit drainage port 212 is an opening through which water in capture unit 208 is discharged to the outside of the apparatus. By opening opening and closing valve 218 provided upstream of capture unit drainage port 212, water in capture unit 208 can be discharged from capture unit drainage port 212 to the outside of the apparatus.

### <7. Opening and closing valve and flow path switching valve>

A plurality of opening and closing valves (opening and closing valves 214 to 219) are provided in the respective flow paths, and switches between an "open" state and a "closed" state in the respective flow paths.

The plurality of opening and closing valves (opening and closing valve 214, opening and closing valve 215, opening and closing valve 217, and opening and closing valve 219) start or stop the flow of water to the respective flow paths by opening and closing the valves.

Opening and closing valve 216 and opening and closing valve 218 are opened at the time of switching to the water softening process after the end of the regeneration process, and discharge the recycled circulating water to the outside of the apparatus.

The plurality of flow path switching valves (flow path switching valves 220 to 223) are provided in first soft water tank 203a, first neutralization tank 204a, second soft water tank 203b, the second neutralization tank 204b, respectively. Each of the plurality of flow path switching valves includes three openings. The first opening is an inflow and outflow port through which water can flow in and out, the second opening is an inlet port that does not function as an outflow port through which water flows out but functions as an inlet port through which water flows in, and the third opening is an outflow port that does not function as an inlet port through which water flows in but functions as an outflow port through which water flows out. In each of the plurality of flow path switching valves, the inflow and outflow port is always "opened", and when one of the inlet port and the outflow port is "opened" depending on the water flow direction, the other is "closed". By providing flow path switching valves 220 to 223, the number of opening and closing valves required for each flow path in water softening apparatus 201 can be reduced, and the cost of water softening apparatus 201 can be reduced.

Furthermore, the plurality of opening and closing valves (opening and closing valves 214 to 219) and the plurality of flow path switching valves (flow path switching valves 220 to 223) are each connected to controller 213 to be described later so as to be able to communicate with each other in a wireless or wired manner.

### <8. Drainage port>

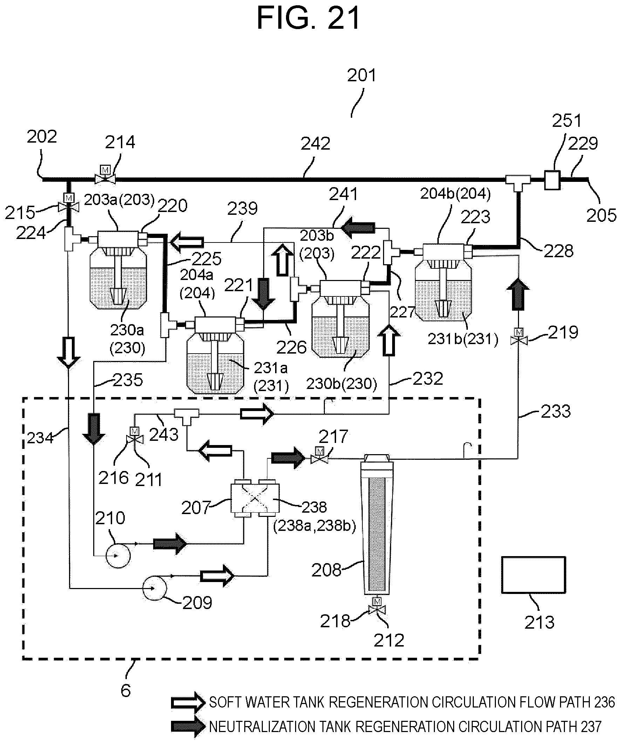

Drainage port 211 is an opening provided at an end portion of drainage flow path 243, and is an opening for discharging water in the device in the regeneration process and the water softening process to the outside of the apparatus. Opening and closing valve 216 is provided upstream of drainage port 211, and drainage from drainage port 211 can be performed by opening opening and closing valve 216. Drainage port 211 discharges water in soft water tank regeneration circulation flow path 236 and neutralization tank regeneration circulation flow path 237 (see Fig. 21) to the outside of the apparatus, for example, after the end of the regeneration process. The drainage from drainage port 211 may be performed when switching to the water softening process is performed after the end of the regeneration process.

### <9. Flow path>

Bypass flow path 242 is a flow path that communicatively connects inlet port 202 and flow path 229, and opening and closing valve 214 is provided on the flow path. By bypass flow path 242, it is possible to supply the raw water as untreated water to the downstream side of neutralization tank 204 while bypassing soft water tank 203 and neutralization tank 204 without passing the raw water through soft water tank 203 and neutralization tank 204. Furthermore, due to bypass flow path 242, even in a case where the regeneration process is performed, the user of water softening apparatus 201 can obtain raw water from water intake port 205.

### <10. Water softening flow path>

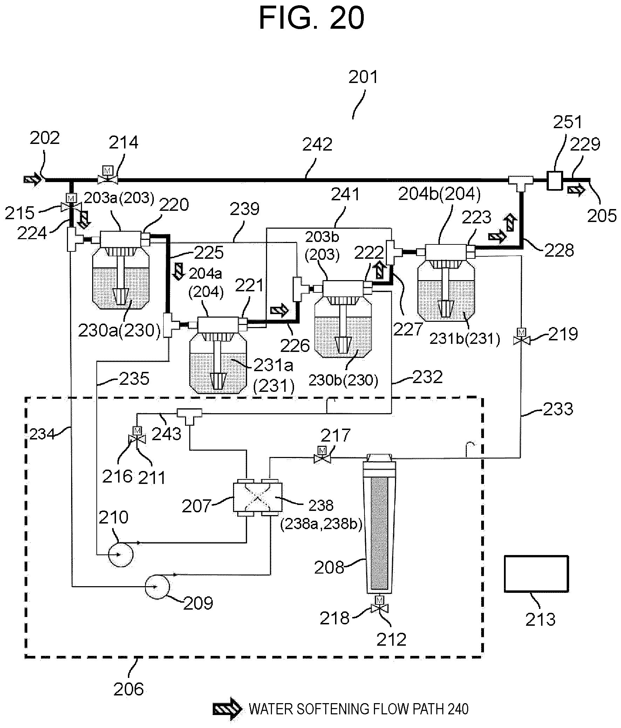

Water softening flow path 240 formed in the water softening process of water softening apparatus 201 will be described with reference to Fig. 20. Fig. 20 is a configuration diagram illustrating water softening flow path 240 of water softening apparatus 201.

Water softening flow path 240 (indicated by a hatched arrow in Fig. 20) is a flow path for softening raw water, and the raw water having flowed through water softening flow path 240 becomes neutral soft water and is discharged from water intake port 205 to the outside of the apparatus.

Water softening flow path 240 is a flow path that allows water to pass through inlet port 202, flow path 224, first soft water tank 203a, flow path 225, first neutralization tank 204a, flow path 226, second soft water tank 203b, flow path 227, second neutralization tank 204b, flow path 228, flow rate measurement unit 251, and flow path 229, which is a route through which water passes through soft water tank 203 and neutralization tank 204, and supplies soft water from water intake port 205.

Flow path 224 is a flow path connecting inlet port 202 to first soft water tank 203a. That is, flow path 224 is a flow path that guides raw water containing a hardness component from inlet port 202 to first soft water tank 203a.

Flow path 225 is a flow path connecting first soft water tank 203a to first neutralization tank 204a. That is, flow path 225 is a flow path that guides the water softened in first soft water tank 203a to first neutralization tank 204a.

Flow path 226 is a flow path connecting first neutralization tank 204a to second soft water tank 203b. That is, flow path 226 is a flow path that guides the water neutralized in first neutralization tank 204a to second soft water tank 203b.

Flow path 227 is a flow path connecting second soft water tank 203b to second neutralization tank 204b. That is, flow path 227 is a flow path that guides the water softened in second soft water tank 203b to second neutralization tank 204b.

Flow path 228 is a flow path connecting second neutralization tank 204b to flow path 229. That is, flow path 228 is a flow path that guides the softened raw water from second neutralization tank 204b to flow path 229.

Flow path 229 is a flow path connecting flow path 228 to water intake port 205 and bypass flow path 242 to water intake port 205. That is, flow path 229 is a flow path that guides softened raw water from flow path 228 to water intake port 205, and a flow path that guides raw water from bypass flow path 242 to water intake port 205.

As illustrated in Fig. 20, opening and closing valve 215 is installed on flow path 224 on the downstream side of inlet port 202 and on the upstream side of first soft water tank 203a. Then, by closing opening and closing valve 214 and opening opening and closing valve 215, first soft water tank 203a and inlet port 202 are communicably connected. Furthermore, flow path switching valve 220 is switched so that first soft water tank 203a and first neutralization tank 204a communicate with each other, flow path switching valve 221 is switched so that first neutralization tank 204a and second soft water tank 203b communicate with each other, flow path switching valve 222 is switched so that second soft water tank 203b and second neutralization tank 204b communicate with each other, and flow path switching valve 223 is switched so that second neutralization tank 204b and water intake port 205 communicate with each other. As a result, water softening flow path 240 that communicatively connects inlet port 202 to flow path 224, first soft water tank 203a, flow path 225, first neutralization tank 204a, flow path 226, second soft water tank 203b, flow path 227, second neutralization tank 204b, flow path 228, flow path 229, and water intake port 205 is formed.

### <11. Regeneration circulation flow path>

Next, soft water tank regeneration circulation flow path 236 and neutralization tank regeneration circulation flow path 237 formed at the time of regeneration process of water softening apparatus 201 will be described with reference to Fig. 21. Fig. 21 is a configuration diagram illustrating soft water tank regeneration circulation flow path 236 and neutralization tank regeneration circulation flow path 237 of water softening apparatus 201.

First, soft water tank regeneration circulation flow path 236 will be described.

Soft water tank regeneration circulation flow path 236 is a flow path for regenerating first soft water tank 203a and second soft water tank 203b by circulating acidic electrolytic water during the regeneration process, and as illustrated in Fig. 21 (white arrow), is a flow path in which water delivered by first water pump 209 circulates through electrolytic tank 207, second soft water tank 203b, and first soft water tank 203a, returns to electrolytic tank 207, and circulates.

Specifically, soft water tank regeneration circulation flow path 236 includes first supply flow path 232, neutralization tank bypass flow path 239, and first collection flow path 234, and electrolytic tank 207, second soft water tank 203b, first soft water tank 203a, and first water pump 209 are provided on soft water tank regeneration circulation flow path 236.

First supply flow path 232 is a flow path that communicably connects the downstream side of electrolytic tank 207 at the time of the regeneration process to the downstream side of second soft water tank 203b at the time of the water softening process, and is a flow path that supplies acidic electrolytic water from electrolytic tank 207 to second soft water tank 203b.

Neutralization tank bypass flow path 239 is a flow path that bypasses first neutralization tank 204a and communicatively connects the upstream side of second soft water tank 203b to the downstream side of first soft water tank 203a during the water softening process, and is a flow path for supplying acidic electrolytic water from second soft water tank 203b to first soft water tank 203a.

First collection flow path 234 is a flow path that communicatively connects the upstream side of first soft water tank 203a to electrolytic tank 207 during the water softening process, and is a flow path that collects acidic electrolytic water containing a hardness component that has passed through first soft water tank 203a and second soft water tank 203b into electrolytic tank 207. First collection flow path 234 is provided with first water pump 209.

Furthermore, soft water tank regeneration circulation flow path 236 is a flow path that introduces the acidic electrolytic water delivered from electrolytic tank 207 into first soft water tank 203a and second soft water tank 203b from the downstream side of each of first soft water tank 203a and second soft water tank 203b during the water softening process, and causes the acidic electrolytic water to flow out from the upstream side having a larger adsorption amount of the hardness component than the downstream side of each soft water tank 203.

Next, neutralization tank regeneration circulation flow path 237 will be described.

Neutralization tank regeneration circulation flow path 237 is a flow path for regenerating first neutralization tank 204a and second neutralization tank 204b by circulating alkaline electrolytic water during the regeneration process, and as illustrated in Fig. 21 (black arrow), is a flow path in which water delivered by second water pump 210 circulates through electrolytic tank 207, second neutralization tank 204b, and first neutralization tank 204a, and returns to electrolytic tank 207 to circulate.

Specifically, neutralization tank regeneration circulation flow path 237 includes second supply flow path 233, soft water tank bypass flow path 241, and second collection flow path 235, and electrolytic tank 207, second neutralization tank 204b, first neutralization tank 204a, and second water pump 210 are provided on neutralization tank regeneration circulation flow path 237.

Second supply flow path 233 is a flow path that communicatively connects the downstream side of electrolytic tank 207 at the time of the regeneration process to the downstream side of second neutralization tank 204b at the time of the water softening process, and is a flow path that supplies alkaline electrolytic water from electrolytic tank 207 to second neutralization tank 204b. Opening and closing valve 217, capture unit 208, and opening and closing valve 219 are installed in second supply flow path 233.

Soft water tank bypass flow path 241 is a flow path that bypasses second soft water tank 203b and communicatively connects the upstream side of second neutralization tank 204b to the downstream side of first neutralization tank 204a during the water softening process, and is a flow path for supplying alkaline electrolytic water from second neutralization tank 204b to first neutralization tank 204a.

Second collection flow path 235 is a flow path that communicatively connects the upstream side of first neutralization tank 204a to electrolytic tank 207 during the water softening process, and is a flow path that collects the alkaline electrolytic water having passed through first neutralization tank 204a and second neutralization tank 204b into electrolytic tank 207. Second collection flow path 235 is provided with second water pump 210.

### <12. Controller>

With reference to Fig. 22, each function of controller 213 according to the present exemplary embodiment will be described. Fig. 22 is a functional block diagram of water softening apparatus 201 according to the third exemplary embodiment.

Controller 213 controls execution of the water softening process, execution of the regeneration process, and switching between processes.

Furthermore, controller 213 controls opening and closing valve 216 and opening and closing valve 218 to control drainage in the drainage process.

Furthermore, controller 213 controls flow path switching valves 220 to 223, opening and closing valve 214, opening and closing valve 215, opening and closing valve 217, and opening and closing valve 219 to execute switching of the flow paths.

Controller 213 includes hardness storage unit 252, adsorption amount calculation unit 253, removal amount calculation unit 254, residual value calculation unit 255, cumulative value calculation unit 256, maximum value specification unit 257, estimated value calculation unit 258, comparison unit 259, and process management unit 260.

### <12.1 Hardness storage unit>

Hardness storage unit 252 stores the hardness component concentration of the raw water flowing into water softening apparatus 201. As the hardness component concentration of the raw water, a value corresponding to a region where water softening apparatus 201 is used or a value of the hardness component concentration measured in advance may be input, or a device capable of measuring the hardness component concentration of the raw water may be installed on the downstream side of inlet port 202, that is, flow path 224, and a value measured by the device may be input.

### <12.2 Adsorption amount calculation unit>

Adsorption amount calculation unit 253 calculates an amount of cations adsorbed by weakly acidic cation exchange resin 230 in the water softening process as the adsorption amount (ion adsorption amount). The adsorption amount is calculated by multiplying the amount of raw water subjected to the water softening process (the amount of soft water taken out from water intake port 205) by the hardness component concentration of the raw water. More precisely, the value of the concentration of the hardness component removed by the water softening process (the difference between the hardness component concentration of the raw water and the hardness component concentration of the soft water) is multiplied by the amount of the soft water taken out from water intake port 205 to calculate.

Note that, in a case where raw water having a hardness component concentration of general domestic water (for example, the hardness component concentration is 250 mg/L or less.) is softened, the hardness component concentration of the soft water taken out from water intake port 205 is about 1% or less as compared with the hardness component concentration of the raw water, and thus can be substantially regarded as "0". Therefore, the hardness component concentration of the raw water may be used as it is for calculating the adsorption amount.

Furthermore, the amount of anions adsorbed to weakly basic anion exchange resin 231 is an ion equivalent amount substantially equal to the hardness component adsorbed to weakly acidic cation exchange resin 230. Therefore, the amount of adsorbed anions can also be calculated by calculating the amount of adsorbed hardness components. More specifically, when cations (calcium ions or magnesium ions) as hardness components contained in the raw water passed through in the water softening process are adsorbed to weakly acidic cation exchange resin 230, hydrogen ions of equivalent ion equivalents are released (for example, 2 mol of hydrogen ions are released for adsorption of 1 mol of calcium ions.). Moreover, the released hydrogen ions are adsorbed together with equivalent ion equivalents of anions in weakly basic anion exchange resin 231. Therefore, the ion equivalents of cations adsorbed to weakly acidic cation exchange resin 230 and anions adsorbed to weakly basic anion exchange resin 231 are the same. However, in a case where the neutralization in weakly basic anion exchange resin 231 is not completed, for example, when the flow rate of the raw water exceeds the assumed value in the water softening process, the adsorption amounts of hydrogen ions and anions decrease to be less than or equal to the ion equivalent of cations adsorbed to weakly acidic cation exchange resin 230.

Adsorption amount calculation unit 253 includes unit time adsorption amount calculation unit 253a that calculates an adsorption amount per unit time (for example, one day) as a unit time adsorption amount. The unit time adsorption amount is calculated by multiplying the amount of raw water subjected to the water softening process per unit time, that is, the amount of soft water taken out from water intake port 205 per unit time by the hardness component concentration of the raw water. More precisely, the value of the concentration of the hardness component removed by the water softening process (the difference between the hardness component concentration of the raw water and the hardness component concentration of the soft water) is multiplied by the amount of the soft water taken out from water intake port 205 per unit time to calculate.

### <12.3 Removal amount calculation unit>

Removal amount calculation unit 254 calculates the amount of cations that can be removed from weakly acidic cation exchange resin 230 as the removal amount (ion removal amount) based on the operation time of electrolytic tank 207. Since weakly acidic cation exchange resin 230 has a high hydrogen ion exchange order, most of the inflowing hydrogen ions are consumed for regeneration of the ion exchange resin. That is, the generation amount of hydrogen ions in electrolytic tank 207 can be set to the cation removal amount. The hydrogen ion generation amount (mol) and the hydroxide ion generation amount (mol) in electrolytic tank 207 are derived from the current value (A = C/sec), the Faraday constant (C/mol), the generation efficiency (%), and the regeneration time (h). Specifically, it is derived by the following Formula (2). Generation amount (mol) = current value (A = C/sec) × generation efficiency (%) × regeneration time (h) × 3600 ÷ Faraday constant (C/mol)...... (2)

Note that, since the current value and the generation efficiency are set by predetermined electrolysis performance information, the current value and the generation efficiency are fixed values. Therefore, when the regeneration time is determined, the generation amount of hydrogen ions supplied from electrolytic tank 207 can be derived, and the amount of cations that can be removed from weakly acidic cation exchange resin 230 can be calculated. In other words, removal amount calculation unit 254 calculates, as the removal amount, the amount of cations that can be removed from weakly acidic cation exchange resin 230 by the regeneration process.

### <12.4 Residual value calculation unit>

Residual value calculation unit 255 calculates an amount of cations adsorbed on weakly acidic cation exchange resin 230 at the end of the regeneration process as a residual value. The residual value is calculated by adding the adsorption amount of weakly acidic cation exchange resin 230 by the water softening process performed after the end of the previous regeneration process to the residual value calculated at the end of the previous regeneration process, and subtracting the removal amount of weakly acidic cation exchange resin 230 by the regeneration process. Note that, in the initial residual value calculation, the residual value at the end of the previous regeneration process is set to "0".

### <12.5 Cumulative value calculation unit>

Cumulative value calculation unit 256 calculates a cumulative value of the adsorption amount from the end of the previous regeneration process. In other words, the cumulative value of the amount of cations adsorbed to each of weakly acidic cation exchange resins 230 in the water softening process after the end of the previous regeneration process is calculated. For the calculation, the adsorption amount calculated for the water softening process performed after the end of the previous regeneration process may be used, or similarly to adsorption amount calculation unit 253, the amount of raw water subjected to the water softening process may be multiplied by the hardness component concentration of the raw water.

### <12.6 Maximum value specification unit>

Maximum value specification unit 257 selects the largest one of the unit time adsorption amounts from the end of the previous regeneration process as the maximum value. In other words, the amount of cations adsorbed to weakly acidic cation exchange resin 230 when the amount of softening treatment of the raw water is the largest in the water softening processes divided for each unit time after the end of the previous regeneration process is recorded as the maximum value. Note that the water softening treatment amount is the amount of raw water softened in the water softening process.

### <12.7 Estimated value calculation unit>

Estimated value calculation unit 258 calculates a sum of the residual value calculated by residual value calculation unit 255, the cumulative value calculated by cumulative value calculation unit 256, and the maximum value specified by maximum value specification unit 257, and calculates an estimated value. In other words, estimated value calculation unit 258 calculates, as an estimated value, the sum of the amount of cations currently adsorbed to each of weakly acidic cation exchange resins 230 and the maximum value of the amount of cations estimated to be adsorbed to each of weakly acidic cation exchange resins 230 in a case where the next water softening process is performed for a unit time. As a result, since the amount of cations is calculated in view of the water softening treatment amount after the previous regeneration process, the maximum sum of the residual value and the cumulative value at the end of the next water softening process can be estimated.

### <12.8 Comparison unit>

Comparison unit 259 compares the amount of cations that can be adsorbed to each of weakly acidic cation exchange resins 230 with the estimated value calculated by estimated value calculation unit 258, and determines whether or not the estimated value exceeds the amount of cations that can be adsorbed. Although details will be described later, in a case where the estimated value exceeds the amount of adsorbable cations, there is a possibility that the water softening performance is deteriorated in the next water softening process and the hardness of soft water to be taken out exceeds a predetermined standard (the water to be taken out is no longer soft water). Therefore, process management unit 260 to be described later controls to perform the regeneration process.

Note that, since the amount of cations that can be adsorbed to weakly acidic cation exchange resin 230 (hereinafter referred to as a water softenable amount) is proportional to the amount of the ion exchange resin, it can be set in advance according to the amount of weakly acidic cation exchange resin 230 filled in soft water tank 203.

### <12.9 Process management unit>

Process management unit 260 determines whether or not to perform the regeneration process for each unit period in which the water softening process ends. Specifically, the regeneration process is performed in a case where the sum of the residual value and the cumulative value exceeds the removal amount. On the other hand, in a case where the sum of the residual value and the cumulative value is less than the removal amount, the regeneration process is not performed, the water softening process is continued, and the water softening process is performed during the next unit period. As a result, the number of times of performing the regeneration process can be suppressed, and the number of times can be suppressed to the necessary minimum.

Furthermore, in a case where the estimated value exceeds the water softenable amount even if the sum of the residual value and the cumulative value is less than the removal amount, the regeneration process is performed. This makes it possible to prevent a decrease in water softening performance caused by the sum of the residual value and the cumulative value exceeding the water softenable amount in the middle of the next water softening process and an increase in hardness of soft water taken out from water intake port 205.

Each configuration of controller 213 and each controller of the other exemplary embodiments in the present specification can be realized by an element including a central processing unit (CPU) of a computer and a mechanical device as hardware, and is realized by a computer program or the like as software, but is realized here by cooperation thereof. Accordingly, these functional blocks can be realized in various forms by a combination of hardware and software.

The above is the configuration of water softening apparatus 201.

Next, the operation of water softening apparatus 201 will be described.

### <13. Water softening process, regeneration process, and drainage process>

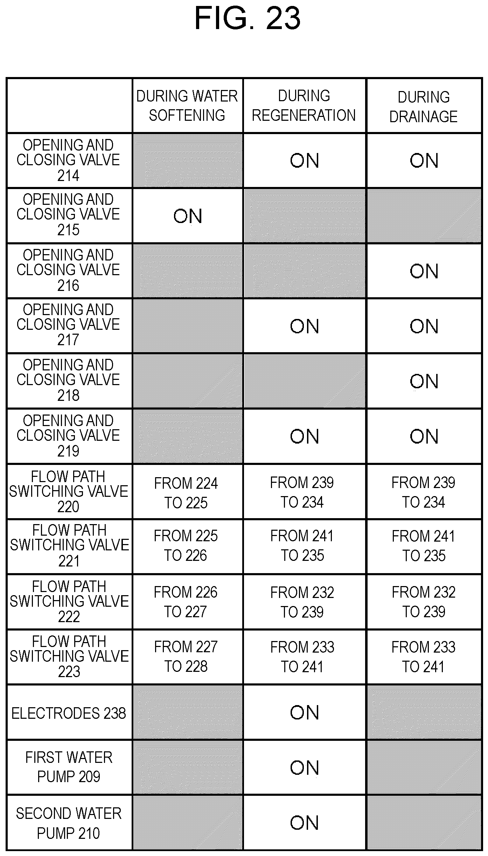

Next, the water softening process, the regeneration process, and the drainage process of water softening apparatus 201 will be described with reference to Fig. 23. Fig. 23 is a diagram illustrating a state of water softening apparatus 201 during operation.

In the water softening process, the regeneration process, and the drainage process, as illustrated in Fig. 23, controller 213 switches opening and closing valves 214 to 219, flow path switching valves 220 to 223, electrodes 238 of electrolytic tank 207, first water pump 209, and second water pump 210 to perform control so as to be in respective circulation states.

Here, "ON" in Fig. 23 indicates a state in which the corresponding opening and closing valve is "opened", a state in which electrodes 238 are energized, a state in which the corresponding water pump is operating, and a state in which flow rate measurement unit 251 is energized. Blanks indicate a state in which the corresponding opening and closing valve is "closed", a state in which electrodes 238 are not energized, a state in which the corresponding water pump is stopped, and a state in which flow rate measurement unit 251 is not energized.

Furthermore, "FROM (Number of component A) TO (Number of component B)" in Fig. 23 indicates a state in which the corresponding flow path switching valve connects the flow paths in a direction in which water is supplied from component A to component B. For example, flow path switching valve 220 in the water softening process connects the respective flow paths so that water can be supplied from flow path 224 to flow path 225.

### <13.1 Water softening process>

First, an operation of water softening apparatus 201 in the water softening process will be described with reference to Fig. 20 and a field of "DURING WATER SOFTENING" in Fig. 23.

In water softening apparatus 201, as illustrated in Fig. 23, in the water softening process, opening and closing valve 215 provided in flow path 224 is opened in a state where opening and closing valve 214 is closed. As a result, the raw water containing the hardness component flows in from the outside. Since the flowed raw water flows through first soft water tank 203a, first neutralization tank 204a, second soft water tank 203b, and second neutralization tank 204b in this order, the softened water (neutral soft water) can be taken out from water intake port 205 in water softening apparatus 201.

At this time, flow path switching valve 220 is in a connection state capable of supplying water from flow path 224 to flow path 225, flow path switching valve 221 is in a connection state capable of supplying water from flow path 225 to flow path 226, flow path switching valve 222 is in a connection state capable of supplying water from flow path 226 to flow path 227, and flow path switching valve 223 is in a connection state capable of supplying water from flow path 227 to flow path 228. All of opening and closing valves 216 to 219 are in a closed state. Furthermore, the operations of electrodes 238 of electrolytic tank 207, first water pump 209, and the second water pump 210 are also stopped.

With such control, as illustrated in Fig. 20, in the water softening process, the raw water is supplied from inlet port 202 to first soft water tank 203a through flow path 224 by the pressure of the raw water flowing in from the outside. The raw water supplied to first soft water tank 203a flows through weakly acidic cation exchange resin 230 provided in first soft water tank 203a. At this time, cations as hardness components in the raw water are adsorbed by the action of weakly acidic cation exchange resin 230, and hydrogen ions are released (ion exchange is performed). Cations are removed from the raw water, and thus, the raw water is softened. Since the softened water contains a large amount of hydrogen ions that have been exchanged for the hardness component and flowed out, the softened water is acidified to become acidic water (first soft water) having a low pH (hydrogen ion concentration index). Here, when water containing a large amount of a permanent hardness component (for example, a sulfate such as calcium sulfate or a chloride such as magnesium chloride) as the hardness component is softened, the pH of the water containing a large amount of the permanent hardness component is more likely to decrease than water containing a large amount of a temporary hardness component (carbonates such as, for example, calcium carbonate). Since softening of water hardly proceeds in a state in which the pH is lowered, water having flowed through first soft water tank 203a is caused to pass through first neutralization tank 204a to perform neutralization.

The first soft water flows through flow path 225 via flow path switching valve 220 provided in first soft water tank 203a and flows into first neutralization tank 204a. In first neutralization tank 204a, hydrogen ions contained in the softened water are adsorbed by the action of weakly basic anion exchange resin 231. That is, since hydrogen ions are removed from the water softened by first soft water tank 203a, the lowered pH is increased and neutralized. Therefore, as compared with the case where water softened in first soft water tank 203a is directly softened in second soft water tank 203b, the water softening process in second soft water tank 203b can be easily advanced.

The water (neutralized first soft water) neutralized by first neutralization tank 204a flows through flow path 226 via flow path switching valve 221 provided in first neutralization tank 204a and flows into second soft water tank 203b. In second soft water tank 203b, cations as hardness components are adsorbed and hydrogen ions are released by the action of weakly acidic cation exchange resin 230. In second soft water tank 203b, hardness components that cannot be removed in first soft water tank 203a are exchanged for hydrogen ions of weakly acidic cation exchange resin 230. That is, the water flowing into second soft water tank 203b is further softened to become soft water (second soft water).

The second soft water flows through flow path 227 via flow path switching valve 222 provided in second soft water tank 203b and flows into second neutralization tank 204b. In second neutralization tank 204b, hydrogen ions contained in the inflowing second soft water are adsorbed by the action of weakly basic anion exchange resin 231. That is, since the hydrogen ions are removed from the second soft water, the decreased pH increases, and the second soft water becomes the neutral soft water (neutralized second soft water) that can be used as domestic water. The neutralized second soft water flows through flow path 228, flow rate measurement unit 251, and flow path 229 via flow path switching valve 223 provided in second neutralization tank 204b, and is taken out from water intake port 205.

That is, in the water softening process, the raw water flows through first soft water tank 203a, first neutralization tank 204a, second soft water tank 203b, and second neutralization tank 204b in this order. As a result, the raw water containing the hardness component flows out of first soft water tank 203a before the pH of the raw water is lowered by the water softening process in first soft water tank 203a, is neutralized in first neutralization tank 204a, is softened in second soft water tank 203b, and is neutralized in second neutralization tank 204b. Therefore, as compared with the case where each of the soft water tank and the neutralization tank is constituted by a single body, it is possible to suppress a decrease in pH of water flowing in the soft water tank, that is, acidification, and thus exchange between the hardness component and hydrogen ions held by weakly acidic cation exchange resin 230 in the soft water tank (particularly, second soft water tank 203b) easily occurs. Therefore, the water softening performance can be improved.

In water softening apparatus 201, when the specified time zone is reached, in a case where the sum of the residual value and the cumulative value to be described later exceeds the removal amount, or in a case where the estimated value exceeds the water softenable amount, the water softening process is ended and the regeneration process is executed.

### <13.2 Regeneration process>

Next, an operation of water softening apparatus 201 in the regeneration process by regeneration device 206 will be sequentially described with reference to Fig. 21 and a field of "DURING REGENERATION" in Fig. 23.

In water softening apparatus 201, the cation exchange capacity of first soft water tank 203a and second soft water tank 203b filled with weakly acidic cation exchange resin 230 decreases or disappears as the use is continued. That is, ion exchange cannot be performed after all the hydrogen ions, which are functional groups of the cation exchange resin, are exchanged for calcium ions or magnesium ions, which are the hardness components. In such a state, the hardness components are contained in treated water. Similarly, in first neutralization tank 204a and second neutralization tank 204b filled with weakly basic anion exchange resin 231, the anion exchange performance and the neutralization performance are deteriorated or disappeared when the use is continued. In such a state, the acidic soft water flowing in from the soft water tank cannot be neutralized. Therefore, in water softening apparatus 201, it is necessary to perform the process of regenerating first soft water tank 203a, second soft water tank 203b, first neutralization tank 204a, and second neutralization tank 204b by regeneration device 206. In the present exemplary embodiment, controller 213 determines the execution timing of the regeneration process to suppress the number of times of execution of the regeneration process.

In the regeneration process, controller 213 closes opening and closing valve 215, opening and closing valve 216, and opening and closing valve 218, and opens opening and closing valve 214, opening and closing valve 217, and opening and closing valve 219. Controller 213 brings flow path switching valve 220 into a connection state in which water can be supplied from neutralization tank bypass flow path 239 to first collection flow path 234, brings flow path switching valve 221 into a connection state in which water can be supplied from soft water tank bypass flow path 241 to second collection flow path 235, brings flow path switching valve 222 into a connection state in which water can be supplied from first supply flow path 232 to neutralization tank bypass flow path 239, and brings flow path switching valve 223 into a connection state in which water can be supplied from second supply flow path 233 to soft water tank bypass flow path 241. That is, first soft water tank 203a and second soft water tank 203b are in a state of communicating and connecting, and first neutralization tank 204a and second neutralization tank 204b are in a state of communicating and connecting. Controller 213 stops the drainage of drainage port 211 and capture unit drainage port 212. As a result, as illustrated in Fig. 21, soft water tank regeneration circulation flow path 236 and neutralization tank regeneration circulation flow path 237 are formed.

When first water pump 209 and second water pump 210 are operated, the acidic electrolytic water and the alkaline electrolytic water in electrolytic tank 207 circulate through each of soft water tank regeneration circulation flow path 236 and neutralization tank regeneration circulation flow path 237.

Furthermore, controller 213 energizes electrolytic tank 207 so that the anode has a high potential with respect to the cathode (positive electrolysis). As a result, the hydrogen ions are generated at the anode during electrolysis, and the acidic electrolytic water is generated near the anode. On the other hand, the hydroxide ions are generated at the cathode, and the alkaline electrolytic water is generated near the cathode.

The acidic electrolytic water generated in electrolytic tank 207 flows through first supply flow path 232, is supplied into second soft water tank 203b via flow path switching valve 222, and flows through weakly acidic cation exchange resin 230 inside. Then, the acidic electrolytic water flowing through second soft water tank 203b flows through neutralization tank bypass flow path 239, is supplied into first soft water tank 203a via flow path switching valve 220, and flows through weakly acidic cation exchange resin 230 inside. That is, by passing acidic electrolytic water through weakly acidic cation exchange resin 230, cations (hardness components) adsorbed to weakly acidic cation exchange resin 230 and hydrogen ions contained in the acidic electrolytic water undergo an ion exchange reaction. As a result, weakly acidic cation exchange resin 230 is regenerated.

Thereafter, the acidic electrolytic water having flowed through first soft water tank 203a contains cations and flows into first collection flow path 234. That is, the acidic electrolytic water containing cations that have flowed through weakly acidic cation exchange resin 230 is collected into electrolytic tank 207 via first collection flow path 234.

As described above, soft water tank regeneration circulation flow path 236 is configured to cause the acidic electrolytic water to flow from the downstream side of second soft water tank 203b, which is a soft water tank located most downstream from the inlet port of the raw water and is a soft water tank having weakly acidic cation exchange resin 230 in which the adsorption amount of hardness components is smaller than that in the upstream soft water tank, and to flow into the downstream side of first soft water tank 203a located upstream and having weakly acidic cation exchange resin 230 to which more hardness components are adsorbed than those in second soft water tank 203b.

That is, soft water tank regeneration circulation flow path 236 is a flow path that causes the acidic electrolytic water fed from electrolytic tank 207 to flow through second soft water tank 203b, then feeds the acidic electrolytic water to first soft water tank 203a by neutralization tank bypass flow path 239, causes the acidic electrolytic water to flow through first soft water tank 203a, and causes the acidic electrolytic water to flow into electrolytic tank 207 via first collection flow path 234.

Thus, in the regeneration process, first, the acidic electrolytic water discharged from electrolytic tank 207 flows into second soft water tank 203b having a smaller adsorption amount of hardness components than first soft water tank 203a, and the acidic electrolytic water containing hardness components is discharged from second soft water tank 203b to first soft water tank 203a. In the regeneration of weakly acidic cation exchange resin 230 in second soft water tank 203b, since the consumption of hydrogen ions in the acidic electrolytic water is smaller than that in first soft water tank 203a, reduction in the hydrogen ion concentration can be suppressed as compared with the regeneration of first soft water tank 203a. Therefore, it is possible to suppress the acidic electrolytic water containing a large amount of hydrogen ions from flowing into first soft water tank 203a and the hardness components from being re-adsorbed in first soft water tank 203a. Therefore, a decrease in the efficiency of the regeneration process can be suppressed, and the regeneration time can be shortened. Note that the downstream side refers to the downstream side in the flow path at the time of the water softening process.

On the other hand, the alkaline electrolytic water generated in the vicinity of the cathode of electrolytic tank 207 flows through second supply flow path 233 and capture unit 208, is supplied into second neutralization tank 204b via flow path switching valve 223, and flows through weakly basic anion exchange resin 231 inside. Then, the alkaline electrolytic water flowing through second neutralization tank 204b flows through soft water tank bypass flow path 241, is supplied into first neutralization tank 204a via flow path switching valve 221, and flows through weakly basic anion exchange resin 231 inside. That is, by allowing alkaline electrolytic water to pass through weakly basic anion exchange resin 231, anions adsorbed to weakly basic anion exchange resin 231 and hydroxide ions contained in the alkaline electrolytic water undergo an ion exchange reaction. As a result, weakly basic anion exchange resin 231 is regenerated.

Thereafter, the alkaline electrolytic water having flowed through first neutralization tank 204a contains anions and flows into second collection flow path 235. That is, the alkaline electrolytic water containing anions that has flowed through weakly basic anion exchange resin 231 is collected in electrolytic tank 207 via second collection flow path 235.

As described above, neutralization tank regeneration circulation flow path 237 is configured to cause the alkaline electrolytic water to flow from the downstream side of second neutralization tank 204b, which is the neutralization tank located most downstream from the inlet port of the raw water and includes weakly basic anion exchange resin 231 having a smaller amount of adsorbed anions than the neutralization tank on the upstream side, and to flow into the downstream side of first neutralization tank 204a, which is located on the upstream side and includes weakly basic anion exchange resin 231 to which more anions are adsorbed than second neutralization tank 204b.

That is, neutralization tank regeneration circulation flow path 237 is a flow path that causes the alkaline electrolytic water fed from electrolytic tank 207 to flow through second neutralization tank 204b, then feeds the alkaline electrolytic water to first neutralization tank 204a by soft water tank bypass flow path 241, causes the alkaline electrolytic water to flow through first neutralization tank 204a, and causes the alkaline electrolytic water to flow into electrolytic tank 207 via second collection flow path 235.

Thus, during the regeneration process, the alkaline electrolytic water flows into second neutralization tank 204b having a smaller adsorption amount of anions than first neutralization tank 204a, and the alkaline electrolytic water containing anions is discharged from second neutralization tank 204b to first neutralization tank 204a. In the regeneration of weakly basic anion exchange resin 231 in second neutralization tank 204b, the consumption of hydroxide ions in the alkaline electrolytic water is smaller than that in first neutralization tank 204a, so that the reduction in the hydroxide ion concentration can be suppressed as compared with the regeneration of first neutralization tank 204a. Therefore, it is possible to suppress the alkaline electrolytic water containing a large amount of hydroxide ions from flowing into first neutralization tank 204a, and it is possible to suppress re-adsorption of anions in first neutralization tank 204a. Therefore, a decrease in the efficiency of the regeneration process can be suppressed, and the regeneration time can be shortened.

In electrolytic tank 207, the hardness component, which is a cation released from first soft water tank 203a and second soft water tank 203b during the regeneration process, reacts with the alkaline electrolytic water to generate a precipitate. The precipitate contained in the alkaline electrolytic water delivered from electrolytic tank 207 is captured by capture unit 208. As a result, it is possible to suppress the precipitate from flowing into second neutralization tank 204b and accumulating. By suppressing the deposition of the precipitates in this manner, it is possible to suppress an increase in hardness of the soft water fed from second neutralization tank 204b due to the fact that the precipitates deposited in second neutralization tank 204b react with hydrogen ions contained in the water released from second soft water tank 203b and ionize when the water softening process is resumed after the end of the regeneration process.

In water softening apparatus 201, in a case where the time zone specified by controller 213 is reached, or in a case where the regeneration process exceeds a certain period of time (for example, 4 hours) or a regeneration time based on instruction information from a device user, or the like, the regeneration process is ended, and the drainage process is executed.

Note that, in a case where the user wants to obtain water during the regeneration process, by opening a faucet (not illustrated) or the like connected to water softening apparatus 201, the raw water passes through bypass flow path 242 from inlet port 202 and flows out from water intake port 205, so that the raw water can be used without waiting for the end of the regeneration process.

### <13.3 Drainage process>

In the water softening apparatus 201, when the regeneration process is ended, the process proceeds to the drainage process. Here, the drainage process is a process of draining the acidic electrolytic water and the alkaline electrolytic water remaining in soft water tank regeneration circulation flow path 236 and neutralization tank regeneration circulation flow path 237.

Next, the operation of water softening apparatus 201 during the drainage process will be described with reference to the column of "DURING DRAINAGE" in Fig. 23.

In water softening apparatus 201, as illustrated in Fig. 23, in the drainage process (during drainage), controller 213 closes opening and closing valve 215 and opens opening and closing valve 214 and opening and closing valves 216 to 219. Controller 213 brings flow path switching valve 220 into a connection state in which water can be supplied from neutralization tank bypass flow path 239 to first collection flow path 234, brings flow path switching valve 221 into a connection state in which water can be supplied from soft water tank bypass flow path 241 to second collection flow path 235, brings flow path switching valve 222 into a connection state in which water can be supplied from first supply flow path 232 to neutralization tank bypass flow path 239, and brings flow path switching valve 223 into a connection state in which water can be supplied from second supply flow path 233 to soft water tank bypass flow path 241. That is, soft water tank regeneration circulation flow path 236 and neutralization tank regeneration circulation flow path 237 are formed, and opening and closing valve 216 and opening and closing valve 218 are opened, so that the acidic electrolytic water and the alkaline electrolytic water can be drained from drainage port 211 and capture unit drainage port 212.

By performing the drainage process, when the water softening process is resumed, it is possible to prevent the acidic electrolytic water and the alkaline electrolytic water remaining in soft water tank regeneration circulation flow path 236 and neutralization tank regeneration circulation flow path 237 from mixing with the raw water flowing in from inlet port 202 and being discharged from water intake port 205.

Then, in water softening apparatus 201, when the drainage process is ended, controller 213 closes opening and closing valve 214 and opening and closing valves 216 to 219 and opens opening and closing valve 215. Controller 213 brings flow path switching valve 220 into a connection state in which water can be supplied from flow path 224 to flow path 225, brings flow path switching valve 221 into a connection state in which water can be supplied from flow path 225 to flow path 226, brings flow path switching valve 222 into a connection state in which water can be supplied from flow path 226 to flow path 227, brings flow path switching valve 223 into a connection state in which water can be supplied from flow path 227 to flow path 228, and shifts to the water softening process. Note that the drainage process may be ended when a certain period of time has elapsed from the start of the drainage process.

As described above, in water softening apparatus 1, the water softening process, the regeneration process, and the drainage process are repeatedly executed.

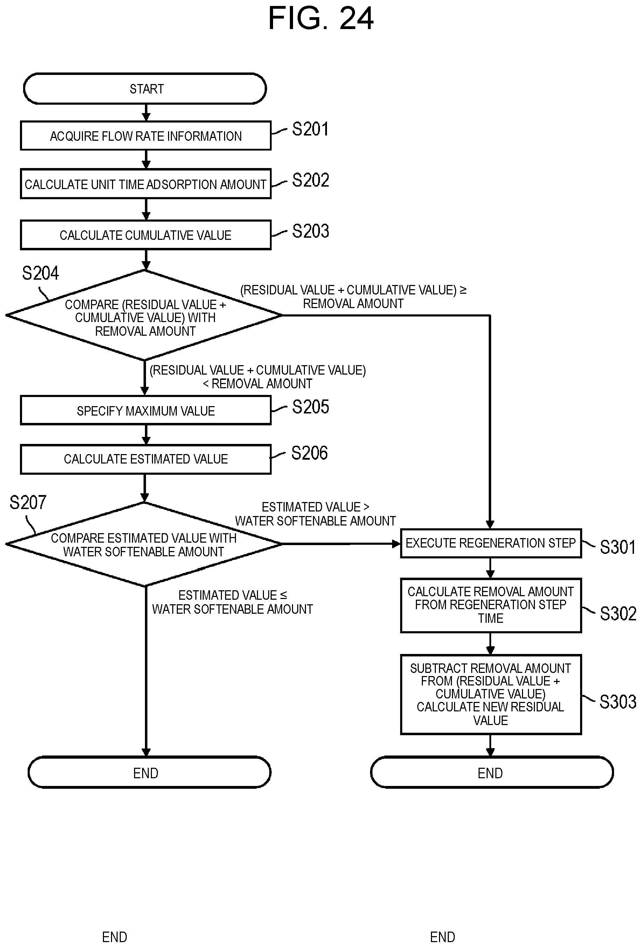

Next, control executed by controller 213 in the above configuration will be described with reference to Fig. 24. Fig. 24 is a flowchart illustrating control of water softening apparatus 201 according to the third exemplary embodiment. Herein, in the flowchart, numbers with S as an initial letter are assigned. For example, S201 or the like indicates a treatment process. However, the magnitude of the numerical value indicating the treatment process is not related to the treatment order.

### <14. Details of control by controller>

Hereinafter, control executed by controller 213 at the end of the water softening process in water softening apparatus 201 will be described.

First, at the end of the water softening process, flow rate measurement unit 251 specifies the flow rate of the soft water taken out from water intake port 205 (S201).

Adsorption amount calculation unit 253 calculates the unit time adsorption amount based on the flow rate of the soft water specified by flow rate measurement unit 251 and the information on the raw water hardness stored in hardness storage unit 252 (S202).

Cumulative value calculation unit 256 specifies a cumulative value that is the adsorption amount of cations accumulated after the previous regeneration process based on the information on the unit time adsorption amount after the previous regeneration process (S203).

Process management unit 260 calculates the sum of the residual value acquired from residual value calculation unit 255 and stored and the cumulative value calculated by cumulative value calculation unit 256, and compares the calculated sum with the removal amount acquired from removal amount calculation unit 254 and stored (S204).

In a case where the sum of the residual value and the cumulative value is less than the removal amount, controller 213 specifies the maximum value (from S204 to S205).

On the other hand, in a case where the sum of the residual value and the cumulative value is more than or equal to the removal amount, controller 213 executes the regeneration process (from S204 to S301).

Hereinafter, first, a case where the sum of the residual value and the cumulative value is less than the removal amount (from S204 to S205) will be described.

Maximum value specification unit 257 specifies the largest unit time adsorption amount as the maximum value based on the information on the unit time adsorption amount after the previous regeneration process (S205).

Estimated value calculation unit 258 calculates, as an estimated value, a sum of the residual value acquired from residual value calculation unit 255 and stored, the cumulative value calculated by cumulative value calculation unit 256, and the maximum value specified by maximum value specification unit 257 (S206).

Comparison unit 259 compares the estimated value calculated by estimated value calculation unit 258 with the water softenable amount (S207).

In a case where the estimated value is less than or equal to the water softenable amount, controller 213 determines that the execution of the regeneration process is unnecessary, and ends the control executed at the end of the current water softening process. Then, water softening apparatus 201 is controlled so that the next water softening process can be started.

On the other hand, in a case where the estimated value is larger than the water softenable amount, controller 213 executes the regeneration process (S207-S301).

Next, a case where the regeneration process is executed (S204→S301, and S207→S301) will be described.

In a case where the sum of the residual value and the cumulative value is more than or equal to the removal amount or in a case where the estimated value is larger than the water softenable amount, controller 213 executes the regeneration process (S301).

Removal amount calculation unit 254 calculates the amount of cations removed from weakly acidic cation exchange resin 230 as the removal amount based on the operation time of electrolytic tank 207 (S302).

Residual value calculation unit 255 subtracts the removal amount from the sum of the residual value and the cumulative value acquired from residual value calculation unit 255 and stored in the previous regeneration process, and calculates a residual value after the execution of the current regeneration process as a new residual value (S303). Note that, at the time of the first execution of S303, the stored residual value is calculated as "0". Then, controller 213 controls water softening apparatus 201 so that the next water softening process can be started.

As described above, controller 213 of water softening apparatus 201 determines whether or not to perform the regeneration process based on the status of use of soft water. By comparing the residual value, the cumulative value, and the removal amount and determining the execution of the regeneration process, the number of times of execution of the regeneration process can be minimized. Furthermore, by comparing the estimated value with the water softenable amount and determining the execution of the regeneration process, the regeneration process can be executed in order to prevent a decrease in water softening performance due to the amount exceeding the water softenable amount in a case where it is expected to take out soft water exceeding the water softenable amount while minimizing the number of times of execution of the regeneration process. Therefore, water softening performance can be maintained.

Next, effects obtained by minimizing the execution of the regeneration process will be described.

When the water softening process is performed by passing hard raw water through weakly acidic cation exchange resin 230 and weakly basic anion exchange resin 231, bicarbonate ions (HCO₃⁻) are adsorbed to weakly basic anion exchange resin 231 in addition to chloride ions and sulfate ions. The adsorbed bicarbonate ions are released into alkaline electrolytic water when weakly basic anion exchange resin 231 is regenerated. The bicarbonate ions are also diffused into the acidic electrolytic water through the diaphragm in electrolytic tank 207. That is, in the regeneration process, the bicarbonate ions are contained in the alkaline electrolytic water and the acidic electrolytic water.

Bicarbonate ions have a buffering action, and react with hydrogen ions (H⁺) to form carbonic acid (H₂CO₃), or react with hydroxide ions (OH⁻) to form carbonate ions (CO₃²⁻). Therefore, when bicarbonate ions are present in electrolytic water, hydrogen ions and hydroxide ions in each electrolytic regenerated water are consumed, and the acidity and alkalinity of each electrolytic water are weakened, so that the efficiency of the regeneration process is reduced. Furthermore, carbonate ions generated by the reaction with hydroxide ions in the alkaline electrolytic water combine with calcium ions released from the weakly acidic cation exchange resin 230 and diffused into the acidic electrolytic water to precipitate calcium carbonate. That is, as the adsorption amount or the release amount of bicarbonate ions in the regeneration process increases, the precipitation of calcium carbonate increases, which causes a problem of promoting clogging in capture unit 208 or causing insufficient washing of capture unit 208 due to backwashing.

Therefore, it is required to relatively suppress the release amount of bicarbonate ions in the regeneration process.

Since bicarbonate ions have a lower exchange order with respect to weakly basic anion exchange resin 231 than chloride ions and sulfate ions, bicarbonate ions are hardly adsorbed to weakly basic anion exchange resin 231 during the water softening process, and are easily released from weakly basic anion exchange resin 231 during the regeneration process. Due to the property of bicarbonate ions to be easily released during regeneration, most of the adsorbed bicarbonate ions are released in the early stage of the regeneration process in the regeneration process of weakly basic anion exchange resin 231, and in a case where the bicarbonate ions are regenerated for a long time, the release amount decreases in the middle to late stage of regeneration as compared with the early stage of regeneration. Even in a case where other anions are adsorbed to weakly basic anion exchange resin 231 after the release of bicarbonate ions (in a case where the regeneration of weakly basic anion exchange resin 231 has not been completed), bicarbonate ions are adsorbed to weakly basic anion exchange resin 231 in the next water softening process in the same manner as in a case where other anions are not adsorbed (in a case where the regeneration of weakly basic anion exchange resin 231 has been completed). Therefore, in a case where raw water of the same amount of water is softened, in a case where the frequency of switching between the softening process and the regeneration process is high, the adsorption amount and release amount of bicarbonate ions are larger than those in a case where the switching frequency is low. Therefore, the adsorption amount and the release amount of bicarbonate ions are reduced by suppressing the number of times of switching between the water softening process and the regeneration process as much as possible within a range in which the softening of the raw water and the regeneration of the ion exchange resin can be normally performed. Therefore, it is possible to suppress the influence of the precipitation of calcium carbonate described above on capture unit 208 and the decrease in the regeneration efficiency. In the present exemplary embodiment, controller 213 determines the execution timing of the regeneration process to suppress the number of times of execution of the regeneration process. Note that the "case where other anions are not adsorbed" described above includes not only a case where other anions are not adsorbed at all but also a case where several% of other anions are adsorbed, and includes a case where it can be considered that the regeneration of weakly basic anion exchange resin 231 is completed.

As described above, according to water softening apparatus 201 of the present exemplary embodiment, the following effects can be obtained.
(1) Water softening apparatus 201 includes soft water tank 203, neutralization tank 204, electrolytic tank 207, controller 213, flow rate measurement unit 251, hardness storage unit 252, adsorption amount calculation unit 253, removal amount calculation unit 254, and process management unit 260. Soft water tank 203 softens the raw water containing the hardness component with weakly acidic cation exchange resin 230. Neutralization tank 204 neutralizes the pH of soft water having passed through soft water tank 203 with weakly basic anion exchange resin 231. Electrolytic tank 207 generates acidic electrolytic water for regenerating weakly acidic cation exchange resin 230 in soft water tank 203 and alkaline electrolytic water for regenerating weakly basic anion exchange resin 231 in neutralization tank 204. Flow rate measurement unit 251 measures an amount of soft water taken out from water intake port 205. Hardness storage unit 252 stores the hardness component concentration of the raw water flowing into water softening apparatus 201. Adsorption amount calculation unit 253 calculates the amount of cations adsorbed by weakly acidic cation exchange resin 230 in the water softening process as the adsorption amount. Removal amount calculation unit 254 calculates, as a removal amount, a cation removal amount that can be removed from weakly acidic cation exchange resin 230 based on the operation time of electrolytic tank 207. Process management unit 260 determines whether or not to perform the regeneration process for each unit period in which the water softening process ends.

According to such a configuration, the amount of soft water taken out is measured by flow rate measurement unit 251, and the hardness component concentration of the raw water flowing into water softening apparatus 201 is acquired from hardness storage unit 252, whereby the amount of cations adsorbed by weakly acidic cation exchange resin 230 can be calculated as the adsorption amount by adsorption amount calculation unit 253. Furthermore, removal amount calculation unit 254 can calculate, as the removal amount, a cation removal amount that can be removed from weakly acidic cation exchange resin 230 based on the operation time of electrolytic tank 207. Then, whether or not to execute the regeneration process can be determined by comparing the calculated adsorption amount with the removal amount.

Therefore, the regeneration process can be performed at a timing when regeneration of the ion exchange resin is necessary, and the number of regeneration processes can be suppressed.

(2) Water softening apparatus 201 calculates, as the adsorption amount, the amount of cations adsorbed by weakly acidic cation exchange resin 230 in the water softening process in adsorption amount calculation unit 253, and removal amount calculation unit 254 calculates, as the removal amount, the amount of cations that can be removed from weakly acidic cation exchange resin 230 based on the operating time of electrolytic tank 207. In a case where the adsorption amount reaches the removal amount, the water softening apparatus performs the regeneration process, and in a case where the adsorption amount does not reach the removal amount, the water softening apparatus does not have to perform the regeneration process.

According to such a configuration, switching between the water softening process and the regeneration process can be further reduced as much as possible within a range in which the water softening process and the regeneration process are normally performed. Therefore, the adsorption amount and the release amount of bicarbonate ions are reduced. Therefore, it is possible to reduce the influence of clogging of capture unit 208 due to precipitation of a large amount of calcium carbonate and a decrease in regeneration efficiency due to the buffering action of bicarbonate ions.

(3) Water softening apparatus 201 may include residual value calculation unit 255, cumulative value calculation unit 256, maximum value specification unit 257, estimated value calculation unit 258, and comparison unit 259. Residual value calculation unit 255 may calculate the amount of cations adsorbed on weakly acidic cation exchange resin 230 at the end of the regeneration process as a residual value. Cumulative value calculation unit 256 may calculate a cumulative value of the adsorption amount from the end of the previous regeneration process. Maximum value specification unit 257 may select the largest one of the unit time adsorption amounts from the end of the previous regeneration process as the maximum value. Comparison unit 259 may compare the amount of cations (water softenable amount) that can be adsorbed to weakly acidic cation exchange resin 230 with the estimated value calculated by estimated value calculation unit 258 to determine whether or not the estimated value exceeds the water softenable amount.

Moreover, according to such a configuration, by determining the execution of the regeneration process by comparing the estimated value with the water softenable amount, the regeneration process can be executed in order to prevent the water softening performance from deteriorating due to the amount exceeding the water softenable amount of in a case where the removal of soft water exceeding the water softenable amount is expected in the next water softening process while minimizing the execution of the regeneration process. Therefore, water softening performance can be maintained.

From above, the present disclosure has been described based on the exemplary embodiments. It is understood by those skilled in the art that these exemplary embodiments are merely examples, that the components or the treatment processes of those can be combined as various modifications, and that such modifications also fall within the scope of the present disclosure.

Furthermore, a combination of each component or each treatment process of the present exemplary embodiment and each component or each treatment process of other exemplary embodiments is also possible, and it is understood by those skilled in the art that it is within the scope of the present disclosure.

Note that, in the present exemplary embodiment, adsorption amount calculation unit 253 calculates the amount of cations adsorbed by weakly acidic cation exchange resin 230 in the water softening process as the adsorption amount, but the present disclosure is not limited thereto. The adsorption amount may be, for example, the amount of anions adsorbed to weakly basic anion exchange resin 231, or may be the sum of the amount of cations adsorbed to weakly acidic cation exchange resin 230 and the amount of anions adsorbed to weakly basic anion exchange resin 231. Even in this case, the execution of the regeneration process based on the adsorption amount can be controlled.

Note that, in a case where the adsorption amount is the amount of anions adsorbed to weakly basic anion exchange resin 231, the unit-time adsorption amount, the cumulative value, the residual value, the removal amount, the maximum value, the estimated value, and the water softenable amount are also calculated using the amount of anions. In a case where the adsorption amount is the sum of the amount of cations adsorbed to weakly acidic cation exchange resin 230 and the amount of anions adsorbed to weakly basic anion exchange resin 231, the unit-time adsorption amount, the cumulative value, the residual value, the removal amount, the maximum value, the estimated value, and the water softenable amount are also calculated using the sum of the amount of cations and the amount of anions.

### INDUSTRIAL APPLICABILITY

The water softening apparatus according to the present disclosure can be applied to a point-of-use (POU) water purification apparatus, a point of entry (POE) water purification apparatus, or the like.

### REFERENCE MARKS IN THE DRAWINGS

- 1: water softening apparatus
- 2: inlet port
- 3: first soft water tank
- 4: first neutralization tank
- 5: second soft water tank
- 6: second neutralization tank
- 7: water intake port
- 8: regeneration device
- 9: electrolytic tank
- 10: capture unit
- 11: first water pump
- 12: second water pump
- 13: drainage port
- 14: capture unit drainage port
- 15: controller
- 18, 19, 20, 21, 22, 23: opening and closing valve
- 24, 25, 26, 27: flow path switching valve
- 28, 29, 30, 31, 32: flow path
- 33: weakly acidic cation exchange resin
- 34: weakly basic anion exchange resin
- 35: first supply flow path
- 36: second supply flow path
- 37: first collection flow path
- 38: second collection flow path
- 39: soft water tank regeneration circulation flow path
- 40: neutralization tank regeneration circulation flow path
- 41: electrodes
- 41a: electrode
- 41b: electrode
- 42: neutralization tank bypass flow path
- 43: water softening flow path
- 44: soft water tank bypass flow path
- 45: regeneration flow path washing flow path
- 46: first drainage flow path
- 47: second drainage flow path
- 49: electrolytic tank washing flow path
- 50: third drainage flow path
- 51: capture unit washing flow path
- 52: fourth drainage flow path
- 53: bypass flow path
- 54: drainage flow path
- 55: adsorption amount specification unit
- 56: first ion concentration measurement unit
- 57: second ion concentration measurement unit
- 58: storage unit
- 59: calculation unit
- 60: raw water hardness measurement unit
- 61: soft water hardness measurement unit
- 62: flow rate measurement unit
- 101: water softening apparatus
- 102: inlet port
- 103: first soft water tank
- 104: first neutralization tank
- 105: second soft water tank
- 106: second neutralization tank
- 107: water intake port
- 108: regeneration device
- 109: electrolytic tank
- 110: capture unit
- 111: first water pump
- 112: second water pump
- 113: drainage port
- 114: capture unit drainage port
- 115: controller
- 118, 119, 120, 121, 122, 123: opening and closing valve
- 124, 125, 126, 127: flow path switching valve
- 128, 129, 130, 131, 132: flow path
- 133: weakly acidic cation exchange resin
- 134: weakly basic anion exchange resin
- 135: first supply flow path
- 136: second supply flow path
- 137: first collection flow path
- 138: second collection flow path
- 139: soft water tank regeneration circulation flow path
- 140: neutralization tank regeneration circulation flow path
- 141: electrodes
- 141a: electrode
- 141b: electrode
- 142: neutralization tank bypass flow path
- 143: water softening flow path
- 144: soft water tank bypass flow path
- 145: regeneration flow path washing flow path
- 146: first drainage flow path
- 147: second drainage flow path
- 149: electrolytic tank washing flow path
- 150: third drainage flow path
- 151: capture unit washing flow path
- 152: fourth drainage flow path
- 153: bypass flow path
- 154: drainage flow path
- 155: adsorption amount specification unit
- 156: designation unit
- 157: recording unit
- 158: reference time determination unit
- 159: comparison unit
- 160: raw water hardness measurement unit
- 161: soft water hardness measurement unit
- 162: flow rate measurement unit
- 163: main regeneration time calculation unit
- 164: residual adsorption amount specification unit
- 201: water softening apparatus
- 202: inlet port
- 203: soft water tank
- 203a: first soft water tank
- 203b: second soft water tank
- 204: neutralization tank
- 204a: first neutralization tank
- 204b: second neutralization tank
- 205: water intake port
- 206: regeneration device
- 207: electrolytic tank
- 208: capture unit
- 209: first water pump
- 210: second water pump
- 211: drainage port
- 212: capture unit drainage port
- 213: controller
- 214, 215, 216, 217, 218, 219: opening and closing valve
- 220, 221, 222, 223: flow path switching valve
- 224, 225, 226, 227, 228, 229: flow path
- 230: weakly acidic cation exchange resin
- 230a: first weakly acidic cation exchange resin
- 230b: second weakly acidic cation exchange resin
- 231: weakly basic anion exchange resin
- 231a: first weakly basic anion exchange resin
- 231b: second weakly basic anion exchange resin
- 232: first supply flow path
- 233: second supply flow path
- 234: first collection flow path
- 235: second collection flow path
- 236: soft water tank regeneration circulation flow path
- 237: neutralization tank regeneration circulation flow path
- 238: electrodes
- 238a: electrode
- 238b: electrode
- 239: neutralization tank bypass flow path
- 240: water softening flow path
- 241: soft water tank bypass flow path
- 242: bypass flow path
- 243: drainage flow path
- 251: flow rate measurement unit
- 252: hardness storage unit
- 253: adsorption amount calculation unit
- 253a: unit time adsorption amount calculation unit
- 254: removal amount calculation unit
- 255: residual value calculation unit
- 256: cumulative value calculation unit
- 257: maximum value specification unit
- 258: estimated value calculation unit
- 259: comparison unit
- 260: process management unit

## Claims

1. A water softening apparatus comprising:
a soft water tank that softens raw water containing a hardness component with a weakly acidic cation exchange resin to generate acidic soft water;
a neutralization tank that neutralizes a hydrogen ion concentration index (pH) of the acidic soft water passed through the soft water tank with a weakly basic anion exchange resin to generate neutralized soft water; and
a controller that controls a regeneration process that is a process of regenerating at least one of the weakly acidic cation exchange resin and the weakly basic anion exchange resin,
wherein the controller includes an adsorption amount specification unit that specifies a hardness component adsorption amount in the soft water tank from hardness of the raw water, a water amount of the raw water passed through the soft water tank, and hardness of water after passing through the soft water tank, and
during the regeneration process, based on the hardness component adsorption amount specified by the adsorption amount specification unit, the controller controls the regeneration process to be continued in a case where the hardness component adsorption amount is more than or equal to a reference value and to be ended in a case where the hardness component adsorption amount is less than the reference value.

2. The water softening apparatus according to Claim 1, further comprising an electrolytic tank that generates acidic electrolytic water to be used for regeneration of the weakly acidic cation exchange resin and alkaline electrolytic water to be used for regeneration of the weakly basic anion exchange resin,
wherein the reference value is a value when an exchange reaction efficiency between the hardness component adsorbed in the soft water tank and hydrogen ions in the acidic electrolytic water during the regeneration process is at least 70% or more.

3. The water softening apparatus according to Claim 2, further comprising:
a first ion concentration measurement unit that measures an ion concentration of the acidic electrolytic water flowing into the soft water tank during the regeneration process; and
a second ion concentration measurement unit that measures an ion concentration of the acidic electrolytic water that has flowed out of the soft water tank during the regeneration process,
wherein the controller
further includes:
a storage unit that stores first ion concentration information measured by the first ion concentration measurement unit and second ion concentration information measured by the second ion concentration measurement unit; and
a calculation unit that calculates a difference between the first ion concentration information and the second ion concentration information, and
calculates the exchange reaction efficiency based on a calculation result of the calculation unit.

4. The water softening apparatus according to Claim 3, wherein
the calculation unit calculates a differential ion concentration value that is a difference between the first ion concentration information and the second ion concentration information at a predetermined reference time, and
the controller
continues the regeneration process in a case where the exchange reaction efficiency calculated based on the differential ion concentration value is more than or equal to a second reference value, and
ends the regeneration process in a case where the exchange reaction efficiency calculated based on the differential ion concentration value is smaller than the second reference value.

5. The water softening apparatus according to any one of Claims 1 to 3, wherein
in a case of executing the regeneration process a plurality of times, the controller continues the regeneration process m times out of n times even in a case where the hardness component adsorption amount is less than the reference value, where n is an integer of 2 or more, m is an integer of 1 or more, and n > m.

6. The water softening apparatus according to Claim 1, further comprising an electrolytic tank that generates acidic electrolytic water to be used for regeneration of the weakly acidic cation exchange resin and alkaline electrolytic water to be used for regeneration of the weakly basic anion exchange resin,
wherein the controller
further includes a main regeneration time calculation unit that calculates, based on the hardness component adsorption amount, a main regeneration time required for the regeneration process necessary for removal of hardness components of the hardness component adsorption amount, and
determines a time taken for the regeneration process based on a comparison between a predetermined reference time and the main regeneration time.

7. The water softening apparatus according to Claim 6, wherein
the controller executes the regeneration process at least for the main regeneration time in a case where the hardness component adsorption amount is less than or equal to a third reference value that is an amount of the hardness components removable in the predetermined reference time.

8. The water softening apparatus according to Claim 6 or 7, wherein
in a case where the hardness component adsorption amount is larger than a third reference value that is an amount of the hardness component removable in the predetermined reference time, the controller ends the regeneration process in a case where the predetermined reference time is exceeded.

9. The water softening apparatus according to any one of Claims 6 to 8, wherein the controller
further includes:
a recording unit that records an execution time zone of a water softening process; and
a reference time determination unit that determines a time zone in which a frequency of execution of the water softening process is low as the predetermined reference time based on the execution time zone recorded by the recording unit, and
determines a time zone in which the regeneration process is performed based on the determined predetermined reference time.

10. The water softening apparatus according to any one of Claims 6 to 8, wherein the controller
further includes a designation unit that designates, as the predetermined reference time, a time set in advance as a time during which a water softening process is not executed, and
determines the designated predetermined reference time as a time zone in which the regeneration process is performed.

11. The water softening apparatus according to Claim 8, wherein
in a case of executing the regeneration process a plurality of times, the controller executes the regeneration process at least for the main regeneration time m times out of n times even in a case where the hardness component adsorption amount exceeds the third reference value, where n is an integer of 2 or more, m is an integer of 1 or more, and n > m.

12. The water softening apparatus according to Claim 8, further comprising a soft water hardness measurement unit that measures hardness of water after passing through the soft water tank,
wherein in a case where the hardness measured by the soft water hardness measurement unit at an end of the regeneration process is higher than a reference hardness value that is a target hardness after the regeneration treatment, the controller executes the regeneration process at least for the main regeneration time even in a case where the hardness component adsorption amount exceeds the reference value in a next regeneration process.

13. The water softening apparatus according to Claim 6, wherein
the adsorption amount specification unit
includes a residual adsorption amount specification unit that specifies a residual hardness component adsorption amount after a (k-1)th regeneration process based on the regeneration time of a (k-1)th time, where k is an integer of 2 or more and
specifies the hardness component adsorption amount from the hardness of the raw water, the water amount of the raw water passed through the soft water tank, the hardness of the water after passing through the soft water tank, and further the residual hardness component adsorption amount specified by the residual hardness component specification unit.

14. The water softening apparatus according to Claim 1, further comprising an electrolytic tank that generates acidic electrolytic water and alkaline electrolytic water,
wherein the controller further includes:
a hardness storage unit that stores a hardness component concentration of the raw water containing the hardness component;
an adsorption amount calculation unit that calculates an ion adsorption amount to at least one of the soft water tank and the neutralization tank from the hardness component concentration of the raw water, the water amount of the raw water passed through the soft water tank, and the hardness of the water after passing through the soft water tank;
a removal amount calculation unit that calculates an ion removal amount that can be removed from at least one of the soft water tank and the neutralization tank based on an amount of hydrogen ions in the acidic electrolytic water and an amount of hydroxide ions in the alkaline electrolytic water obtained by operating the electrolytic tank for a predetermined time; and
a process management unit that performs the regeneration process based on a comparison between the ion adsorption amount and the ion removal amount.

15. The water softening apparatus according to Claim 14, wherein
the process management unit performs the regeneration process after the ion adsorption amount reaches the ion removal amount.

16. The water softening apparatus according to Claim 14 or 15, wherein
the process management unit does not perform the regeneration process in a case where the ion adsorption amount is less than the ion removal amount.

17. The water softening apparatus according to Claim 14, wherein
the controller further includes:
a residual value calculation unit that calculates a residual value that is an amount of an ion component adsorbed in at least one of the soft water tank and the neutralization tank at an end of the regeneration process last time;
a unit time adsorption amount calculation unit that calculates an adsorption amount of the ion component per unit time as a unit time adsorption amount;
a cumulative value calculation unit that calculates a cumulative value of the ion adsorption amount in an unregeneration period that is a period from the end of the regeneration process last time; and
a maximum value specification unit that specifies a maximum value of the unit time adsorption amount in the unregeneration period,
the process management unit performs the regeneration process based on a comparison among the residual value, the cumulative value, the maximum value, and the ion removal amount.

18. The water softening apparatus according to Claim 17, wherein
the process management unit includes:
an estimated value calculation unit that calculates an estimated value that is a sum of the residual value, the cumulative value, and the maximum value; and
a comparison unit that compares a water softenable amount that is an amount of the ion component that can be adsorbed to the soft water tank and the neutralization tank with the estimated value, and
in a case where the estimated value is larger than the water softenable amount, the process management unit performs the regeneration process even in a case where the ion adsorption amount does not reach the ion removal amount.

19. The water softening apparatus according to Claim 18, wherein
in a case where the estimated value is less than or equal to the water softenable amount, the process management unit performs the regeneration process after the ion adsorption amount reaches the ion removal amount.
